# EUROPEAN PATENT APPLICATION

(11) **EP 4 827 181 A1**
(43) Date of publication of application: **21.10.2026**
(21) Application number: 24905450.3
(22) Date of filing: 12.06.2024
(51) Int. Cl.: H04W 52/02

(54) **DOWNLINK TRANSMISSION METHODS, COMMUNICATION DEVICE AND STORAGE MEDIUM**

(30) Priority: 21.12.2023 WO PCT/CN2023/140786
(71) Applicant: Beijing Xiaomi Mobile Software Co., Ltd., Beijing 100085 (CN)
(72) Inventor: WU, Shijuan, Beijing 100085 (CN)
(74) Representative: Stöckeler, Ferdinand
(86) International application number: PCT/CN2024/098804
(87) International publication number: WO 2025/129947

(57) **Abstract**

Downlink transmission methods, a communication device, a communication system and a storage medium. A downlink transmission method comprises: determining the type of a first cell; and on the basis of the type of the first cell, determining a mode for receiving a first transmission, wherein the first transmission is downlink transmission.

## Description

This application claims priority to PCT/CN2023/140786 filed on December 21, 2023.

### TECHNICAL FIELD

The disclosure relates to a field of communication technologies, and in particular, to a downlink transmission method, a communication device, and a storage medium.

### BACKGROUND

Network Energy Saving (NES) technology is proposed to reduce energy consumption of a base station and a network side. NES technology limits the transmission and reception of network devices in the time domain, increasing the sleep time of the network devices, thereby achieving energy saving purposes.

### SUMMARY

Embodiments of the disclosure provide downlink transmission methods, communication devices, and a storage medium.

According to a first aspect of embodiments of the disclosure, a downlink transmission method is provided. The method is performed by a terminal. The method includes: determining a type of a first cell, and determining, based on the type of the first cell, a manner of receiving a first transmission based on the first cell, in which the first transmission is a downlink transmission.

According to a second aspect of embodiments of the disclosure, a downlink transmission method is provided. The method is performed by a network device of a first cell. The method includes: determining, based on a type of the first cell, a manner of sending, based on the first cell, a first transmission.

According to a third aspect of embodiments of the disclosure, a terminal is provided. The terminal includes: a processing module configured to determine a type of a first cell, and determine, based on the type of the first cell, a manner of receiving, based on the first cell, a first transmission.

According to a fourth aspect of embodiments of the disclosure, a network device is provided. The network device includes: a processing module configured to determine, based on a type of a first cell, a manner of sending, based on the first cell, a first transmission.

According to a fifth aspect of embodiments of the disclosure, a communication device is provided. The communication device includes: one or more processors. The one or more processors are configured to invoke instructions to cause the communication device to perform the downlink transmission method of any technical solution of the first aspect to the second aspect.

According to a sixth aspect of embodiments of the disclosure, a storage medium is provided. The storage medium has instructions stored thereon. When the instructions are executed on a communication device, the communication device is caused to perform the downlink transmission method of any aspect of the first aspect to the second aspect.

The technical solutions according to embodiments of the disclosure enable a terminal to determine the manner of receiving the first transmission from a network side based on the type of the first cell, to improve a success rate of receiving the first transmission by the terminal.

It is understandable that both the foregoing general description and the following detailed description are illustrative and explanatory only and are not restrictive of embodiments of the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of embodiments of the disclosure.
FIG. 1A is a schematic structural diagram illustrating a communication system according to an embodiment.
FIG. 1B is a schematic diagram illustrating a first transmission according to an embodiment.
FIG. 1C is a schematic diagram illustrating a cell Discontinuous Transmission (DRX) according to an embodiment.
FIG. 1D is a schematic diagram illustrating a time-domain configuration of a synchronization signal/physical broadcast channel (PBCH) block (SSB) according to an embodiment.
FIG. 1E is a schematic diagram illustrating a time-domain configuration of a first transmission according to an embodiment.
FIG. 2 is a flowchart illustrating a downlink transmission method according to an embodiment.
FIG. 3 is a flowchart illustrating a downlink transmission method according to an embodiment.
FIG. 4 is a flowchart illustrating a downlink transmission method according to an embodiment.
FIG. 5A is a flowchart illustrating a downlink transmission method according to an embodiment.
FIG. 5B is a flowchart illustrating a downlink transmission method according to an embodiment.
FIG. 5C is a flowchart illustrating a downlink transmission method according to an embodiment.
FIG. 5D is a flowchart illustrating a downlink transmission method according to an embodiment.
FIG. 5E is a flowchart illustrating a downlink transmission method according to an embodiment.
FIG. 5F is a flowchart illustrating a downlink transmission method according to an embodiment.
FIG. 6A is a schematic structural diagram illustrating a terminal according to an embodiment.
FIG. 6B is a schematic structural diagram illustrating a network device according to an embodiment.
FIG. 7A is a schematic structural diagram illustrating a communication device according to an embodiment.
FIG. 7B is a schematic structural diagram illustrating a chip according to an embodiment.

### DETAILED DESCRIPTION

Embodiments of the disclosure provide downlink transmission methods, communication devices, a communication system, and a storage medium.

A first aspect provides a downlink transmission method, performed by a terminal. The method includes: determining a type of a first cell; determining, based on the type of the first cell, a manner of receiving, based on the first cell, a first transmission, in which the first transmission is a downlink transmission.

Based on the above solution, determining, based on the type of the first cell, a manner adapted to the type of the first cell to receive the first transmission from the first cell may improve the success rate of receiving the first transmission by the terminal in the first cell.

In some embodiments of the first aspect, the first cell is a first-type cell or a second-type cell.

The first-type cell is a cell from which the first transmission is sent based on a semi-static configuration and/or a periodic configuration.

The second type-cell is a cell from which the first transmission is sent based on an on-demand mode, or the second-type cell is a cell from which the first transmission is not sent, or the second-type cell is a cell for which the first transmission is sent from another cell on behalf of the second-type cell.

Based on the above solution, the difference between the first-type cell and the second-type cell is clearly defined.

In some embodiments of the first aspect, the first cell is the first-type cell, in which the first transmission is sent from the first cell based on a semi-static configuration and/or a periodic configuration and/or indication signaling.

In some embodiments of the first aspect, the first cell is the first-type cell, in which a terminal in the first cell receives the first transmission based on the semi-static configuration and/or the periodic configuration and/or the indication signaling.

In some embodiments of the first aspect, the first cell is the second-type cell, in which the first transmission is sent from the first cell based on an on-demand mode.

In some embodiments of the first aspect, sending the first transmission based on an on-demand mode from the second-type cell includes at least one of: a base station autonomously determining whether to send the first transmission based on a cell communication status, or a base station determining whether to send the first transmission based on a second transmission sent by a terminal.

In some embodiments of the first aspect, the first cell is the second-type cell, in which a terminal in the first cell cannot receive, based on the semi-static configuration and/or the periodic configuration and/or the indication signaling, the first transmission with a time-frequency-domain resource determined by the semi-static configuration and/or the periodic configuration and/or the indication signaling within a first time range, and can receive the first transmission with a time-frequency-domain resource determined based on a configuration and/or indication signaling within a second time range.

In some embodiments of the first aspect, the first cell is the second-type cell, in which no first transmission is sent from the first cell.

In some embodiments of the first aspect, in a case where a terminal in the first cell cannot receive the first transmission, the cell is the second-type cell.

In some embodiments of the first aspect, sending the first transmission from the second-type cell based on an on-demand mode includes at least one of: the second-type cell being a cell for determining whether to send the first transmission based on its own demand; or the second-type cell being a cell from which the first transmission is sent based on a trigger of a second transmission from the terminal, in which the second transmission is an uplink transmission sent by the terminal when the terminal has a demand to acquire the first transmission.

In some embodiments of the first aspect, determining the type of the first cell includes at least one of: determining the type of the first cell based on a predefined manner; determining the type of the first cell based on configuration information of the second transmission, in which the second transmission is used to trigger sending of the first transmission; determining the type of the first cell based on whether configuration information of a second transmission directed to the first cell is received, in which the second transmission is used to trigger sending of the first transmission; determining the type of the first cell based on a cell configuration of the first cell; determining the type of the first cell based on a master information block (MIB) of the first cell; determining the type of the first cell based on physical broadcast channel (PBCH) information of the first cell; determining the type of the first cell based on an MIB and PBCH information of the first cell; determining the type of the first cell based on a check method of PBCH information of the first cell; determining the type of the first cell based on a reception status on receiving the first transmission of the first cell; determining the type of the first cell based on a reception status on receiving a scheduling command, in which scheduling command is used to schedule the first transmission of the first cell; determining the type of the first cell based on a reception status on whether the first transmission of the first cell is received from a second cell; or determining the type of the first cell based on first information and/or second information, in which the first information is sent from the first cell or a second cell, the second information is sent from the first cell or the second cell.

Based on the above solution, the terminal may determine the type of the first cell based on the MIB, the PBCH information, the scheduling command, and/or the transmission status of the first transmission itself sent by the network side, which is simple to implement and/or flexible.

In some embodiments of the first aspect, determining the type of the first cell based on the configuration information of the second transmission includes at least one of: determining that the first cell is the first-type cell, in which the configuration information of the second transmission does not correspond to the first cell; or determining that the first cell is the first-type cell, in which the configuration information of the second transmission corresponds to the first cell; and/or determining the type of the first cell based on whether the configuration information of the second transmission directed to the first cell is received includes at least one of: determining that the first cell is the second-type cell from which the first transmission is sent based on the trigger, in which the configuration information of the second transmission is received.

Based on the above solution, the type of the first cell is implicitly indicated through the configuration of the second transmission, saving network side overhead.

In some embodiments of the first aspect, the configuration information of the second transmission is carried in a cell configuration of the first cell, or the configuration information of the second transmission is carried in a cell configuration of a third cell; and/or the second transmission includes a wake-up signal (WUS).

In some embodiments of the first aspect, the third cell is a primary cell of the terminal and the first cell is a secondary cell of the terminal; or the third cell is a secondary cell of the terminal and the first cell is a primary cell of the terminal.

In some embodiments of the first aspect, determining the type of the first cell based on the cell configuration of the first cell includes at least one of: determining that the first cell is the first-type cell based on a presence of a first indication field in the cell configuration, in which the cell configuration of the first cell includes the first indication field; determining that the first cell is the second-type cell based on am absence of a first indication field in the cell configuration, in which the cell configuration of the first cell does not include the first indication field; or determining that the first cell is the first-type cell or the second-type cell based on an indication content of a second indication field included in the cell configuration of the first cell.

In some embodiments of the first aspect, the cell configuration includes: a secondary cell configuration (ScellConfig).

In some embodiments of the first aspect, determining the type of the first cell based on the MIB of the first cell includes at least one of: determining the type of the first cell based on a value of a spare bit in the MIB of the first cell; determining the type of the first cell based on a value of a synchronization signal/physical broadcast channel (PBCH) block (SSB) - subcarrier offset (ssb-SubcarrierOffset) indication bit in the MIB of the first cell; determining the type of the first cell based on a value of system frame number (SFN) indication bit(s) in the MIB of the first cell; determining the type of the first cell based on a value of a demodulation reference signal - type A-position (DRMS-typeA-Position) indication bit(s) in the MIB of the first cell; determining the type of the first cell based on a value of a cell barred (cellBarred) indication bit(s) in the MIB of the first cell; determining the type of the first cell based on a value of common subcarrier spacing (subcarrierSpacingCommon) indication bit(s) in the MIB of the first cell; or determining the type of the first cell based on a value of intra-frequency reselection (intraFreqReselections) indication bit(s) in the MIB of the first cell.

In some embodiments of the first aspect, the ssb-SubcarrierOffset indication bit in the MIB is a last bit of ssb-SubcarrierOffset indication bits in the MIB.

In some embodiments of the first aspect, determining the type of the first cell based on the value of the ssb-SubcarrierOffset indication bit in the MIB of the first cell includes: determining that the first cell is the first-type cell, in which the value of the ssb-SubcarrierOffset indication bit in the MIB of the first cell is within a first set; or determining that the first cell is the second-type cell, in which the value of the ssb-SubcarrierOffset indication bit in the MIB of the first cell is within a second set.

In some embodiments of the first aspect, determining the type of the first cell based on the PBCH information of the first cell includes: determining the type of the first cell based on a reserved bit in the PBCH information.

In some embodiments of the first aspect, the reserved bit in the PBCH information includes: the reserved bit being a first bit, in which *L̅ₘₐₓ* indicated by the PBCH information is a first value; or the reserved bit being a first bit and/or a second bit, in which *L̅ₘₐₓ* indicated by the PBCH information is a second value; in which *L̅ₘₐₓ* equals a maximum number of candidate synchronization signal/physical broadcast channel (PBCH) blocks (SSBs) within a half-frame.

In some embodiments of the first aspect, determining the type of the first cell based on the MIB and the PBCH information of the first cell includes: determining the type of the first cell based on a value of a subcarrier offset (Kssb) jointly indicated by the MIB and the PBCH.

In some embodiments of the first aspect, determining that the first cell is the second-type cell based on the value of the subcarrier offset (Kssb) jointly indicated by the MIB and the PBCH includes at least one of: determining that the first cell is the first-type cell, in which the value of Kssb jointly indicated by the MIB and the PBCH is within a third set; or determining that the first cell is the second-type cell, in which the value of Kssb jointly indicated by the MIB and the PBCH is within a fourth set,.

In some embodiments of the first aspect, determining the type of the first cell based on the check method of the PBCH information of the first cell includes at least one of: determining that the first cell is the first-type cell, in which the PBCH information of the first cell is successfully checked using a first check algorithm; or determining that the first cell is the second-type cell, in which the PBCH information of the first cell is successfully checked using a second check algorithm.

Based on the above solution, the terminal indirectly determines the type of the first cell by directly using the check method of the PBCH information, without requiring additional signaling from the network side to indicate the type of the first cell, to save signaling overhead.

In some embodiments of the first aspect, determining the type of the first cell based on the reception status on receiving the first transmission by the terminal in the first cell includes: determining that the first cell is the second-type cell, in which the terminal fails to receive the first transmission for M times at reception occasions of the first transmission, and M is a positive integer.

In some embodiments of the first aspect, a value of M is predefined or configured by network signaling.

In some embodiments of the first aspect, determining the type of the first cell based on the reception status on receiving the scheduling command for the first transmission by the terminal in the first cell includes at least one of: determining that the first cell is the second-type cell, in which the terminal fails to receive the scheduling command for N times at reception occasions of the scheduling command for the first transmission, and N is a positive integer; or determining that the first cell is the second-type cell, in which the scheduling command received by the terminal at reception occasions of the scheduling command for the first transmission fails to schedule the first transmission for X times, and X is a positive integer.

Based on the above solution, the terminal indirectly determines the type of the first cell by directly using the reception status and/or the scheduling content of the scheduling command that is able to schedule the first transmission, without requiring additional signaling from the network side to indicate the type of the first cell, to save signaling overhead.

In some embodiments of the first aspect, determining the type of the first cell based on the reception status on whether the first transmission of the first cell is received from a second cell includes at least one of: determining that the first cell is the second-type cell, in which the terminal does not receive the first transmission of the first cell from the second cell; or determining that the first cell is the second-type cell, in which the terminal receives the first transmission of the first cell from the second cell.

In some embodiments of the first aspect, determining the type of the first cell based on the first information and/or the second information includes at least one of: determining that the first cell is the second-type cell, in which the first information indicates that the first cell is the second-type cell and the second information indicates that a value of a subcarrier offset (Kssb) of the first cell satisfies a first condition; or determining that the first cell is the first-type cell, in which the first information indicates that the first cell is not the second-type cell,.

In the embodiments of the disclosure, combining the first information and/or the second information may further determine which specific sub-type of the second-type cell the first cell belongs to, which is simple to implement.

In some embodiments of the first aspect, it is determined that a current case is an error case, in which the first information indicates that the first cell is the second-type cell and the second information indicates that the value of Kssb of the first cell does not satisfy the first condition.

In the embodiments of the disclosure, if it is found that the first information indicates that the first cell is the second-type cell but the value of Kssb indicated by the second information does not satisfy the first condition, it indicates that there is a conflict between the first information and the second information, and the current case is determined as an error case. At this time, the terminal may issue an error alarm or enter a process of determining the type of the first cell in an error case, such that the determination of cell types in various cases is covered.

In some embodiments of the first aspect, the first information includes at least one of: configuration information of a WUS, in which the configuration information of the WUS is used to configure a WUS that triggers sending of the first transmission from the first cell; system information; radio resource control (RRC) signaling; medium access control (MAC) control element (CE); or downlink control information (DCI); and/or the second information includes at least one of: configuration information of a WUS; RRC signaling; PBCH information; MAC CE; DCI; or MIB.

The above is an example of the first information and/or second information, and the specific implementation is not limited to this example.

In some embodiments of the first aspect, the value of Kssb satisfying the first condition includes at least one of: for frequency range 1 (FR1), Kssb being greater than 23; or for FR2, Kssb being greater than 11.

In some embodiments of the first aspect, the method further includes: receiving third information, in which the third information is sent from the first cell or a second cell; determining a first parameter based on the third information; and determining, based on the first parameter, a frequency-domain position of a common resource block (CRB) of the second-type cell.

Thus, by sending the first parameter, it is convenient to determine the frequency-domain positions of the CRBs using an existing solution. In some embodiments of the first aspect, the third information is carried in the configuration information of the second transmission. Thus, carrying the third information in the configuration information of the second transmission may reduce the number of times the network side sends information to the terminal.

In some embodiments of the first aspect, determining, based on the type of the first cell, the manner of receiving the first transmission based on the first cell includes at least one of: determining to receive the first transmission based on a configuration of the first transmission, in which the first cell is the first-type cell; or determining to trigger sending of the first transmission from the first cell, in which the first cell is the second-type cell.

In some embodiments of the first aspect, the first cell is the first-type cell, and determining to receive the first transmission based on the configuration of the first cell includes at least one of: determining to receive the first transmission based on the configuration of the first transmission in a case where the terminal camps on the first cell, in which the first cell is the first-type cell; or receiving to receive the first transmission from the first cell based on the configuration of the first transmission after a link recovery, in which the first cell is the first-type cell.

In some embodiments of the first aspect, determining, based on the type of the first cell, the manner of receiving the first transmission includes:
determining to change from camping on the first cell to camping on a fifth cell to receive the first transmission from the fifth cell, in which the first cell is the first-type cell.

In some embodiments of the first aspect, the first cell is the second-type cell, and determining to trigger the sending of the first transmission from the first cell includes at least one of: sending the second transmission to the first cell, in which second transmission is used to trigger the sending of the first transmission from the first cell; or sending the second transmission to a fourth cell, in which the second transmission is used to trigger the sending of the first transmission from the first cell.

In some embodiments of the first aspect, the first transmission includes at least one of: a system information block (SIB); or a synchronization signal/physical broadcast channel (PBCH) block (SSB).

A second aspect provides a downlink transmission method, performed by a network device of a first cell. The method includes: determining, based on a type of the first cell, a manner of sending, based on the first cell, a first transmission.

In some embodiments of the second aspect, the first cell is a first-type cell or a second-type cell. The second-type cell is a cell for determining whether to send the first transmission based on its own demand, or the second-type cell is a cell from which the first transmission is not sent, or the second-type cell is a cell for which the first transmission is send from another cell on behalf of the second-type cell, or the second-type cell is a cell from which the first transmission is sent based on a trigger of a second transmission from a terminal, in which the second transmission is an uplink transmission sent by the terminal when the terminal has a demand to acquire the first transmission.

In some embodiments of the second aspect, sending the first transmission based on an on-demand mode from the second-type cell includes at least one of: the second-type cell being a cell for determining whether to send the first transmission according to its own demand; or the second-type cell being a cell from which the first transmission is sent based on the trigger of the second transmission from the terminal, in which the second transmission is an uplink transmission sent by the terminal when the terminal has a demand to acquire the first transmission.

In some embodiments of the second aspect, the method further includes at least one of: determining, based on the type of the first cell, whether to send configuration information of the second transmission, in which second transmission is used to trigger sending of the first transmission from the first cell; determining, based on the type of the first cell, whether to send configuration information of the second transmission, in which the second transmission is used to trigger sending of the first transmission from the first cell; determining, based on the type of the first cell, a cell configuration of the first cell; determining, based on the type of the first cell, an MIB of the first cell; determining, based on the type of the first cell, PBCH information of the first cell; determining, based on the type of the first cell, an MIB and PBCH information of the first cell; determining, based on the type of the first cell, a check method of PBCH information of the first cell; determining, based on the type of the first cell, a scheduling command for the first transmission sent from the first cell and/or an scheduling content of the scheduling command; or determining, based on the type of the first cell, first information and/or second information to be sent.

In some embodiments of the second aspect, determining, based on the type of the first cell, whether to send the configuration information of the second transmission includes at least one of: determining that the configuration information of the second transmission is not sent from the first cell, in which the first cell is the first-type cell; determining that the configuration information of the second transmission is sent from the first cell, in which the first cell is the second-type cell; or determining that the configuration information of the second transmission corresponding to the first cell is sent from a third cell, in which the first cell is the second-type cell.

In some embodiments of the second aspect, the configuration information of the second transmission is carried in a cell configuration of the first cell; or the configuration information of the second transmission is carried in a cell configuration of the third cell.

In some embodiments of the second aspect, the second transmission includes a wake-up signal (WUS).

In some embodiments of the second aspect, the third cell is a primary cell of the terminal and the first cell is a secondary cell of the terminal; or the third cell is a secondary cell of the terminal and the first cell is a primary cell of the terminal.

In some embodiments of the second aspect, the cell configuration of the first cell includes a first indication field, in which the first cell is the first-type cell; or the cell configuration of the first cell does not include a first indication field, in which the first cell is the second-type cell; or an indication content of a second indication field included in the cell configuration of the first cell corresponds to the type of the first cell.

In some embodiments of the second aspect, the cell configuration includes: a secondary cell configuration (ScellConfig).

In some embodiments of the second aspect, determining the MIB of the first cell based on the type of the first cell includes at least one of: determining a value of a spare bit in the MIB of the first cell based on the type of the first cell; determining a value of an ssb-SubcarrierOffset indication bit in the MIB of the first cell based on the type of the first cell; determining a value of SFN indication bit(s) in the MIB of the first cell based on the type of the first cell; determining a value of dmrs-TypeA-Position indication bit(s) in the MIB of the first cell based on the type of the first cell; determining a value of cellBarred indication bit(s) in the MIB of the first cell based on the type of the first cell; determining a value of subcarrierSpacingCommon indication bit(s) in the MIB of the first cell based on the type of the first cell; or determining a value of intraFreqReselections indication bit(s) in the MIB of the first cell based on the type of the first cell.

In some embodiments of the second aspect, the ssb-SubcarrierOffset indication bit in the MIB is a last bit of ssb-SubcarrierOffset indication bits in the MIB.

In some embodiments of the second aspect, the value of the ssb-SubcarrierOffset indication bit in the MIB of the first cell is within a first set, indicating that the first cell is the first-type cell; or the value of the ssb-SubcarrierOffset indication bit in the MIB of the first cell is within a second set, indicating that the first cell is the second-type cell.

In some embodiments of the second aspect, determining the PBCH information of the first cell based on the type of the first cell includes: determining a value of a reserved bit in the PBCH information based on the type of the first cell.

In some embodiments of the second aspect, determining the MIB and the BCH information of the first cell based on the type of the first cell includes: determining a value of a subcarrier offset (Kssb) jointly indicated by the MIB and the PBCH based on the type of the first cell.

In some embodiments of the second aspect, a value of Kssb jointly indicated by the MIB and the PBCH is within a third set, indicating that the first cell is the first0type cell; or the value of Kssb jointly indicated by the MIB and the PBCH is within a fourth set, indicating that the first cell is the second-type cell.

In some embodiments of the second aspect, determining the check method of the PBCH information of the first cell based on the type of the first cell includes at least one of: determining that the PBCH information of the first cell has a first check code, in which the first cell is the first-type cell; or determining that the PBCH information of the first cell has a second check code, in which the first cell is the second-type cell.

In some embodiments of the second aspect, determining the scheduling command for the first transmission sent from the first cell and/or the scheduling content of the scheduling command based on the type of the first cell includes at least one of: not sending the scheduling command for N times at reception occasions of the scheduling command for the first transmission, in which the first cell is the second-type cell, and N is a positive integer; or not sending the scheduling command for scheduling the first transmission for X times at reception occasions of the scheduling command for the first transmission, in which the first cell is the second-type cell, and X is a positive integer.

In some embodiments of the second aspect, determining, based on the type of the first cell, the manner of sending, based on the first cell, the first transmission includes at least one of: determining to send the first transmission based on a configuration of the first transmission, in which the first cell is the first-type cell; or determining to send the first transmission based on a trigger, in which the first cell is the second-type cell; or determining to send the first transmission on demand, in which the first cell is the second-type cell.

In some embodiments of the second aspect, the first cell is the second-type cell, and determining to send the first transmission based on the trigger includes: sending the second transmission to the terminal or receiving the second transmission sent from a fourth cell; and sending the first transmission to the terminal based on the second transmission.

In some embodiments of the second aspect, the first transmission includes at least one of: an SIB; or an SSB.

In some embodiments of the second aspect, the reserved bit in the PBCH information includes: the reserved bit being a first bit, in which *L̅ₘₐₓ* indicated by the PBCH information is a first value; or the reserved bit being a first bit and/or a third bit, in which *L̅ₘₐₓ* indicated by the PBCH information is a second value; in which *L̅ₘₐₓ* equals a maximum number of candidate synchronization signal/physical broadcast channel (PBCH) blocks (SSBs) within a half-frame.

In some embodiments of the second aspect, the method further includes: sending third information to a terminal, in which third information is used by the terminal to determine a first parameter, and the first parameter is used by the terminal to determine a frequency-domain position of a common resource block (CRB) of the second-type cell from which the first transmission is sent in an on-demand mode.

In some embodiments of the second aspect, the third information is carried in configuration information of the second transmission.

According to a third aspect of embodiments of the disclosure, a terminal is provided. The terminal includes: a processing module configured to determine a type of a first cell, and determine, based on the type of the first cell, a manner of receiving , based on the first cell, a first transmission.

According to a fourth aspect of embodiments of the disclosure, a network device is provided. The network device includes: a sending module configured to determine, based on a type of a first cell, a manner of sending, based on the first cell, a first transmission.

In a fifth aspect, embodiments of the disclosure provide a communication device. The communication device includes: one or more processors.

The one or more processors are configured to invoke instructions to cause the communication device to perform the downlink transmission method according to optional implementations of the first to second aspects.

In a sixth aspect, embodiments of the disclosure provide a storage medium. The storage medium has instructions stored thereon. When the instructions are executed on a communication device, the communication device is caused to perform the downlink transmission method according to optional implementations of the first to second aspects.

In a seventh aspect, embodiments of the disclosure provide a program product. When the program product is executed by a communication device, the communication device is caused to perform the downlink transmission method according to optional implementations of the first to second aspects.

In an eighth aspect, embodiments of the disclosure provide a computer program. When the computer program runs on a computer, the computer is caused to perform the downlink transmission method according to optional implementations of the first to second aspects.

It is understandable that the above terminal, network device, communication system, program product, and computer program are all used to perform the methods according to embodiments of the disclosure. Therefore, for beneficial effects that may be achieved by them, reference may be made to corresponding beneficial effects in the methods, which are not repeated here.

Embodiments of the disclosure provide downlink transmission methods, communication devices, a communication system, and a storage medium. Embodiments of the disclosure are not exhaustive, only illustrative of some embodiments, and are not intended to limit the scope of protection of the disclosure. In the absence of contradiction, each step in a certain embodiment may be implemented as an independent embodiment, and the steps may be combined arbitrarily. For example, a solution after removing some steps in a certain embodiment may also be implemented as an independent embodiment, and the order of steps in a certain embodiment may be arbitrarily exchanged. In addition, optional implementations in a certain embodiment may be arbitrarily combined. Furthermore, embodiments may be arbitrarily combined, for example, some or all steps of different embodiments may be arbitrarily combined, and a certain embodiment may be arbitrarily combined with optional implementations of other embodiments.

In embodiments of the disclosure, unless otherwise specified and logically contradictory, the terms and/or descriptions between embodiments are consistent and may be referenced to each other, and technical features in different embodiments may be combined according to their inherent logical relationships to form new embodiments.

The terms used in embodiments of the disclosure are only for the purpose of describing particular embodiments and are not intended to limit the disclosure.

In embodiments of the disclosure, unless otherwise specified, elements expressed in singular form, such as "a", "an", "the", "said", "above", "aforementioned", "this", etc., may mean "one and only one" or "one or more", "at least one", etc. For example, when translating articles such as "a", "an", "the" in English, the noun following the article may be understood as a singular expression or as a plural expression.

In embodiments of the disclosure, the term "multiple" means two or more.

In some embodiments, terms such as "at least one of", "one or more", "a plurality of", "multiple" may be interchanged.

In some embodiments, descriptions such as "at least one of A and B", "A and/or B", "in one case, A; in another case, B", "in a situation, A; in another situation, B" may include the following technical solutions depending on the situation: in some embodiments, performing A (A is performed regardless of B) and in some embodiments, performing B (B is performed regardless of A); or in some embodiments, selecting one from A and B to perform (A or B is selectively performed); or in some embodiments, performing A and B (both A and B are performed). Similar applies when there are more branches such as A, B, C.

In some embodiments, descriptions such as "A or B" may include the following technical solutions depending on the situation: in some embodiments, performing A (A is performed regardless of B); or in some embodiments, performing B (B is performed regardless of A); or in some embodiments, selecting one from A and B to perform (A or B is selectively performed). Similar applies when there are more branches such as A, B, C.

Prefix words such as "first", "second" in embodiments of the disclosure are only used to distinguish different described objects, and do not impose restrictions on the position, order, priority, quantity, or content of the described objects. For the description of the described objects, reference may be made to the claims or the context description in embodiments, and the use of prefix words should not cause unnecessary restrictions. For example, if the described object is "field", then the ordinal numbers before "field" in "first field" and "second field" do not limit the position or order between "fields", and "first" and "second" do not limit whether the "fields" they modify are in the same message, nor do they limit the order of the "first field" and "second field". As another example, if the described object is "level", then the ordinal numbers before "level" in "first level" and "second level" do not limit the priority between "levels". As another example, the quantity of the described object is not limited by the ordinal numbers, and may be one or more. For instance, for the "first apparatus", the quantity of "apparatuses" may be one or more. In addition, the objects modified by different prefix words may be the same or different. For example, if the described object is "apparatus", then "first apparatus" and "second apparatus" may be the same apparatus or different apparatuses, and their types may be the same or different. As another example, if the described object is "information", then "first type information" and "second type information" may be the same information or different information, and their content may be the same or different.

In some embodiments, "including A", "comprising A", "used to indicate A", "carrying A" may be interpreted as directly carrying A, or as indirectly indicating A.

In some embodiments, terms such as "..." , "determine ...", "in the case of ...", "when ...", "if ...", may be interchanged.

In some embodiments, terms such as "greater than", "greater than or equal to", "not smaller than", "more than", "more than or equal to", "not less than", "higher than", "higher than or equal to", "not lower than", and "above" may be interchanged, and terms such as "smaller than", "smaller than or equal to", "not greater than", "less than", "less than or equal to", "not more than", "lower than", "lower than or equal to", "not higher than", and "below" may be interchanged.

In some embodiments, the apparatus may be interpreted as physical or virtual, and their names are not limited to those described in embodiments. Terms such as "apparatus", "equipment", "device", "circuit", "network element", "node", "function", "unit", "section", "system", "network", "chip", "chip system", "entity", and "subject" may be interchanged.

In some embodiments, "network" may be interpreted as a device included in the network (e.g., an access network device, a core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be interchanged.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be interchanged.

In some embodiments, "an access network device", "a core network device", or "a network device" may be replaced by "a terminal". For example, embodiments of the disclosure may also be applied to a structure where the communication between an access network device, a core network device, or a network device and a terminal is replaced with the communication between multiple terminals (e.g., device-to-device (D2D), vehicle-to-everything (V2X), etc.). In that case, the terminal may be configured to have all or part of the functions of the access network device. Also, terms such as "uplink", "downlink" may be replaced by terms corresponding to terminal-to-terminal communication (e.g., "side"). For example, terms "uplink channel" and "downlink channel" may be replaced by "sidelink channel". Terms "uplink link" and "downlink link" may be replaced by "sidelink link".

In some embodiments, "a terminal" may be replaced by "an access network device", "a core network device", or "a network device". In that case, the access network device, the core network device, or the network device may be configured to have all or part of the functions of the terminal.

In some embodiments, obtaining data, information, etc. shall comply with the laws and regulations of the country where it is located.

In some embodiments, data, information, etc. may be obtained after obtaining user consent.

Furthermore, each element, each row, or each column in tables of embodiments of the disclosure may be implemented as an independent embodiment, and any combination of elements, rows, or columns may also be implemented as an independent embodiment.

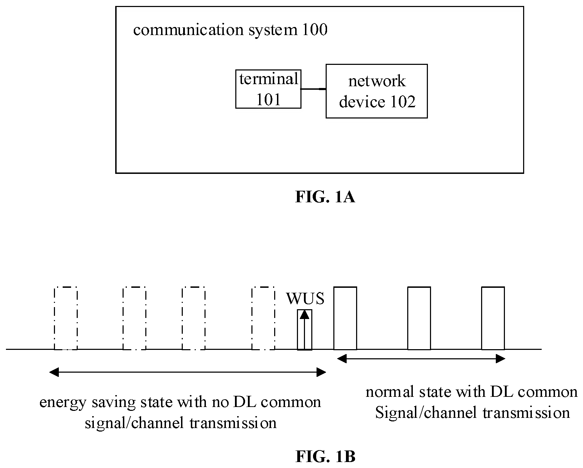

FIG. 1A is a schematic structural diagram illustrating a communication system according to an embodiment of the disclosure.

As illustrated in FIG. 1A, a communication system 100 includes a terminal 101 and a network device 102. The network device 102 may include an access network device and/or a core network device.

In some embodiments, for example, the terminal 101 includes, but is not limited to, at least one of a mobile phone, a wearable device, an Internet of Things device, a vehicle with communication capabilities, a smart vehicle, a tablet computer (Pad), a computer with wireless transceiver capabilities, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home.

In some embodiments, a terminal is also called User Equipment (UE).

In some embodiments, for example, an access network device may be a node or device that connects a terminal to a wireless network. The access network device may include, but is not limited to, at least one of an evolved NodeB (eNB) in a fifth-generation (5G) communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a sixth-generation (6G) communication system, an Open RAN, a Cloud RAN, a base station in other communication systems, or an access node in a Wi-Fi system.

In some embodiments, technical solutions of the disclosure may be applied to an Open RAN architecture. In this case, the interfaces between or within the access network devices involved in embodiments of the disclosure may become internal interfaces of Open RAN, and the processes and information exchange between these internal interfaces may be implemented by software or programs.

In some embodiments, an access network device may be composed of a central unit (CU) and distributed units (DUs), where the CU may also be called a control unit. The CU-DU structure splits the protocol layers of the access network device, where functions of some protocol layers are under centralized control of the CU, and the remaining part or all protocol layer functions are distributed in the DUs, with the CU centrally controlling the DU, but the disclosure is not limited thereto.

In some embodiments, a core network device may be a single device, including a first network element or multiple devices or groups of devices, each including a first network element. Network elements may be virtual or physical. The core network includes, for example, at least one of an Evolved Packet Core (EPC), a 5G Core Network (5GCN), a Next Generation Core (NGC).

It is understandable that the communication system according to embodiments of the disclosure is intended to illustrate technical solutions of embodiments of the disclosure more clearly and does not constitute a limitation on technical solutions according to embodiments of the disclosure. A person of ordinary skill in the art may appreciate that with the evolution of system architecture and the emergence of new business scenarios, technical solutions according to embodiments of the disclosure are equally applicable to similar technical problems.

The following embodiments of the disclosure may be applied to, but are not limited to, the communication system 100 illustrated in FIG. 1A, or a part thereof. The entities illustrated in FIG. 1A are illustrative. The communication system may include all or part of the entities in FIG. 1A, or may include other entities not illustrated in FIG. 1A. The quantity and form of each entity are arbitrary, and the connections between entities are illustrative. Entities may be unconnected or connected, and the connection may be any manner, direct or indirect, wired or wireless.

Embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (Bluetooth (registered trademark)), Public Land Mobile Network (PLMN) network, Device-to-Device (D2D) system, Machine to Machine (M2M) system, Internet of Things (IoT) system, Vehicle-to-Everything (V2X), systems using other downlink transmission methods, next-generation systems extended based on them, etc. Also, multiple systems may be combined (e.g., a combination of LTE and NR, e.g., a system defined by 6G).

On-demand synchronization signal/physical broadcast channel (PBCH) block (SSB) and/or system information block 1 (SIB1) technology is one of the important candidate technologies. In on-demand SSB and/or SIB1 technology, an SSB and/or an SIB1 are no longer sent periodically, but are sent according to the needs of the base station or the terminal.

As illustrated in FIG. 1B, a base station in an energy-saving state stops periodically sending the SSB and/or the SIB1, or uses a sparser time-domain pattern to send the SSB and/or the SIB1. This energy-saving state may be that the aforementioned NES mechanism is performed for the cell, e.g., a discontinuous transmission is performed for the cell.

In a case where a terminal has a demand of the SSB and/or the SIB1, the terminal sends a wake-up signal (WUS) to the base station. After receiving the WUS, the base station enters a normal state and sends the SSB and/or the SIB1. This normal state may be a non-energy-saving state.

In some embodiments, the base station determines to stop sending the SSB and/or the SIB1 after sending one or more SSB bursts or SS bursts, based on the network traffic load, the number of camped terminals, the service type, the time period, or the like. When the base station stops sending the SSB and/or the SIB1, it indicates that the base station returns to the energy-saving state.

In order to reduce the network energy consumption, technologies to reduce the transmission times of the SSB and/or the SIB1 in the time domain have been proposed, i.e., SSB/SIB1-less technology. In the SSB/SIB1-less technology, the SSB and/or the SIB1 of a non-anchor cell may be obtained through an anchor cell. The SSBs and/or the SIB 1s of multiple cells are broadcasted from the anchor cell. For a non-anchor cell, there is no need to periodically broadcast SSB and/or SIB1 information, thereby achieving the purpose of network energy saving.

In view of this, there may be one or more of the following different types of cells, and these types of cells may be distinguished according to the following situations: periodically sending the SSB of the current cell; periodically sending the SIB1 of the current cell; sending the SSB of the current cell based on on-demand mode; sending the SIB1 of the current cell based on on-demand mode; periodically sending the SSB of the current cell and the SSB of another cell; periodically sending the SIB1 of the current cell and the SIB1 of another cell; not sending the SSB of the current cell; not sending the SIB1 of the current cell; periodically sending the SSB of the current cell and sending the SIB1 of the current cell based on on-demand mode; periodically sending the SIB1 of the current cell and sending the SSB of the current cell based on on-demand mode; periodically sending the SSB of the current cell and the SSB of another cell and sending the SIB1 of the current cell based on on-demand mode; periodically sending the SIB1 of the current cell and the SIB1 of another cell and sending the SSB of the current cell based on on-demand mode; periodically sending the SIB1 of the current cell and sending the SSB of the current cell based on non-on-demand mode; periodically sending the SSB of the current cell and the SSB of another cell and sending the SIB1 of the current cell based on non-on-demand mode; periodically sending the SIB1 of the current cell and the SIB1 of another cell and sending the SSB of the current cell based on non-on-demand mode.

For example, non-on-demand may refer to that the base station periodically sends the corresponding SSB or SIB1 based on a semi-persistent or periodic configuration.

The above cells also have an impact on the behavior of the terminal. For example, if a corresponding SIB1 of a cell is sent from the current cell in which the terminal is located based on on-demand mode, during the period when the base station does not send any SIB1, the terminal may need to send a WUS on demand to trigger the corresponding SIB1 transmission. For example, if an SIB1 of a cell in which the terminal is located and SIB1(s) of another cell or other cells are sent periodically from the current cell, the terminal may receive the SIB1s of multiple cells based on the configuration signaling, and camp on a cell corresponding to the SIB1 based on the received SIB 1 information.

In some embodiments, the SSB and the SIB1 are periodically sent on determined time-frequency resource positions based on a period predefined by the protocol and/or configured by the network side.

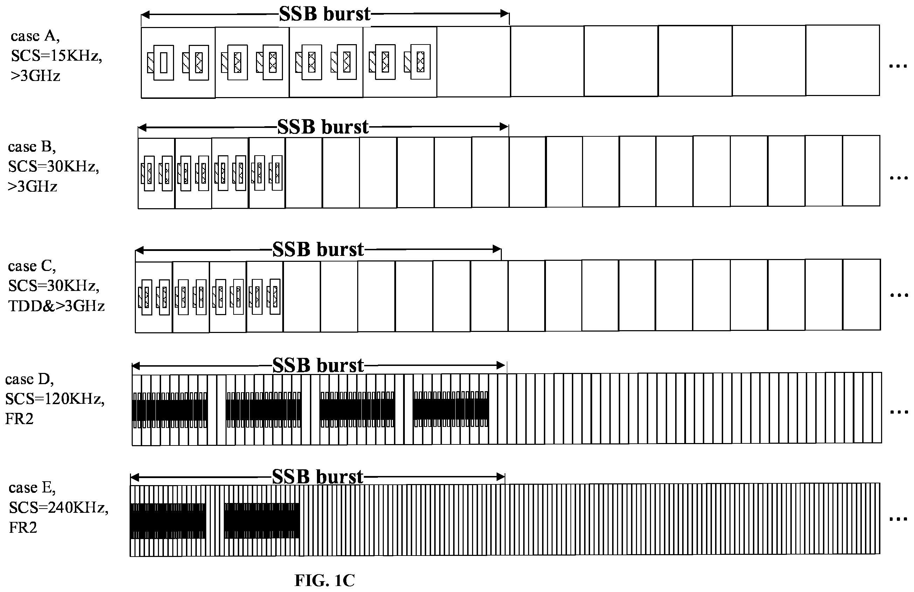

As illustrated in FIG. 1C, an SSB occupies multiple consecutive orthogonal frequency division multiplexing (OFDM) symbols in the time domain. For example, an SSB may occupy 4 symbols. The SSB may include a primary synchronization signal (PSS), a secondary synchronization signal (SSS), and physical broadcast channel (PBCH) information.

The New Radio (NR) system supports 5 SSB time-domain transmission cases. Subcarrier spacings used for sending the SSB in Case A to Case E illustrated in FIG. 1C are different. For example, some are 15 kHz, some are 30 kHz. Or carrier frequency ranges (FRs) for sending the SSB in Case A to Case E are different. In short, the time-domain patterns of these cases depend on factors such as the subcarrier spacing (SCS) of the SSB, operating frequency, time-division multiplexing and/or frequency-division multiplexing communication modes.

Different SSB transmission cases correspond to different numbers of SSBs within an SSB burst and the time-domain resource positions within the burst. The duration of an SSB burst is 5 milliseconds (ms). Typically, the transmission period of SSB is 20 ms. Further, the base station may configure the transmission period and the time-domain pattern of the SSB through relevant information carried in the SIB1, and the maximum transmission period of the SSB is 160 ms.

SIB1 is scheduled by DCI format 1-0 transmitted in Type 0 common search space (Type0-CSS). The synchronization signal and the corresponding time-frequency resource positions related to the Type-0 CSS may be indicated by a master information block (MIB), or may be configured through the SIB1 or radio resource control (RRC) signaling. The transmission period and the time-frequency resource position depend on the SSB/SIB1 multiplexing pattern and the indication information carried in the DCI format 1-0 that schedules this transmission.

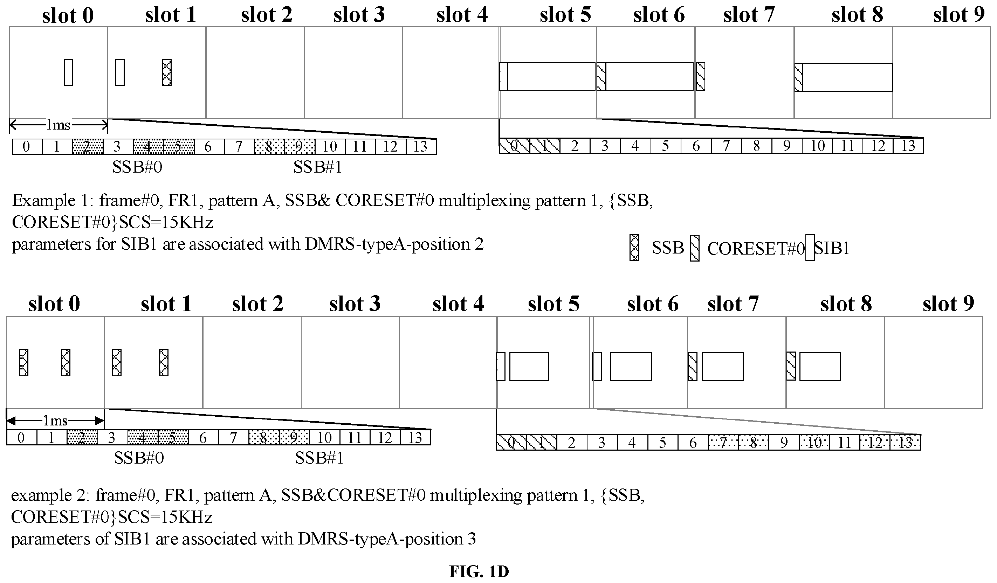

The base station needs to periodically send the SIB1 so that the terminal may obtain system information in time. In addition to the resource overhead caused by the SIB1 transmission itself, the control resource set (CORESET) used for a physical downlink control channel (PDCCH) transmission for scheduling the SIB1 transmission also occupies considerable time-domain resources. The SIB1 transmission may be illustrated in FIG. 1D. FIG. 1D illustrated different time-domain configurations of two SSBs, SIB1, and CORESET#0.

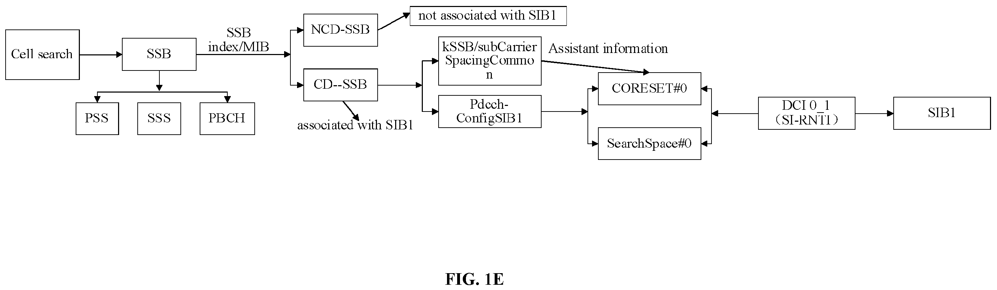

Taking a case where the SIB1 is scheduled by the DCI format 1-0 transmitted in the Type0-CSS, and the SS and corresponding time-frequency resource positions related to the Type-0 CSS are indicated by the MIB as an example, the corresponding method of obtaining the SIB1 is illustrated in FIG. 1E.

In some embodiments, the SSB may include two types: cell defined (CD)-SSB and non-cell-defined (NCD)-SSB. The CD-SSB is associated with the SIB1, the CD-SSB is associated with the CORESET#0 corresponding to the SIB1, and/or the CD-SSB is associated with a search space (SS)#0 corresponding to the SIB1. The NCD-SSB is not associated with at least one of the SIB 1, the CORESET#0 corresponding to the SIB1, or the SS#0 corresponding to the SIB1. The network device schedules the SIB1 through downlink control information (DCI). For example, the SIB1 is scheduled using the DCI format 0-1. The DCI may be scrambled with a system information radio network temporary identity (SI-RNTI).

Currently, the SSB and the SIB1 need to be sent periodically. Even if the number of terminals belonging to the base station is sparse or the service load is extremely low, the base station still needs to periodically send the SSB and the SIB1 to enable the terminal to complete time-frequency synchronization, automatic gain control (AGC) setting, secondary cell activation (Scell activation), cell selection and/or cell reselection and other related operations and obtain system information. The periodic and forced transmission of the downlink signal may undoubtedly reduce the chance for the base station to enter a sleep state, increasing unnecessary energy consumption on the base station side, and increasing the operator's operating costs.

Table 1 shows the time-domain resource occupancy ratio of the SSB and the SIB1 in different configuration/deployment scenarios. Considering a time-domain resource occupancy ratio as high as 17.14%, in this scenario the base station side may have almost no opportunity to enter the sleep state, greatly limiting the use of energy-saving technologies on the base station side and increasing the network's operating costs.

**Table 1**

| case | SSB | SSB slot occupancy ratio | SSB symbol occupancy ratio | SIB1 | SIB1 slot occupancy ratio | SIB1&CORESE T0 symbol occupancy ratio (4&2) |
|---|---|---|---|---|---|---|
| case A (15kHz, <=3GHz) | 4 SSBs (slot #0, 1) | 1/10 | 5.71% | frame 0: slot 5, 6, 7, 8 | 1/5 | 8.57% |
| case A (15kHz, >3GHz) | 8 SSBs (slot #0, #1, #2, #3) | 1/5 | 11.42% | frame 0: slot {5, 6, 7, 8, 9} frame 1: slot{ 0, 1, 2} | 2/5 | 17.14% |
| case B (30kHz, <3 GHz) | 4 SSBs (slot #0, #1) | 1/20 | 2.86% | frame 0: slot {10, 11, 12, 13} | 1/10 | 4.28% |
| case B (30kHz, >3 GHz) | 8 SSBs (slot #0, #1, #2, #3) | 1/10 | 5.71% | frame 0: slot {10, 11, 12, 13, 14, 15, 16, 17} | 1/5 | 8.57% |
| case C (30kHz, FR1) | 4 SSBs (slot #0, #1) | 1/20 | 2.86% | frame 0: slot {10, 11, 12, 13} | 1/10 | 4.28% |
| case D (120kHz , FR2) | 64 SSBs (16 slots) | 1/10 | 5.71% | frame 0: slot{40 ...79} frame 1: slot{0, ...23} | 2/5 | 17.14% |
| case E (240kHz , FR2) | 64 SSBs (32 slots) | 1/10 | 5.71% | frame 0: slot {80, ... 143} | 1/5 | 8.57% |

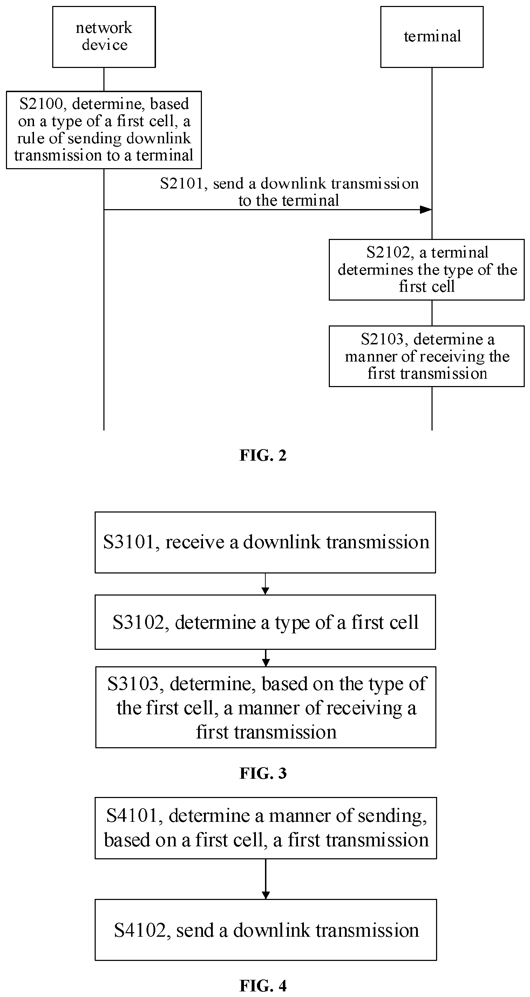

As illustrated in FIG. 2, embodiments of the disclosure provide a downlink transmission method, performed by a communication system as illustrated in FIG. 1A. The method may include the following.

At S2100, a network device determines a manner of transmitting downlink transmission to the terminal based on a type of a first cell.

In some embodiments, the network device may be an access network device. For example, the network device may include a base station of the first cell. For example, the network device may also include base station(s) of another cell/other cells associated with the first cell. In some embodiments, the first cell may be a serving cell or a neighboring cell of the terminal. In some embodiments, the serving cell of the terminal may include a primary cell and a secondary cell. For example, the first cell may be a primary cell and/or a secondary cell.

In another embodiment, the first cell may also be a candidate cell for the terminal. The candidate cell may be a cell prepared to serve as a serving cell. For example, the terminal may switch to the candidate cell through cell handover or cell reselection. After the terminal switches to the candidate cell, the candidate cell may serve as a changed serving cell.

Another cell/other cells associated with the first cell may include, but is not limited to, a second cell and/or a third cell.

In some embodiments, the second cell and/or the third cell may each be a neighboring cell of the first cell.

In some embodiments, the second cell and/or the third cell may each be any cell having an overlapping coverage with the first cell.

In some embodiments, the second cell and/or the third cell may each serve as a primary cell for the first cell.

In some embodiments, the network device determines, based on the type of the first cell, the manner of sending the first transmission based on the first cell.

In some embodiments, the first cell may be a first-type cell or a second-type cell.

In some embodiments, the first-type cell and the second-type cell may be cells with different states.

For example, the first-type cell is in a first state, and the second-type cell is in a second state. Energy consumption of the second-type cell is lower than that of the first-type cell.

For example, the first-type cell does not implement any NES mechanism, and the second-type cell implements the NES mechanism.

In some embodiments, the first-type cell and the second-type cell may be cells with different sending mechanisms for common downlink transmission. As an example, the first-type cell may be a cell from which the common downlink transmission is periodically sent. As another example, the second-type cell may be a cell from which the common downlink transmission is not sent, or a cell from which the common downlink transmission is sent on demand, or a cell for which the common downlink transmission is sent from another cell on its behalf. In some embodiments, the common downlink transmission here is an example of the first transmission.

In some embodiments, a cell from which the first transmission is sent on demand may be a cell from which the first transmission is sent based on an on-demand mode. For example, in the on-demand mode, the sending of the first transmission from the cell may be triggered by a second transmission sent by the terminal.

In some embodiments, in a case where the first transmission of the second-type cell is sent from another cell on behalf of the second-type cell, the first transmission may be periodically sent from another cell on behalf of the second-type cell, or the first transmission of the second-type cell may be sent from another cell based on an on-demand mode, or sending of the first transmission of the second-type cell from another cell is triggered based on a second transmission from the terminal.

In some embodiments, the cell from which the first transmission of the second-type cell is sent on behalf of the second-type cell or from which the first transmission is sent based on demand for the second-type cell may be a first-type cell. In detail, the first-type cell may be an anchor cell, and the second-type cell may be a non-anchor cell.

In some embodiments, the first cell is a first-type cell, and the first transmission is sent from the first cell based on a semi-static configuration and/or a periodic configuration and/or indication signaling.

In some embodiments, the first cell is a first-type cell, and a terminal in the first cell receives the first transmission based on the semi-static configuration and/or the periodic configuration and/or the indication signaling.

In some embodiments, the first cell is a second-type cell, and the first transmission is sent from the first cell based on an on-demand mode.

In some embodiments, sending the first transmission from the second-type cell based on an on-demand mode includes at least one of: the base station autonomously determining whether to send the first transmission based on a cell communication state; or the base station determining whether to send the first transmission based on a second transmission sent by the terminal.

In some embodiments, the first cell is a second-type cell, and a terminal in the first cell, based on the semi-static configuration and/or the periodic configuration and/or the indication signaling, cannot receive the first transmission with time-frequency resources determined by the semi-static configuration and/or the periodic configuration and/or the indication signaling within a first time range, but can receive the first transmission with time-frequency resources determined by a configuration and/or indication signaling within a second time range.

In some embodiments of a first aspect, the first cell is a second-type cell, and the first transmission is not sent from the first cell. In some embodiments of the first aspect, in a case where the terminal in the first cell cannot receive the first transmission, the terminal determines that the first cell is a second-type cell. For example, in a case where the terminal in the first cell cannot receive the first transmission and the failure to receive the first transmission is not due to a link failure of the terminal, the terminal determines that the first cell is a second-type cell.

In some embodiments, in a case where the terminal determines the first cell is a second-type cell, if the terminal in the first cell cannot receive the first transmission, then the terminal determines that a corresponding SSB/SIB 1 is sent from the cell based on an on-demand mode.

For example, in a case where the terminal determines that the first cell is a second-type cell, if the terminal in the first cell cannot receive the first transmission, then the terminal determines that the failure to receive the first transmission is due to a link failure of the terminal.

In some embodiments, the common downlink transmission may include: cell-level downlink signal and/or downlink channel information.

For example, in some embodiments, the common downlink transmission may include, but is not limited to, at least one of: SSB, system information block (SIB), PDCCH information, and/or physical downlink shared channel (PDSCH) information. For example, the SIB may include, but is not limited to, an SIB1 and/or an SIBn, where n may be any positive integer greater than or equal to 2.

In some implementations, the first-type cell may be an anchor cell and the second-type cell may be a non-anchor cell.

In some embodiments, the first-type cell and the second-type cell may be cells with different transmission mechanisms for the first transmission. The first transmission is sent from the first-type cell based on the semi-static configuration and/or the periodic configuration. For example, the first transmission is sent from the first-type cell with a semi-static period based on the semi-static configuration. For example, the first transmission is sent from the first-type cell with a configured period based on the periodic configuration.

For a first-type cell, the terminal receives the first transmission at a corresponding occasion based on the semi-static configuration and/or the periodic configuration, without the need of actively requesting the network side to send the first transmission.

In some embodiments, the first-type cell may include at least one of: a cell from which the first transmission of the current cell (or call local cell or present cell) is sent periodically; or a cell from which the first transmissions of the current cell and another cell are periodically sent. As an example, an SSB of the current cell may be sent periodically from the first-type cell, an SIB1 of the current cell may be sent periodically from the first-type cell, SSBs of the current cell and another cell may be periodically sent from the first-type cell, or SIB1s of the current cell and another cell may be periodically sent from the first-type cell.

In some embodiments, another cell may be a neighboring cell of the first-type cell. In another embodiment, another cell may be a secondary cell for the first cell.

In some embodiments, the first-type cell may be a cell from which configuration of a second transmission for triggering the sending of the first transmission from the second-type cell is sent.

In some embodiments, the first-type cell may be a cell in which the second transmission for triggering the sending of the first transmission from the second-type cell is received. The base station of the first-type cell notifies the second-type cell of the request for triggering the second transmission via inter-base station signaling exchange.

In some embodiments, the first transmission may be sent in an on-demand mode from the second-type cell.

In some embodiments, the first transmission is sent from the second-type cell based on the demand of the second-type cell. For example, it is determined whether to transmit the first transmission and/or how to transmit the first transmission in the second-type cell based on a pre-configuration from the base station.

In some embodiments, the second-type cell may be a cell from which the first transmission of the current cell is sent based on an on-demand mode. For example, the first transmission includes, but is not limited to, an SSB and/or an SIB. For example, the SIB may include, but is not limited to, an SIB1.

In some embodiments, the second-type cell is a cell from which no first transmission is sent. For example, the second-type cell may be a cell from which no SIB1 and/or no SSB are sent. As an example, in a case where a cell is not associated with a control resource set #0 (CORESET#0) and/or the SIB1 (for example, the MIB and/or PBCH information of a corresponding cell indicates no association with the CORESET#0/the SIB1), it may be considered that no SIB1 is sent from the cell, i.e., the cell may be a second-type cell from which the first transmission is not sent.

In some embodiments, the second-type cell may be a cell that a terminal is prohibited from accessing. As an example, the second-type cell may be a cell that a designated terminal is prohibited from accessing. The designated terminal may be a terminal of a designated type or a terminal whose terminal information is in a terminal list. There are various interpretations of the designated terminal, this is merely an example, and the specific implementation is not limited to this example.

In embodiments of the disclosure, the first transmission may be any downlink transmission that is sent periodically from the first-type cell, and the downlink transmission may include any downlink signal and/or any downlink information. The downlink signal may include various physical layer signals and/or reference signals.

In other embodiments, upon being triggered by the second transmission from the terminal, the first transmission is sent from the second-type cell.

In this case, the first transmission is sent from the second-type cell only when the network side receives the second transmission sent by the terminal.

In some embodiments, the second-type cell may have one of the following characteristics: the second-type cell does not have the periodic configuration and/or the semi-static configuration for the first transmission; the second-type cell may be a cell from which the SSB and/or the SIB1 are not sent; the second-type cell may be a cell in which a discontinuous transmission is performed; or the second-type cell may be a temporarily dormant cell.

The second-type cell may be a cell that has the periodic configuration and/or the semi-static configuration and/or the signaling indication for the first transmission but from which the first transmission is not sent periodically. The second-type cell is a cell that the terminal is not allowed to access.

In some embodiments, the first transmission may include, but is not limited to, at least one of: a downlink signal or downlink information.

For example, the downlink signal may include various physical signals and/or reference signals.

The downlink signal includes at least one of: an SSB; a PSS; an SSS; a tracking reference signal (TRS); a channel state information-reference signal (CSI-RS); or a discovery reference signal (DRS).

In some embodiments, the downlink information may include, but is not limited to, an SIB; physical downlink control channel (PDCCH) information, and/or physical downlink shared channel (PDSCH) information.

In some embodiments, the second transmission may include at least one of an uplink signal or uplink information.

The uplink reference signal may include a first-type signal and a second-type signal.

In some embodiments, uplink signals used to trigger the sending of the first transmission from the second-type cell may be collectively referred to as a wake-up signal (WUS).

In some embodiments, the first-type signal may be dedicated to triggering the sending of the first transmission from the second-type cell. For example, the first-type signal may have a single function for triggering the sending of the first transmission from the second-type cell.

In some embodiments, the second-type signal may be a signal with multiple functions. The function of triggering the network device to transmit the second transmission is one of the functions of the second-type signal.

For example, the second-type signal may include a sounding reference signal (SRS). The SRS originally has the function of uplink channel quality estimation. In embodiments of the disclosure, the SRS may be reused as a signal to trigger the sending of the second transmission from the second-type cell. That is, in embodiments of the disclosure, the SRS is given an additional function of triggering the first network device and/or the second network device to transmit the second transmission.

In some embodiments, the second-type signal may also be a random access preamble. The random access preamble itself has a random access function and may also trigger the sending of the first transmission from the second-type cell.

In some embodiments, the second-type signal includes: a first signal and a second signal.

For example, the first signal may include an SRS used for uplink channel measurement. The second signal may include an SRS used for triggering the sending of the first transmission from the second-type cell.

In some embodiments, the network device determines the type of the first cell based on the setting of the first cell.

In some embodiments, the downlink transmission may include a network configuration, network signaling, and/or downlink data sent by the network device to the terminal.

In some embodiments, the network configuration may include, but is not limited to, a cell configuration and/or a transmission configuration.

For example, the transmission configuration may include, but is not limited to, a configuration of the first transmission and/or a configuration of the second transmission.

In some embodiments, the configuration of the first transmission may be used to indicate one of: a transmission type of the first transmission, a resource location of the first transmission, a transmission mode of the first transmission, etc.

In some embodiments, the configuration of the second transmission may be used to configure a transmission type of the second transmission, a resource location of the second transmission, a transmission mode of the second transmission, etc.

In some embodiments, the network signaling may include scheduling signaling for a downlink transmission, such as a first transmission, and/or the second transmission.

In some embodiments, the network signaling may include, but is not limited to, at least one of signaling related to a cell state, such as activation of the first cell, dormancy of the first cell, starting an NES mechanism by the first cell, exiting an NES mechanism by the first cell, change of a type of the first cell.

In some embodiments, the above-mentioned "downlink transmission" includes, but is not limited to, at least one of: an MIB; an SIB; PBCH information; a specific SSB index; or a combination of specific SSB indices.

At S2101, the network device sends downlink transmission to the terminal.

In some embodiments, the network device sends the downlink transmission to the terminal based on the determined manner.

In some embodiments, sending, by the network device, the downlink transmission to the terminal may include sending, by the network device, the network signaling to the terminal.

In some embodiments, sending, by the network device, the downlink transmission to the terminal may include sending, by the network device, the first transmission to the terminal.

In some embodiments, sending, by the network device, the downlink transmission to the terminal may include broadcasting, multicasting, or unicasting, by the network device, the downlink transmission to the terminal.

Taking the above-mentioned "downlink transmission" being configuration(s) of the first transmission and/or the second transmission as an example, the network device that sends the configuration(s) of the first transmission and/or the second transmission may be a first network device and/or a second network device. The second network device is different from the first network device. As an example, the first network device and the second network device may be two access network devices arranged adjacently.

In some embodiments, the network device broadcasts the configuration(s) of the first transmission and/or the second transmission to the terminal.

In some embodiments, the network device multicasts the configuration(s) of the first transmission and/or the second transmission to the terminal.

In some embodiments, the network device unicasts the configuration(s) of the first transmission and/or the second transmission to the terminal.

In some embodiments, the network device sends dedicated signaling carrying the configuration(s) of the first transmission and/or the second transmission to the terminal.

In some embodiments, the network device sends common signaling carrying the configuration(s) of the first transmission and/or the second transmission to the terminal.

In some embodiments, the network device sends broadcast signaling carrying the configuration(s) of the first transmission and/or the second transmission to the terminal.

In some embodiments, the network device may be a network device of the first cell or a network device of the second cell.

In some embodiments, the configuration(s) of the first transmission and/or the second transmission may be carried in IE(s) sent by one or more network devices.

In some embodiments, the network device sends at least one of first information, second information, or third information to the terminal. In some embodiments, any one or more of the first information, second information, or third information may be broadcasted, multicast, or unicasted. In other embodiments, any one or more of the first information, second information, or third information may be carried in dedicated signaling, common signaling, or broadcast signaling.

In some embodiments, the first information includes but is not limited to at least one of: configuration information of a WUS; system information; radio resource control (RRC) signaling; medium access control (MAC) control element (CE); or downlink control information (DCI). The configuration information of the WUS is used to configure a WUS. The WUS is used to trigger the sending of the first transmission from the first cell. The WUS is used to trigger the sending of the first transmission from the first cell.

In some embodiments, the first information indicates the type of the first cell.

In some embodiments, the first information includes but is not limited to at least one of: configuration information of the second transmission; cell information; or a cell list.

In some embodiments, the second transmission may be an uplink transmission that triggers the sending of the first transmission from a cell. As an example, the second transmission may include but is not limited to a wake-up signal (WUS). For example, the WUS may be information transmitted on a physical random access channel (PRACH). For example, the WUS may include but is not limited to message 1 (Msg.1) in a four-step random access procedure or message A (Msg.A) in a two-step random access procedure.

In some embodiments, the first information may be any information indicating the type of the first cell. For example, the first information may be a cell configuration of the first cell or another cell.

In some embodiments, the cell information may include one or more cell identifiers. For example, the cell identifier may be a physical cell identifier or others. In some embodiments, the cell list may include cell identifier(s) of one or more cells. As an example, a certain cell list may be a cell list of first-type cells, and then cells whose cell identifiers are in this cell list are all the first-type cells. As another example, a certain cell list may be a cell list of second-type cells, and then cells whose cell identifiers are in this cell list are all the second-type cells. In some embodiments, the cell information or the cell list may be configured separately based on configuration information of the second transmission, or may be implemented as multiple pieces of configuration information of the second transmission, or may be configured independently of the configuration information. The disclosure does not limit this.

In some embodiments, the second information may include but is not limited to at least one of: configuration information of a WUS; RRC signaling; PBCH information; an MAC CE; a DCI; or an MIB. As an example, the second information may include the PBCH information and/or the MIB. In other embodiments, the second information may also be any SIB. In some embodiments, the second information may be information used to indicate a subcarrier offset of the second-type cell. As an example, in this case, the second information may indicate a specific value or a value range of Kssb.

In some embodiments, the second information may also be information used to indicate whether the cell is associated with the CORESET#0, the SIB1, and/or the Type 0 physical downlink control channel common search space (Type0 PDCCH CSS).

In a case where a cell is associated with the SIB1, the CORESET#0, or the Type0 PDCCH CSS, it indicates that the SIB1 may be sent from the cell. In a case where a cell is associated with none of the SIB1, the CORESET#0, and the Type0 PDCCH CSS, it may be considered that the no SIB1 may be sent from the cell.

In some embodiments, in a case where a cell is associated with the Type0 PDCCH CSS, it may be considered that the cell is associated with a CORESET corresponding to the Type0 PDCCH CSS, and thus it may be considered that the cell is associated with the SIB1.

In some embodiments, the third information is carried in the configuration information of the second transmission, the system information, the MIB or the PBCH information, the RRC message, the DCI, or the MAC CE.

In some embodiments, the third information is any information used by the terminal in determining frequency-domain positions of CRBs. As an example, the third information includes a first parameter. The first parameter may be another subcarrier spacing. The CRBs are used to determine CRBs of the control resource set #0 (CORESET#0) and/or a CORESET corresponding to Type0 PDCCH CSS, to determine a corresponding frequency-domain position.

For example, the terminal may use the third information to determine the frequency-domain positions of the CRB grid of the first cell, where the transmission of SIB1 corresponding to the first cell needs to be triggered based on the WUS.

In some embodiments, the third information is used to configure the first parameter.

In some embodiments, the first parameter is used by the terminal to determine the frequency-domain positions of the CRBs of the second-type cell. As an example, the first parameter may be used to determine the frequency-domain positions of the CRB grid of the second-type cell. As an example, the CRB grid may be a way to position CRBs in the frequency domain.

In other embodiments, the first information indicates a possible type of the first cell, and an actual type of the first cell may need to be determined in combination with the second information and/or the third information. As an example, in a case where the first information indicates the possible type of the first cell, the type of the first cell may be accurately determined by combining the first information and the second information.

For example, the first information and the second information may be from the same cell or from different cells. As an example, the first information may be from an anchor cell, and the second information may be from a non-anchor cell. In this case, the first information and the second information are from different cells. The anchor cell may be the first cell, and the non-anchor cell may be the second cell. Or the anchor cell may be the second cell, and the non-anchor cell may be the first cell. As another example, the first information and the second information may be both from an anchor cell, for example, the first information and the second information are both sent from the second cell, and the second information is used to configure the second transmission of the first cell.

In some embodiments, determining the type of the first cell based on the first information and/or the second information includes: determining that the first cell is a second-type cell, in which the first information indicates that the first cell is a second-type cell and the second information indicates that a value of a subcarrier offset (Kssb) of the first cell satisfies a first condition.

In some embodiments, it is determined that a current case is an error case, in which the first information indicates that the first cell is a second-type cell and the second information indicates that the value of Kssb of the first cell does not satisfy the first condition.

In some embodiments, in a case where the terminal determines that the case is an error case, the terminal cannot determine the type of a corresponding cell, or the terminal abandons the determination of the type of the corresponding cell, or the terminal determines an incorrect type of the cell, or the terminal still determines the first cell as the second-type cell when the value of Kssb of the first cell does not satisfy the first condition, or the terminal determines that the cell is a cell from which the second transmission is sent on demand, or the terminal determines that the cell is an existing legacy cell.

In some embodiments, the terminal may determine the frequency-domain position of the CRB grid of a corresponding cell based on the first parameter. The frequency-domain position of the CRB grid may be used by the terminal to determine the frequency-domain position of the corresponding CORESET#0, and/or the frequency-domain position of the CRB grid may be used by the terminal to determine the frequency-domain position of the corresponding SIB 1. In some embodiments, the first information and the third information may be used together to determine whether the first cell is a second-type cell from which the first transmission is sent based on an on-demand mechanism, or whether the first cell is a second-type cell from which the first transmission is not sent. For example, in a case where the first information indicates that the first cell is the second-type cell and the terminal receives the third information for the first cell sent by the network device, it may be indicated that the first cell is a second-type cell from which the first transmission is sent based on an on-demand mechanism; otherwise, it indicates that the first cell is a second-type cell from which the first transmission is not sent.

In some embodiments, the first parameter may be another subcarrier offset parameter *k̃*_{SSB}, and a value range of *k̃*_{SSB} may be a positive integer greater than or equal to 0 and less than 24.

In some embodiments, in a case where the frequency range of the first cell is FR1, the first parameter may be another subcarrier offset parameter *k̃*_{SSB}, and the value range of *k̃*_{SSB} may be a positive integer greater than or equal to 0 and less than 24.

In some embodiments, in a case where the frequency range of the first cell is FR2, the first parameter may be another subcarrier offset parameter *k̃*_{SSB}, and the value range of *k̃*_{SSB} may be a positive integer greater than or equal to 0 and less than 24.

The value range of Kssb determined based on the MIB and/or the PBCH information may be a positive integer greater than or equal to 0 and less than 32. Certainly, this is only an example, and the specific implementation is not limited to the above example.

In some embodiments, S2101 includes determining, by the network device, the downlink transmission of the first cell based on the type of the first cell and sending the determined downlink transmission.

In some embodiments, determining, by the network device, the downlink transmission of the first cell based on the type of the first cell may include but is not limited to at least one of the following:
setting whether to send configuration information of a second transmission based on the type of the first cell, in which the second transmission is used to trigger the sending of the first transmission from the first cell;
determining whether to send configuration information of a second transmission based on the type of the first cell, in which the second transmission is used to trigger the sending of the first transmission from the first cell;
setting a cell configuration of the first cell based on the type of the first cell;
setting a master information block (MIB) of the first cell based on the type of the first cell;
setting physical broadcast channel (PBCH) information of the first cell based on the type of the first cell;
setting an MIB and PBCH information of the first cell based on the type of the first cell;
setting a check method of the PBCH information of the first cell based on the type of the first cell;
setting a scheduling command for the first transmission sent from the first cell and/or a scheduling content of the scheduling command based on the type of the first cell;
setting an indication content of an MAC CE corresponding to secondary cell activation/deactivation based on the type of the first cell; or
determining one or more of first information, second information, or third information to be sent based on the type of the first cell. For example, the third information may also be a component of the first information and/or the second information.

The check method may refer to a method of calculating CRC in Downlink Physical-Layer processing. The method of calculating the CRC may include: *g*_{CRC24A}(*D*), *g*_{CRC24B}(*D*), *g*_{CRC24C}(*D*), *g*_{CRC16}(*D*), *g*_{CRC11}(*D*), or *g*_{CRC11}(D). The method of calculating the CRC may also be referred to as a check algorithm.

In some embodiments, the term "setting" by the network device may also be understood as "determining".

In some embodiments, determining whether to send configuration information of the second transmission based on the type of the first cell includes at least one of: determining not to send the configuration information of the second transmission, in which the first cell is the first-type cell; or determining to send the configuration information of the second transmission, in which the first cell is the second-type cell. For example, in a case where the first cell is the first-type cell and it is determined not to send the configuration information of the second transmission, the configuration information of the second transmission is not sent from the first cell or other cells to the sending of the first transmission from the first cell.

The configuration information of the second transmission for the first cell may be sent from the first cell and/or the third cell. For example, the third cell may be a first-type cell.

In some embodiments, the third cell is a primary cell of the terminal and the first cell is a secondary cell of the terminal; or the third cell is a secondary cell of the terminal and the first cell is a primary cell of the terminal.

The first cell is the first-type cell and the cell configuration of the first cell includes a first indication field; or the first cell is the second-type cell and cell configuration of the first cell does not include a first indication field; or an indication content of a second indication field included in the cell configuration of the first cell corresponds to the type of the first cell.

In some embodiments, the cell configuration of the first cell may be any cell configuration related to a feature or attribute of the first cell.

In some embodiments, the first cell is a serving cell of the terminal, and the cell configuration may include but is not limited to a serving cell configuration (servingCellConfig).

In some embodiments, the first cell is a secondary cell, and the cell configuration may include but is not limited to a secondary cell configuration (ScellConfig).

In some embodiments, the information content of the MIB of the first cell is determined based on the type of the first cell, and the information content may be used by the terminal to determine a transmission mechanism of the SSB and/or SIB for the first cell.

In some embodiments, the PBCH information of the first cell is determined based on the type of the first cell, and the PBCH information may be used by the terminal to determine the transmission mechanism of the SIB for the first cell. For example, the SIB may at least be SIB1.

In some embodiments, based on the type of the first cell, value(s) of one or more indication bits, such as spare bit, synchronization signal/physical broadcast channel (PBCH) block (SSB) - subcarrier offset (ssb-SubcarrierOffset), demodulation reference signal - type A - position (DRMS-typeA-Position), physical downlink control channel - system information block 1 configuration (pdcch-ConfigSIB 1), cell barred (cellBarred), intra-frequency reselection (intraFreqReselections), common subcarrier spacing (subcarrierSpacingCommon), in the MIB of the first cell is/are set.

In some embodiments, a value of a spare bit in the MIB of the first cell is determined based on the type of the first cell. In some embodiments, a value of an ssb-SubcarrierOffset indication bit in the MIB of the first cell is determined based on the type of the first cell. In some embodiments, a value of system frame number (SFN) indication bit(s) in the MIB of the first cell is determined based on the type of the first cell. In some embodiments, a value of dmrs-TypeA-Position indication bit(s) in the MIB of the first cell is determined based on the type of the first cell. In some embodiments, a value of cellBarred indication bit(s) in the MIB of the first cell is determined based on the type of the first cell. In some embodiments, a value of subcarrierSpacingCommon indication bit(s) in the MIB of the first cell is determined based on the type of the first cell. A value of intraFreqReselections indication bit(s) in the MIB of the first cell is determined based on the type of the first cell. A value of pdcch-ConfigSIB1 indication bit(s) in the MIB of the first cell is determined based on the type of the first cell. A value of a cellBarred indication bit(s) in the MIB of the first cell is determined based on the type of the first cell.

In some embodiments, the value of at least one of the indication bits in the MIB of the first cell is within a first set, indicating that the first cell is the first-type cell. In some embodiments, the value of at least one of the indication bits in the MIB of the first cell is within a second set, indicating that the first cell is the second-type cell.

In some embodiments, the ssb-SubcarrierOffset indication bit in the MIB includes a last bit of ssb-SubcarrierOffset indication bits in the MIB.

In some embodiments, the value of the ssb-SubcarrierOffset indication bit in the MIB of the first cell is within a first set, indicating that the first cell is the first-type cell. In some embodiments, the value of the ssb-SubcarrierOffset indication bit in the MIB of the first cell is within a second set, indicating that the first cell is the second-type cell.

In some embodiments, the value of the pdcch-ConfigSIB1 indication bit(s) in the MIB of the first cell is within a first set, indicating that the first cell is the first-type cell. In some embodiments, the value of the pdcch-ConfigSIB1 indication bit(s) in the MIB of the first cell is within a second set, indicating that the first cell is the second-type cell.

In some embodiments, values in the first set and the second set may be configured by the network device or predefined by protocol agreement, or the like.

As an example, values in the first set are even numbers, and values in the second set are odd numbers. As another example, values in the first set are odd numbers, and values in the second set are even numbers. As still another example, a value range of the first set is different from a value range of the second set. As yet another example, values in the first set may all be less than values in the second set, or values in the first set may all be greater than values in the second set.

For example, values in the second set correspond to reserved states, and values in the first set correspond to states other than the reserved states. As an example, taking the determination of the CORESET#0 corresponding to the SIB1 based on Table 2 as an example, the first set corresponds to indexes 0, 1, 2, ..., 13 in Table 2, and the second set corresponds to indexes 14, 15 in Table 2.

In a case where a value of the pdcch-ConfigSIB1 indication bits is index = 14 in the table, the cell corresponding to the SSB carrying the MIB carrying pdcch-ConfigSIB1 belongs to the second-type cell.

Table 2 shows multiple sets of CORESET resource blocks, slots, and symbols set in the Type0-PDCCH search space for frequency bands with a minimum channel bandwidth of 5mHz or 10mHz when the SCS of SSB and PDCCH is {15, 30} kHz.

**Table 2**

| index | SSB a and CORESET multiplexing pattern | number of RBs ${N}_{RB}^{CORESET}$ | number of symbols ${N}_{symb}^{CORESET}$ symb | offset value of RB |
|---|---|---|---|---|
| 0 | 1 | 24 | 2 | 5 |
| 1 | 1 | 24 | 2 | 6 |
| 2 | 1 | 24 | 2 | 7 |
| 3 | 1 | 24 | 2 | 8 |
| 4 | 1 | 24 | 3 | 5 |
| 5 | 1 | 24 | 3 | 6 |
| 6 | 1 | 24 | 3 | 7 |
| 7 | 1 | 24 | 3 | 8 |
| 8 | 1 | 48 | 1 | 18 |
| 9 | 1 | 48 | 1 | 20 |
| 10 | 1 | 48 | 2 | 18 |
| 11 | 1 | 48 | 2 | 20 |
| 12 | 1 | 48 | 3 | 18 |
| 13 | 1 | 48 | 3 | 20 |
| 14 | reserved | | | |
| 15 | reserved | | | |

In some embodiments, determining physical broadcast channel (PBCH) information of the first cell based on the type of the first cell includes: determining a value of a reserved bit in the PBCH information based on the type of the first cell.

In some embodiments, the reserved bit in the PBCH information includes: the reserved bit being a first bit, in which *L̅ₘₐₓ* indicated by the PBCH information is a first value.

In some embodiments, *L̅ₘₐₓ* equals a maximum number of candidate synchronization signal/physical broadcast channel (PBCH) blocks (SSBs) within a half-frame.

In some embodiments, *L̅ₘₐₓ* equals the maximum number of SSBs contained in an SSB burst.

In some embodiments, the reserved bit in the PBCH information includes: the reserved bit being a first bit and/or a third bit, in which *L̅ₘₐₓ* indicated by the PBCH information is a second value.

In some embodiments, the first value may be 10.

In some embodiments, the reserved bit in the PBCH information includes: the reserved bit being a second bit and/or a third bit, in which *L̅ₘₐₓ* indicated by the PBCH information is a second value.

In some embodiments, the second value may be less than or equal to 8. In some embodiments, the first bit may include but is not limited to *a̅*_{*A̅*+6}.

In some embodiments, the second bit may be *a̅*_{*A̅*+7}. The PBCH information may be a component of an SSB.

In some embodiments, the reserved bit of PBCH may be determined based on Table 3.

**Table 3**

| SSB patter | Frequency | SSB type | Lₘₐₓ | indication bits of SSB index and *i*_{SSB} | Kssb | reserved bit |
|---|---|---|---|---|---|---|
| case A (15 kHz) | <=3GHz (not shared) | A | 4 | *i*_{SSB} (2 bits) | *a̅*_{*A̅*+5} | *a̅*_{*A̅*+6}, *a̅*_{*A̅*+7} |
| | >3GHz (not shared) | A | 8 | *i*_{SSB} (3 bits) | *a̅*_{*A̅*+5} | *a̅*_{*A̅*+6}, *a̅*_{*A̅*+7} |
| | shared | A | 10 | *a̅*_{*A̅*+7} + *i*_{SSB} (3 bits) | *a̅*_{*A̅*+5} | *a̅*_{*A̅*+6} |
| case B (30 kHz) | <=3 GHz | A | 4 | *i*_{SSB} (2 bits) | *a̅*_{*A̅*+5} | *a̅*_{*A̅*+6}, *a̅*_{*A̅*+7} |
| | >3GHz | A | 8 | *i*_{SSB} (3 bits) | *a̅*_{*A̅*+5} | *a̅*_{*A̅*+6}, *a̅*_{*A̅*+7} |
| case C (30 kHz) | <=3GHz (TDD) | A | 4 | *i*_{SSB} (2 bits) | *a̅*_{*A̅*+5} | *a̅*_{*A̅*+6}, *a̅*_{*A̅*+7} |
| | >3GHz(TDD) | A | 8 | *i*_{SSB} (3 bits) | *a̅*_{*A̅*+5} | *a̅*_{*A̅*+6}, *a̅*_{*A̅*+7} |
| | | A | 20 | *a̅*_{*A̅*+6} , *a̅*_{*A̅*+7} ,*i*_{SSB} (3 bits) | *a̅*_{*A̅*+5} | none |
| case D (120 kHz) | FR2 | B | 64 | *a̅*_{*A̅*+5} , *a̅*_{*A̅*+6} , *a̅*_{*A̅*+7} , *i*_{SSB} (3 bits) | none | none |
| case E (240 kHz) | FR2-1 | B | 64 | *a̅*_{*A̅*+5} , *a̅*_{*A̅*+6} , *a̅*_{*A̅*+7}, *i*_{SSB} (3 bits) | none | None |
| case F (480 kHz) | FR2-2 | B | 64 | *a̅*_{*A̅*+5} , *a̅*_{*A̅*+6} , *a̅*_{*A̅*+7}, *i*_{SSB} (3 bits) | none | none |
| case G (960 kHz) | FR2-2 | B | 64 | *a̅*_{*A̅*+5} , *a̅*_{*A̅*+6} , *a̅*_{*A̅*+7}, *i*_{SSB} (3 bits) | none | none |

In Table 2, different cases correspond to different subcarrier spacings. For example, Case A corresponds to a subcarrier spacing of 15 kHz, Case B corresponds to a subcarrier spacing of 30 kHz. *i*_{SSB} is used to generate an initialization parameter for the DMRS corresponding to the PBCH.

In some embodiments, the reserved bit of the PBCH is *a̅*_{*A̅*+6}. In some embodiments, for FR1, the terminal determines the type of the cell based on an indication of the reserved bit *a̅*_{*A̅*+6} or *a̅*_{*A̅*+7} of the PBCH information. In some embodiments, for FR2, the terminal determines the type of the cell based on an indication of the spared bit of the MIB. In some embodiments, in a case where the bit value is 0, the terminal determines that the corresponding cell is the first-type cell. In some embodiments, in a case where the bit value is 1, the terminal determines that the corresponding cell is the first-type cell.

In some embodiments, determining the master information block (MIB) and the physical broadcast channel (PBCH) information of the first cell based on the type of the first cell includes: determining the value of the subcarrier offset (Kssb) indicated by the MIB and/or the PBCH based on the type of the first cell. For example, the type of the first cell corresponds to the value of Kssb. In some embodiments, a value of Kssb is within a third set, indicating that the first cell is the first-type cell; or a value of Kssb is within a fourth set, indicating that the first cell is the second-type cell. In some embodiments, candidate values of Kssb included in the third set may be different from candidate values of Kssb included in the fourth set. As an example, the third set may include even candidate values of Kssb, and the fourth set may include odd candidate values of Kssb. As another example, the third set may include odd candidate values of Kssb, and the fourth set may include even candidate values of Kssb. As still another example, candidate values of Kssb included in the third set are all greater than candidate values of Kssb included in the fourth set. As yet another example, candidate values of Kssb included in the fourth set are all greater than candidate values of Kssb included in the third set. In some embodiments, candidate values of Kssb included in the third set and the fourth set are predefined, for example, predefined by protocol. In other embodiments, candidate values of Kssb included in the third set and the fourth set are configured by the network device. In other embodiments, candidate values of Kssb included in the third set and the fourth set are determined based on a frequency range (FR) used by the first cell.

In some embodiments, in a case where the frequency range used by the first cell is FRa, Kssb may be jointly indicated by the PBCH information and the MIB. For example, one bit of PBCH information and the ssb-SubcarrierOffset indication bits in MIB are used to jointly indicate the ssb-SubcarrierOffset. In some embodiments, in a case where the frequency range used by the first cell is FRb, Kssb may be indicated solely by the ssb-SubcarrierOffset indication bits in MIB. In some embodiments, FRa and FRb are different. For example, FRa is within Frequency Range 1 (FR1), and FRb is within Frequency Range 2 (FR2).

In some embodiments, determining a check method of the physical broadcast channel (PBCH) information of the first cell based on the type of the first cell includes at least one of: determining that the PBCH information of the first cell has a first check code, in which the first cell is the first-type cell; or determining that the PBCH information of the first cell has a second check code, in which the first cell is the second-type cell. In some embodiments, different check methods may correspond to different check sequences, different check algorithms, or the like. Thus, the type of the first cell may be implicitly indicated through different check methods of the PBCH information.

In some embodiments, determining the type of the first cell based on the check method of the PBCH information of the first cell includes at least one of: determining that the first cell is the first-type cell, in which the first check code used by the PBCH information of the first cell is generated based on a first check algorithm; or determining that the first cell is the second-type cell, in which the second check code used by the PBCH information of the first cell is generated based on a second check algorithm. In some embodiments, the first check algorithm and the second check algorithm may be different cyclic redundancy check (CRC) algorithms. For example, the check method may refer to the method of calculating the CRC in Downlink Physical-Layer processing. The method of calculating the CRC may include: *g*_{CRC24A}(*D*), *g*_{CRC24B}(*D*), *g*_{CRC24C}(*D*), *g*_{CRC16}(*D*), *g*_{CRC11}(*D*), *g*_{CRC11}(*D*), or the like. The method of calculating the CRC may also be referred to as a check algorithm. For example, the first check algorithm may be *g*_{CRC24C}(*D*). For example, the second check algorithm may be *g*_{CRC24A}(*D*) or *g*_{CRC24B}(*D*). In some embodiments, the first check algorithm is the CRC check algorithm for the PBCH information in the related art. In some embodiments, the second check algorithm is different from the first check algorithm.

The above is only an example of the check method of the PBCH information of the first cell, and the specific implementation is not limited to the above example.

In some embodiments, setting the scheduling command for the first transmission sent from the first cell and/or the scheduling content of the scheduling command based on the type of the first cell includes at least one of: not sending the scheduling command for N times, in which the first cell is the second-type cell and N is a positive integer; or not sending the scheduling command for scheduling the first transmission for X times and X is a positive integer, in which the first cell is the second-type cell. For example, in a case where the first cell is the second-type cell, the scheduling command is not sent for N consecutive times at reception occasions of the scheduling command for the first transmission, where N is a positive integer. For example, in a case where the first cell is the second-type cell, the scheduling command that schedules the first transmission is not sent for X consecutive times at reception occasions of the scheduling command for the first transmission. In some embodiments, the scheduling command received by the first cell at reception occasions at which the scheduling command is capable of scheduling the first transmission does not schedule the first transmission for X times, in which the first cell is the second-type cell and X is a positive integer. For example, the scheduling command for the SIB may be downlink control information (DCI). In some embodiments, in a case where the first cell is the second-type cell, no DCI is sent from the first cell for N consecutive times at monitoring occasions of the DCI at which it is capable of scheduling the SIB, or no DCI that schedules the SIB is sent for X consecutive times.

In some embodiments, N and X may be any positive integer, which may be configured by the network or predefined. In some embodiments, N and X may be equal or unequal.

In some embodiments, the first cell is the second-type cell, and no scheduling command is sent from the first cell for N times within a first time window. In some embodiments, the first cell is the second-type cell, and no scheduling command for scheduling the first transmission is sent for X times within a first time window. The first time window may be configured by network signaling or determined by a predefined manner. The predetermined manner includes but is not limited to agreement through a protocol. For example, the first time window starts from a period where the terminal currently blindly detects the DCI for scheduling the first transmission. For example, the first time window starts from the period for the terminal to currently receive, based on a configuration, the first transmission.

In some embodiments, the first cell is the first-type cell, and it is determined to send the first transmission based on the configuration of the first transmission. In some embodiments, the first cell is the second-type cell, and it is determined to send the first transmission on demand. As an example, the first cell is the second-type cell, it is determined to send the first transmission based on the demand of the first cell itself. As another example, the first cell is the second-type cell, it is determined to send the first transmission based on triggering by a second transmission sent by the terminal. In some embodiments, the first cell is the second-type cell, it is determined not to send the first transmission.

In some embodiments, the network device determining whether to send the configuration information of the second transmission based on the type of the first cell may include at least one of: determining not to send configuration information of the second transmission for the first cell, in which the first cell is the first-type cell; determining to send configuration information of the second transmission for the first cell, in which the first cell is the second-type cell from which the first transmission is sent based on an on-demand mode; determining not to send configuration information of the second transmission for the first cell , in which the first cell is the second-type cell from which the first transmission is not sent.

In some embodiments, the second transmission may be an uplink transmission that triggers the sending of the first transmission from the first cell. In some embodiments, the second transmission may be a wake-up signal (WUS).

In some embodiments, determining to send first information, second information, and/or third information based on the type of the first cell may include at least one of: determining to send first information that explicitly or implicitly indicates that the first cell is the first-type cell, in which the first cell is the first-type cell; determining not to send the first information, in which the first cell is the first-type cell; determining to send first information that explicitly or implicitly indicates that the first cell is the second-type cell, in which the first cell is the second-type cell; determining to send first information that explicitly or implicitly indicates that the first cell is the second-type cell from which the first transmission is sent based on an on-demand mechanism, in which the first cell is the second-type cell from which the first transmission is sent based on an on-demand mode; determining not to send the first information, in which the first cell is the second-type cell from which the first transmission is not sent; determining to send first information that explicitly or implicitly indicates that the first cell is the second-type cell from which the first transmission is not sent, in which the first cell is the second-type cell from which the first transmission is not sent; determining to send second information, in which the first cell is the second-type cell; determining to send second information, in which the first cell is the second-type cell from which the first transmission is sent based on an on-demand mechanism; or determining to send third information, in which the first cell is the second-type cell.

In some embodiments, a value of the first parameter indicated by the third information is at least used to determine frequency-domain positions of common resource blocks (CRBs) of the second-type cell. Furthermore, the frequency-domain positions of the CRBs may be used to determine the frequency-domain position of CORESET#0.

In some embodiments, the value of the first parameter indicated by the third information may be further used to determine whether a corresponding second-type cell is a cell from which the first transmission is sent based on an on-demand mechanism or a cell from which the first transmission is not sent. For example, in a case where the value of the first parameter is greater than 24, it may be considered that the corresponding second-type cell is a cell from which the first cell is not sent; otherwise, it may be considered that the corresponding second-type type cell is a cell from which the first transmission is sent based on an on-demand mechanism.

In some embodiments, in a case where the first cell is the first-type cell, it is determined not to send the third information. In some embodiments, in a case where the first cell is the second-type cell from which the first transmission is sent based on an on-demand mechanism, it is determined to send the third information. In some embodiments, in a case where the first cell is the second-type cell from which the first transmission is not sent, it is determined not to send the third information.

In some embodiments, the third information may be included in the configuration information of the second transmission. Or the third information and the configuration information of the second transmission are carried in the same IE or the same message. In some embodiments, the configuration information of the second transmission may include but is not limited to configuration information of the WUS. In some embodiments, the configuration information of the WUS may be used to determine a resource position, a sequence configuration, a transmission bandwidth, or others for the terminal to send the WUS.

In some embodiments, it is determined whether to send the third information based on the second information. In some embodiments, it is determined whether to send the third information based on a value range of Kssb indicated by the second information. In some embodiments, for a cell using FR1, in a case where the value of Kssb indicated by the second information is greater than 23, it is determined to send the third information; otherwise, it is determined not to send the third information. In some embodiments, for a cell using FR2, in a case where the value of Kssb indicated by the second information is greater than 11, it is determined to send the third information; otherwise, it is determined not to send the third information.

At S2102, the terminal determines the type of the first cell.

In some embodiments, terminals may be divided into two types, namely first-type terminals and second-type terminals.

For example, the first-type terminal may be a terminal that supports the NES technology. The second-type terminal may be a terminal that does not support the NES technology. Terminals that do not support the NES technology may include but are not limited to legacy terminals.

In some embodiments, S2102 may include: determining determines the type of the first cell by the first-type terminal.

In some embodiments, the second-type terminal may skip the step of determining the type of the first cell.

In some embodiments, the second-type terminal may perform S2102, and upon determining that the first cell is a second-type terminal, it may re-camp on a first-type cell through a cell reselection and/or a cell handover.

In some embodiments, the first cell is the first-type cell or the second-type cell. For the related description of the first-type cell and the second-type cell, reference may be made to the related description of S2100.

In some embodiments, the manner in which the terminal determines the type of the first cell may be divided into two major categories: the first category: determining the type of the first cell based on a predefined manner; the second category: the terminal determines the type of the first cell based on downlink transmission from the network side.

In some embodiments, the type of the first cell is determined based on the predefined manner such as an agreement through the protocol. In detail, the terminal may determine the type of the first cell based on cell attributes of the first cell and attributes of various types of cells agreed by the protocol.

In some embodiments, cell attributes may include: a cell state, a cell transmission mode, and/or a sent downlink transmission of the cell.

The cell state may include: whether the cell is in an energy-saving state. In a case where the cell is in an energy-saving state, the first cell may be the second-type cell. In a case where the cell is not in an energy-saving state, the first cell may be the first-type cell. The energy-saving state may include a state of not sending the SSB and/or the SIB or a state of sending the SSB and/or the SIB on demand.

In some embodiments, in a case where the SSB and/or the SIB is sent periodically from the first cell, the first cell is the first-type cell; otherwise, the first cell may be the second-type cell. In some embodiments, in a case where the SSB and/or the SIB is send from the first cell on demand, the first cell is the second-type cell; otherwise, the first cell may be the first-type cell. In other embodiments, the network device determines the type of the first cell based on the frequency range used by the first cell, e.g., the band to which it belongs. In this case, the terminal may determine whether the first cell is the first-type cell or the second-type cell based on a predefined manner without receiving information from the network side. As an example, the terminal determines the type of the first cell based on one or more downlink transmissions sent by the network device in S2101. As another example, the first-type terminal determines the type of the first cell based on one or more downlink transmissions sent by the network device in S2101.

In embodiments of the disclosure, there are various ways to determine the type of the first cell based on downlink transmission from the network side. Several optional ways are provided below.

In some embodiments, the type of the first cell is determined based on the configuration information of a second transmission. For example, the type of the first cell may be determined based on the purpose of the configuration information of the second transmission.

In some embodiments, the second transmission is used to trigger the sending of the first transmission. Since the second transmission is used to trigger the sending of the first transmission from the second-type cell, in a case where the terminal receives the configuration information of the second transmission for the first cell, the terminal may be implicitly indicated by the network side that the first cell is the second-type cell. For example, the terminal may receive the configuration information of the second transmission from the first cell or a neighboring cell of the first cell. In some embodiments, the type of the first cell is determined based on whether the configuration information of the second transmission is used to trigger the first transmission of the first cell. For example, in a case where the second transmission configured by the configuration information has no effect on the first cell but on another cell, it may be determined that the first cell is the first-type cell. For example, the first cell is cell A and the second transmission is a WUS. In a case where the terminal receives the configuration information of the WUS for cell A and may send the WUS based on the configuration information of the WUS, and the WUS may trigger the sending of the SSB and/or the SIB from the first cell, the terminal may confirm that the first cell is the second-type cell; otherwise, the first cell may be the first-type cell. In some embodiments, in a case where the configuration information is used for the terminal to send the second transmission, it indicates that the first cell is the second-type cell. Or in a case where the configuration information is not used for the terminal to send the second transmission, it indicates that the first cell is the first-type cell. That is, the type of the first cell may be distinguished based on whether a cell is configured with the configuration information of the second transmission.

In some embodiments, in a case where the terminal receives the configuration information and determines that the configuration information is used to send the second transmission that triggers the sending of the first transmission from the first cell, the terminal determines that the first cell is the second-type cell.

In some embodiments, in a case where the terminal does not receive any configuration information corresponding to the second transmission for triggering the sending of the first transmission from the first cell, and/or the terminal may receive the first transmission based on the corresponding configuration information of the first transmission, the terminal determines that the first cell is the first-type cell. In some embodiments, the second transmission may be referred to as a wake-up signal (WUS). The configuration information of the second transmission may include configuration information of the WUS.

In some embodiments, in a case where the configuration information is used to send a WUS that triggers the sending of the first transmission from the first cell, it indicates that the first cell is the second-type cell. In a case where the configuration information is not used to send a WUS that triggers the sending of the first transmission from the first cell, it indicates that the first cell is the first-type cell. That is, the type of the first cell may be distinguished based on the configuration information of the WUS.

In some embodiments, in a case where the terminal receives the configuration information and determines that the configuration information is used to send a WUS that triggers the sending of the first transmission from the first cell, the terminal determines that the first cell is the second-type cell.

In some embodiments, in a case where the terminal does not receive any configuration information corresponding to a WUS for triggering the sending of the first transmission from the first cell, and/or the terminal may receive the first transmission based on the corresponding configuration information of the first transmission, the terminal determines that the first cell is the first-type cell.

In a case where any configuration information of the second transmission does not correspond to the first cell, i.e., any second transmission is not used to trigger the sending of the first transmission from the first cell, it indicates that the first cell is the first-type cell rather than the second-type cell.

The cell in which the second transmission is received may be a second-type cell or a cell associated with the second-type cell. For example, a cell associated with the second-type cell may include: a neighboring cell of the second-type cell, a primary cell associated with the second-type cell, or a secondary cell associated with the second-type cell.

In some embodiments, the cell in which the second transmission is received may be a first-type cell. After receiving the second transmission, the first-type cell notifies the second-type cell of the trigger information corresponding to the second transmission through information exchange.

In some embodiments, the terminal determines a cell identifier (ID) corresponding to the first cell based on the SSB of the first cell, and compares it with a cell ID to which the configuration information of the second transmission applies, to determine whether the configuration information of the second transmission corresponds to the first cell. In a case where the configuration information of the second transmission corresponds to the first cell, it may be confirmed that the first cell is the second-type cell; otherwise, it may be determined that the first cell is the first-type cell.

In some embodiments, the configuration information of the second transmission is carried in a cell configuration of the first cell, or the configuration information of the second transmission is carried in a cell configuration of the third cell. The configuration information of the second transmission may be carried in the cell configuration of the first cell itself or in the cell configuration of another cell.

In some embodiments, the third cell is a primary cell of the terminal and the first cell is a secondary cell of the terminal. In some embodiments, the third cell is a secondary cell of the terminal and the first cell is a primary cell of the terminal. For example, the third cell may be the primary cell of the terminal. In the cell configuration of the primary cell, the configuration information of the second transmissions of one or more secondary cells of the terminal may be carried. Thus, the corresponding secondary cells are second-type cells.

In some embodiments, the configuration information of the second transmission is carried in the cell configuration of the first cell. As an example, in a case where the first cell is a secondary cell, the cell configuration may include but is not limited to a secondary cell configuration (ScellConfig). As another example, in a case where the first cell is a serving cell, the cell configuration may include but is not limited to a serving cell configuration (servingCellConfig).

In some embodiments, the type of the first cell is determined based on the cell configuration of the first cell. In some embodiments, the cell configuration of the first cell may explicitly or implicitly indicate the type of the first cell. One or more explicit indication bits are carried in the cell configuration of the first cell to indicate the type of the first cell. In other embodiments, whether the cell configuration carries a configuration of the second transmission is used to implicitly indicate whether the first cell is the second-type cell. In some embodiments, a state of whether the cell configuration of the first cell includes a first indication field is used to implicitly indicate the type of the first cell. In some embodiments, in a case where the cell configuration of the first cell includes the first indication field, it is determined that the first cell is the first-type cell, and in a case where the cell configuration of the first cell does not include the first indication field, it is determined that the first cell is the second-type cell. In other embodiments, in a case where the cell configuration of the first cell includes the first indication field, it is determined that the first cell is the second-type cell, and in a case where the cell configuration of the first cell does not include the first indication field, it is determined that the first cell is the first-type cell.

In some embodiments, based on an indication content of a second indication field included in the cell configuration of the first cell, it is determined that the first cell is the first-type cell or the second-type cell.

For example, a second indication field is added to the cell configuration of the first cell. Different indication contents of the second indication field correspond to whether the first cell is the first-type cell or the second-type cell.

In some embodiments, the first indication field has a first value, indicating that the first cell is the first-type cell. The first indication field has a second value, indicating that the first cell is the second-type cell.

In some embodiments, the cell configuration includes: a secondary cell configuration (ScellConfig).

In some embodiments, the type of the first cell is determined based on a master information block (MIB) of the first cell.

In some embodiments, the type of the first cell is determined based on value(s) of one or more indication bits in the MIB of the first cell, such as spare bit, ssb-SubcarrierOffset, dmrs-TypeA-Position, pdcch-ConfigSIB 1, cellBarred, intraFreqReselections, subcarrierSpacingCommon.

In some embodiments, the MIB may include one or more indication bits. One way is to reuse indication bits indicating other information to indicate the type of the first cell. Another way is to use the spare bit in the MIB to indicate the type of the first cell.

In some embodiments, the type of the first cell is determined based on the value of the spare bit in the MIB of the first cell. For example, the spare bit may be any bit in the MIB that has no specific indication meaning.

In some embodiments, the type of the first cell is determined based on a value of an ssb-SubcarrierOffset indication bit in the MIB of the first cell.

For example, while indicating a value of ssb-SubcarrierOffset, the ssb-SubcarrierOffset indication bits in the MIB also correspond to the type of the first cell. Thus, upon receiving such MIB, the terminal may know the value of ssb-SubcarrierOffset and also know the type of the first cell based on the ssb-SubcarrierOffset indication bits.

In some embodiments, the type of the first cell is determined based on a value of system frame number (SFN) indication bit(s) in the MIB of the first cell.

For example, the type of the first cell may be indicated by a correspondence between an SFN indicated by the MIB and the type of the first cell.

In some embodiments, the type of the first cell is determined based on a value of dmrs-TypeA-Position indication bit(s) in the MIB of the first cell.

For example, a correspondence between the value of the dmrs-TypeA-Position indication bit(s) and the type of the first cell may be established to indicate the type of the first cell.

In some embodiments, the type of the first cell is determined based on a value of cellBarred indication bit(s) in the MIB of the first cell. For example, the type of the first cell may be directly or indirectly indicated by the cellBarred indication bit(s).

In some embodiments, the type of the first cell is determined based on a value of subcarrierSpacingCommon indication bit(s) in the MIB of the first cell. For example, the type of the first cell may be directly or indirectly indicated by the subcarrierSpacingCommon indication bit(s).

In some embodiments, in a case where the value of at least one of the indication bits in the MIB of the first cell is within a first set, it indicates that the first cell is the first-type cell. In some embodiments, in a case where the value of at least one of the indication bits in the MIB of the first cell is within a second set, it indicates that the first cell is the second-type cell. For example, determining the type of the first cell based on the value of the ssb-SubcarrierOffset indication bit in the MIB of the first cell includes: in a case where the value of the ssb-SubcarrierOffset indication bit in the MIB of the first cell is within a first set, determining that the first cell is the first-type cell; and in a case when the value of the ssb-SubcarrierOffset indication bit in the MIB of the first cell is within a second set, determining that the first cell is the second-type cell.

In some embodiments, the first set and the second set may each include one or more ssb-SubcarrierOffset candidate values. The first set corresponds to the first-type cell, and the second set corresponds to the second-type cell. Thus, the terminal may determine the type of the first cell based on the set in which the bit value indicated by the ssb-SubcarrierOffset indication bit(s) falls.

In some embodiments, the values in the first set and the second set may be predefined by a network configuration or a protocol agreement, etc. In some embodiments, the values in the first set and the second set may be configured by the network device or predefined by the protocol agreement, etc. As an example, the values in the first set are even numbers, and the values in the second set are odd numbers. As another example, the values in the first set are odd numbers, and the values in the second set are even numbers. As still another example, a value range of the first set is different from a value range of the second set. As yet another example, the values in the first set may all be less than the values in the second set, or the values in the first set may all be greater than the values in the second set. As yet another example, the values in the second set correspond to reserved states, and the values in the first set correspond to states other than the reserved states. For example, taking a case that the determination of CORESET#0 corresponding to SIB1 is based on Table 2 as an example, the first set corresponds to indexes 0, 1, 2, ..., 13 in Table 2, and the second set corresponds to indexes 14, 15 in Table 2. In a case where a value of pdcch-ConfigSIB1 indication bits is index = 14 in the table, then the cell corresponding to the SSB carrying the MIB with the pdcch-ConfigSIB1 belongs to the second-type cell.

In some embodiments, the value of the ssb-SubcarrierOffset indication bit in the MIB includes the last bit of ssb-SubcarrierOffset indication bits in the MIB. In some embodiments, the type of the first cell is determined based on the value of the pdcch-ConfigSIB1 indication bit(s) in the MIB of the first cell. In some embodiments, the type of the first cell is determined based on the value of the cellBarred indication bit(s) in the MIB of the first cell. In some embodiments: the type of the first cell is determined based on the value of the intraFreqReselections indication bit(s) in the MIB of the first cell. For example, the type of the first cell may be directly or indirectly indicated by the intraFreqReselections indication bit(s).

In some embodiments, the type of the first cell is determined based on physical broadcast channel (PBCH) information of the first cell. In some embodiments, the type of the first cell is determined based on a reserved bit in the PBCH information of the first cell. In some embodiments, the reserved bit is a first bit, in which *L̅ₘₐₓ* indicated by the PBCH information is a first value. In some embodiments, *L̅ₘₐₓ* equals a maximum number of candidate SSBs within a half-frame. In some embodiments, *L̅ₘₐₓ* equals the maximum number of SSBs contained in an SSB burst.

In some embodiments, the first value may be 10. In some embodiments, the reserved bit is a second bit and/or a third bit, in which *L̅ₘₐₓ* indicated by the PBCH information is a second value. In some embodiments, the second value may be less than or equal to 8. In some embodiments, the first bit may include but is not limited to *a̅*_{*A̅*+6}. In some embodiments, the second bit may be a̅_{A̅+7}. In some embodiments, the cell may broadcast the SSB, and the SSB may include a primary synchronization signal, a secondary synchronization signal, and the PBCH information. The PBCH information may be any information carried on the PBCH. In embodiments of the disclosure, the first cell may indicate the type of the first cell through the PBCH information.

In some embodiments, the type of the cell is determined based on a value of Kssb. In a case where Kssb belongs to a first set, the cell associated with the SSB is the first-type cell. In a case where Kssb belongs to a second set, the cell associated with the SSB is the second-type cell. The first set may be determined based on signaling or a predefined manner. In some embodiments, in the FR1 scenario, the second set is Kssb values greater than or equal to 24. In the FR2 scenario, the second set is Kssb values greater than or equal to 12. In some embodiments, in the FR1 scenario, the first set is Kssb values less than 24. In the FR2 scenario, the second set is Kssb values less than 12. In some embodiments, the second set is Kssb values that are even numbers, and the first set is Kssb values that are odd numbers. In some embodiments, the second set is Kssb values that are odd numbers, and the first set is Kssb values that are even numbers. In some embodiments, in the FR1 scenario, the first set is Kssb values that are even numbers less than 24. In the FR2 scenario, the second set is Kssb values that are even numbers less than 12. In some embodiments, in the FR1 scenario, the first set is Kssb values that are odd numbers less than 24. In the FR2 scenario, the second set is Kssb values that are odd numbers less than 12. In some embodiments, in the FR1 scenario, the first set is Kssb values that are odd numbers less than 24. In the FR2 scenario, the second set is Kssb values that are odd numbers less than 12. In some embodiments, in the FR1 scenario, the first set is Kssb values that are even numbers less than 24, In the FR2 scenario, the second set is Kssb values that are even numbers less than 12. In some embodiments, in a case where the first cell belongs to the second-type cell, the SSB of the corresponding cell may be not associated with CORESET#0 or remaining minimum system information (RMSI) or SIB1, i.e., in the FR1 scenario, the corresponding Kssb is greater than or equal to 24, and in the FR2 scenario, Kssb is greater than or equal to 12. In some embodiments, in the FR1 scenario, the second set is a Kssb value equal to 30, and in the FR2 scenario, the second set is a Kssb value equal to 14. In some embodiments, in the FR1 scenario, the first set is Kssb values not equal to 30, and in the FR2 scenario, the second set is Kssb values not equal to 14. In some embodiments, the terminal determines Kssb based on the network signaling, and determines the subcarrier offset *k*_{SSB-offset} based on Kssb. In some embodiments, the network signaling may be MIB or may be MIB and PBCH information. In some embodiments, *k*_{SSB-offset} equals an offset between a lowest subcarrier of SSB and a lowest subcarrier of N_{CRB}, where N_{CRB} is a lowest CRB that has a frequency-domain intersection with the CRB. In some embodiments, in a case where Kssb is less than a specified value, e.g., less than 24 for FR1 or less than 12 for FR2, it may be considered that the subcarrier offset *k*_{SSB-offset} equals Kssb, *k*_{SSB-offset}=Kssb. In some embodiments, in a case where Kssb is greater than or equal to a specified value, the subcarrier offset *k*_{SSB-offset} may be determined based on Kssb. For example, the specified value may include but is not limited to any value greater than or equal to 24, e.g., 30. The network signaling may include but is not limited to: the MIB, the PBCH information, the SIB, or another signaling sent by the network side. For example, the specified value may include but is not limited to any value greater than or equal to 12, e.g., 14. The network signaling may include but is not limited to the MIB, the PBCH information, the SIB, or another signaling sent by the network side. For example, in a case where Kssb is greater than or equal to a specified value, the terminal determines the subcarrier offset *k*_{SSB-offset} based on a predefined rule. The predefined rule includes but is not limited to: *k*_{SSB-offset}=Kssb-N₁ or *k*_{SSB-offset}=Kssb mod M₁, where N₁ and M₁ are determined based on an indication of the signaling or based on a predefined rule. For example, N₁ equals 9 or 10. For example, M₁ equals 24 (corresponding to FR1), or M₁ equals 12 (corresponding to FR1 or FR2). For example, for a terminal supporting the network energy saving, after receiving the SSB and reading the corresponding Kssb = 30, it may determine that the cell is the second-type cell based on the signaling, and determine the frequency-domain position of the CRB based on the Kssb. The specific method is as follows: the terminal determines the offset between the lowest subcarrier of the SSB and the lowest subcarrier of the N_{CRB} based on *k*_{SSB-offset}, where N_{CRB} is the lowest CRB that has a frequency-domain intersection with the CRB. *k*_{SSB-offset} = Kssb - 9, or *k*_{SSB-offset} = Kssb mod 24. This may be applied in the scenario where Kssb = 30, or in other Kssb value scenarios. For example, for a terminal supporting the network energy saving, under the condition that the terminal determines that the cell is the second-type cell based on the signaling, it may read the corresponding pdcch-ConfigSIB1 to determine the corresponding SearchSpace#0 or CORESET#0.

In some embodiments, the type of the first cell is determined based on the MIB and the PBCH information of the first cell. In this manner, the MIB and the PBCH information of the first cell are combined to determine the type of the first cell. For example, at least one indication bit each from the MIB and the PBCH information is combined to determine the type of the first cell.

In some embodiments, the first cell is determined as the second-type cell based on the value of the subcarrier offset Kssb jointly indicated by the MIB and the PBCH information.

For example, in a case where a maximum value indicated by the indication bits of Kssb is small, only the indication bits of the MIB may be used. In a case where the maximum value indicated by the indication bits of Kssb is large, both the indication bits of the MIB and of the PBCH information may be used. In this case, the Kssb jointly indicated by the MIB and the PBCH information may be mapped to the type of the first cell. Therefore, determining the type of the first cell based on the Kssb jointly indicated by the MIB and the PBCH information is an optional way jointly indicating the type of the first cell by the MIB and the PBCH information.

In some embodiments, determining the first cell as the second-type cell based on the value of the subcarrier offset (Kssb) jointly indicated by the MIB and the PBCH includes at least one of: determining that the first cell is the first-type cell, in which the value of Kssb jointly indicated by the MIB and the PBCH is within a third set; or determining that the first cell is the second-type cell in which the value of Kssb jointly indicated by the MIB and the PBCH is within a fourth set.

In some embodiments, the MIB is transmitted based on the PBCH. Determining based on the value of the subcarrier offset (Kssb) jointly indicated by the MIB and the PBCH information may be understood as a joint indication based on ssb-SubcarrierOffset in the MIB and based on other bits in the PBCH.

In some embodiments, candidate Kssb values included in the third set may be different from candidate Kssb values included in the fourth set.

As an example, the third set may include candidate Kssb values that are even numbers, and the fourth set may include candidate Kssb values that are odd numbers.

As another example, the third set may include candidate Kssb values that are odd numbers, and the fourth set may include candidate Kssb values that are even values.

As still another example, the candidate Kssb values included in the third set are all greater than the candidate Kssb values included in the fourth set.

As yet another example, the candidate Kssb values included in the fourth set are all greater than the candidate Kssb values included in the third set.

In some embodiments, the candidate Kssb values included in the third set and in the fourth set are predefined, for example, predefined by the protocol.

In other embodiments, the candidate Kssb values included in the third set and in the fourth set are configured by the network device. In other embodiments, the candidate Kssb values included in the third set and the fourth set are determined based on the frequency range (FR) used by the first cell. In some embodiments, the type of the first cell is determined based on a check method of the PBCH information of the first cell. In some embodiments, different check methods may correspond to different check sequences, different check algorithms, and others. Thus, the type of the first cell may be implicitly indicated through different check methods of the PBCH information.

In some embodiments, determining the type of the first cell based on the check method of the PBCH information of the first cell includes at least one of: determining that the first cell is the first-type cell, in which the PBCH information of the first cell is successfully checked using a first check algorithm; or
determining that the first cell is the second-type cell, in which the PBCH information of the first cell is successfully checked using a second check algorithm. In some embodiments, both the first check algorithm and the second check algorithm may be cyclic redundancy check (CRC) algorithms.

In some embodiments, the type of the first cell is determined based on a reception status on receiving the first transmission in the first cell by the terminal.

In some embodiments, the terminal may pre-consider the first cell as the first-type cell, and thus periodically monitors the first transmission. Subsequently, the type of the first cell may be determined based on the reception status on receiving the first transmission.

For example, after camping on the first cell, the terminal may first consider the first cell as the first-type cell and monitor the first transmission for multiple periods. In a case where the first transmission is not received, it may consider the first cell as the second-type cell; otherwise, it may consider the first cell as the first-type cell.

As an example, the terminal may already be camped on the first cell before the first cell is changed to the second-type cell. For example, the first cell may change from the first-type cell to the second-type cell through state switching.

As another example, the first cell may be a cell that sends SSB but does not send SIB or sends SIB on demand. In this case, the terminal may camp on the first cell normally, but the type of the first cell needs to be further determined.

As still another example, the terminal may camp on the first cell through SSB sent from another cell on behalf of the first cell. Thus, after camping on the first cell, the first terminal needs to further determine the type of the first cell.

In some embodiments, the multiple periods may be periods that are consecutive in the time domain or designated specific periods.

In some embodiments, in a case where the terminal fails to receive the first transmission for M consecutive times at reception occasions of the first transmission, the terminal determines that the first cell is the second-type cell. In some embodiments, M is a positive integer. For example, M equals 1, 2, or 3, etc.

In some embodiments, the value of M may be configured by the network or determined based on a predefined manner.

In some embodiments, the terminal failing to receive the first transmission for M consecutive times at the reception occasions of the SSB may include that: the terminal does not receive any SSB at the M consecutive time-domain transmission positions of the SSB based on the configuration of the SSB.

In some embodiments, the terminal failing to receive the first transmission for M consecutive times at the reception occasions of the SIB may include that: the terminal does not receive any SIB at the M consecutive time-domain transmission positions of the SIB based on the configuration of the SIB. FIG. 1D illustrates time-domain configuration(s) of the SSB and/or the SIB, where the SSB and the SIB may each have one or more reception occasions in a slot.

As an example, after camping on the first cell, in a case where the terminal does not detect any SSB at M consecutive SSB reception occasions, the terminal may consider that the first cell is the second-type cell.

As another example, after camping on the first cell, in a case where the terminal does not receive any SIB1 at M consecutive SIB1 reception occasions, the terminal may consider that the first cell is the second-type cell.

In some embodiments, the reception occasion may include but is not limited to a reception time window determined based on the configuration of the first transmission. For example, for the SIB1, first time windows are configured. One first time window may be one reception occasion of the SIB1. For the SSB, second time windows are configured. One second time window may be one reception occasion of the SSB.

In some embodiments,
the type of the first cell is determined based on a reception status on receiving a scheduling command for the first transmission by the terminal in the first cell.

In some embodiments, in a case where the terminal fails to receive the scheduling command for N consecutive times at reception occasions of the scheduling command for the first transmission, the terminal determines that the first cell is the second-type cell; where N is a positive integer.

In some embodiments, in a case where the scheduling command, received by the terminal at the reception occasions of the scheduling command, capable of scheduling the first transmission fails to schedule the first transmission for X consecutive times, the terminal determines that the first cell is the second-type cell; where X is a positive integer.

For example, the scheduling command for the SIB may be downlink control information (DCI).

In some embodiments, in a case where the terminal does not receive any DCI for N consecutive times at the monitoring occasions of the DCI that schedules the SIB, it indicates that the first cell has no demand to schedule the SIB transmission, which indicates that it is highly likely that the first cell is a second-type cell.

In other embodiments, in a case where the terminal receives the DCI capable of scheduling the SIB at the monitoring occasions of the DCI that schedules the SIB, but the DCI fails to schedule the SIB for X consecutive times, it indicates that the SIB is currently sent from the first cell on demand, which indicates that it is highly likely that the first cell is a second-type cell.

In some embodiments, N and X may be any positive integer, which may be configured by the network or predefined.

In some embodiments, N and X may be equal or unequal.

In some embodiments, in a case where the terminal does not detect any DCI for scheduling the SIB within a duration after camping on the first cell, it indicates that the first cell may not send the SIB, and then the terminal may consider that the first cell is the second-type cell; otherwise, the terminal may consider that the first cell is the first-type cell.

In some embodiments, in a case where the terminal has previously received the SIB sent by the first cell, but then neither receives the SIB nor receives the DCI for scheduling the SIB for a long first period starting from a certain time, this may be because the first cell has changed its cell settings and the type of the first cell has changed from the first-type cell to the second-type cell.

In some embodiments, the terminal determines the state of the cell as follows. In a case where the terminal does not receive any first transmission within a first time window, the terminal determines that the cell is a first sub-type cell or a second sub-type cell of the second-type cell.

In some embodiments, the first time window starts from a current blind detection period of the first transmission where the terminal performs a blind detection, with N consecutive blind detection periods of the first transmission.

In some embodiments, the first time window starts from a current first transmission period of the terminal, with N consecutive first transmission periods.

In some embodiments, the first sub-type cell is an on-demand cell, and the second sub-type cell is a cell that the terminal is not allowed to access.

In some embodiments, the terminal stores state information of the cell.

In some embodiments, after receiving the configuration information of the second transmission corresponding to the cell, it determines that the cell is the first sub-type cell; otherwise, it determines that the cell is the second sub-type cell.

In some embodiments, the type of the first cell is determined based on whether the first transmission of the first cell is received from a second cell.

In some embodiments, in a case where the terminal does not receive the first transmission of the first cell from the second cell, the terminal determines that the first cell is the second-type cell. In a case where the terminal receives the first transmission of the first cell from the second cell, the terminal determines that the first cell is the second-type cell.

In some embodiments, some first-type cells may send the first transmission on behalf of the second-type cell.

In some embodiments, in a case where the terminal receives the first transmission of the first cell from the second cell, it indicates that the first cell itself may not send the first transmission or send the first transmission on demand, i.e., the first cell is a second-type cell.

In some embodiments, for example, the first cell is a primary cell of the terminal, and the second cell is a secondary cell of the terminal. In a case where the terminal detects the SSB and/or the SIB1 of a certain secondary cell from the primary cell, the terminal may consider that the corresponding secondary cell may be a second-type cell.

For example, the first transmission transmitted by the second cell on behalf of the first cell may carry the cell identifier and/or the cell index of the second cell. Thus, when the terminal receives the first transmission sent by the second cell, it knows which cell the corresponding first transmission belongs to.

In some embodiments, the first cell is the first-type cell, where the terminal in the first cell receives the first transmission based on a semi-static configuration and/or a periodic configuration and/or indication signaling.

In some embodiments, the first cell is the second-type cell, and the first transmission is sent from the first cell based on an on-demand mode.

In some embodiments, sending the first transmission from the second-type cell based on an on-demand mode includes at least one of the following.

The base station autonomously determines whether to send the first transmission based on the communication state of the cell.

The base station determines whether to send the first transmission based on a second transmission sent by the terminal.

In some embodiments of the first aspect, in a case where a terminal in the first cell, based on the semi-static configuration and/or the periodic configuration and/or the indication signaling, cannot receive any first transmission with the time-frequency resources determined by the semi-static configuration and/or the periodic configuration and/or the indication signaling within a first time range, but can receive the first transmission with time-frequency resources determined by a configuration and/or indication signaling within a second time range, the first cell is the second-type cell.

In some embodiments, the first cell is the second-type cell, and no first transmission is sent from the first cell.

In some embodiments, in a case where the terminal in the first cell cannot receive the first transmission, then the cell is the second-type cell.

In some embodiments, whether the first cell is the second-type cell is determined based on configuration information of the second transmission.

For example, in a case where the configuration information of the second transmission applies to the first cell, it is determined that the first cell is the second-type cell.

In some embodiments, the second transmission may be received in the first cell itself or in another cell on behalf of the first cell. In either case, in a case that the second transmission is directed to the first cell (i.e., related to the first cell), it may be determined that the first cell may be the second-type cell.

For example, in a case that there is no configuration information of the second transmission for the first cell, under the condition that the first cell is the second-type cell, it is determined that the first cell is a second-type cell from which the first transmission is not sent.

As an example, in a case where there is the configuration information of the second transmission for the first cell and/or corresponding indication information is received, and the indication information indicates that the second transmission is received in another cell on behalf of the first cell or the first transmission is sent from another cell on behalf of the first cell, it is determined that the first cell is a second-type cell for which the second transmission is sent from another cell on behalf of the first cell. For example, the indication information may be configuration information or other information, such as system information, RRC, MAC CE, or DCI. The disclosure does not limit this.

As another example, in a case where there is configuration information of the second transmission for the first cell and/or corresponding indication information is received, and the indication information indicates that the second transmission is received in the first cell itself or the first transmission is sent from the first cell itself, it is determined that the first cell is a cell from which the first transmission is sent in an on-demand mode. For example, the indication information may be configuration information or other information, such as system information, RRC, MAC CE, or DCI. The disclosure does not limit this.

In some embodiments, based on one or more of the aforementioned first information, second information, or third information, it is determined which specific second type the first cell is. The specific determination method may be explicitly or implicitly indicated by the first information, second information, or third information.

In some embodiments, the type of the first cell is determined based on whether the configuration information of a second transmission is received, where the second transmission is used to trigger the sending of the first transmission.

For example, in a case where the configuration information of the second transmission for the first cell is received, it is determined that the first cell is the second-type cell.

For example, in a case where the configuration information of the second transmission for the first cell is received, it is determined that the first cell is a second-type cell from which the first transmission is sent based on an on-demand mechanism.

In some embodiments, after determining that the first cell is the second-type cell based on the configuration information of the second transmission, it may be further determined based on the configuration information of the second transmission whether the first cell is a second-type cell from which the first transmission is send based on an on-demand mode, or a second-type cell from which the first transmission is not sent, or a second-type cell for which the first transmission is sent from another cell on behalf of the second-type cell.

In some embodiments, based on one or more of a predefined manner, the reception status on receiving the first transmission in the first cell, whether the first transmission of the first cell is received from a second cell, or others, it is determined that the first cell is the first-type cell or the second-type cell, and a specific second type (e.g., a second-type cell from which the first transmission is sent based on an on-demand mode, or a second-type cell from which the first transmission is not sent, or a second-type cell for which the first transmission is sent from another cell on behalf of the second-type cell) is determined.

In conclusion, in embodiments of the disclosure, all methods for determining whether the first cell is the first-type cell or the second-type cell or for determining the specific second type may also be specifically used to determine the specific second type to which the first cell belongs.

In detail, whether the first cell is the second-type cell may be determined according to any of the methods given in the foregoing embodiments.

In some embodiments, after determining that the first cell is a second-type cell, it may also be determined whether the first cell is a second-type cell from which the first transmission is sent based on an on-demand mechanism, or a second-type cell from which the first transmission is not sent, or a second-type cell for which the first transmission is sent from another cell on behalf of the second-type cell, based on whether the configuration information of the second transmission for the first cell is received.

For example, in a case where it is determined that the first cell is a second-type cell and the configuration information of the second transmission for the first cell is not received, it is determined that the first cell is a second-type cell from which the first transmission is not sent. In a case where it is determined that the first cell is a second-type cell and the configuration information of the second transmission for the first cell is received, it is determined that the first cell is a second-type cell from which the first transmission is sent based on an on-demand mechanism, or a second-type cell for which the first transmission is sent from another cell on behalf of the second-type cell.

At S2103, the terminal determines the manner of receiving the first transmission. In some embodiments, the terminal determines the manner of receiving the first transmission in the first cell.

In some embodiments, the terminal determines the manner of receiving the first transmission based on the type of the first cell.

In some embodiments, the terminal determines, based on the type of the first cell, the manner of receiving, based on the first cell, the first transmission.

In some embodiments, in a case where the first cell is the first-type cell, the terminal receives the first transmission based on a configuration of the first transmission of the first cell.

For example, the configuration of the first transmission may include a semi-static configuration and/or a periodic configuration.

In some embodiments, in a case where the first cell is the first-type cell, the terminal determines to receive the first transmission based on the configuration of the first transmission while camping on the first cell.

In some embodiments, in a case where the first cell is the first-type cell, the terminal may continue to determine the manner of receiving the first transmission from the network side based on its own status of receiving, based on the first cell, the first transmission.

In some embodiments, if the first cell is the first-type cell and the terminal fails to receive the first transmission based on the configuration of the first transmission of the first cell, this may be because the link of the terminal in the first cell fails, causing the failure to receive the first transmission. In this case, in order to successfully receive the first transmission from the first cell, the terminal performs link recovery and receives the first transmission from the first cell after the link recovery.

The link recovery here may include but is not limited to beam recovery.

In some embodiments, if the first cell is the first-type cell and the terminal fails to receive the first transmission based on the configuration of the first transmission of the first cell, this may be because the connection of the terminal in the first cell fails, causing the failure to receive the first transmission. In this case, in order to successfully receive the first transmission from the first cell, the terminal performs connection re-establishment and receives the first transmission from the first cell based on the re-established connection.

It is noteworthy that the link recovery and the connection re-establishment are different processes for the terminal to maintain communication with the first cell.

In some embodiments, under the condition that the terminal fails to receive the first transmission based on the configuration of the first transmission of the first cell, in a case where the terminal determines that the first cell is the first-type cell, the terminal determines that the connection failure in the first cell may have caused the failure to receive the first transmission. The terminal performs the link recovery to restore the connection with the first cell or performs the cell handover or the cell reselection to establish a connection with another cell.

In a case where the first cell is the first-type cell, it is determined to perform the cell handover or the cell reselection.

In some embodiments, in a case where the terminal determines that the first cell is the first-type cell and the terminal fails to receive the first transmission in the first cell, the terminal determines to perform the cell handover or the cell reselection, to change the camping cell of the terminal to another cell to receive the first transmission from the other cell.

In some embodiments, in a case where the first cell is the first-type cell and the measurement result of the first cell is less than a specified threshold, it is determined to perform the cell handover or the cell reselection.

Through the cell handover or the cell reselection, the serving cell of the terminal is changed, and the terminal receives the first transmission from the changed serving cell.

In some embodiments, in a case where the first cell is the first-type cell and the terminal continuously fails to receive the first transmission from the first cell or the terminal still cannot successfully receive the first transmission from the first cell after the link recovery or the connection re-establishment, it indicates that the first cell is not suitable for the terminal to continue camping on. The terminal may change the serving cell through the cell selection, the cell handover, or the cell reselection.

In some embodiments, it is determined to trigger the sending of the first transmission from the first cell, where the first cell is the second-type cell.

In some embodiments, in a case where the first cell is the second-type cell, it is determined whether the first transmission is sent from the first cell on demand.

In a case where the first transmission is sent from the first cell on demand, the terminal may trigger the sending of the first transmission from the first cell by sending the second transmission.

In some embodiments, in a case where the first cell is the second-type cell, the terminal determines whether to continue receiving the first transmission from the first cell based on whether the terminal has the configuration of the second transmission for the first cell.

For example, in a case where the first cell is the second-type cell and the terminal does not obtain the configuration of the second transmission corresponding to the first cell, the terminal determines not to continue receiving the first transmission from the first cell, and the terminal determines to perform the cell handover and/or the cell reselection to change the serving cell to receive the first transmission from the changed serving cell.

As an example, the first cell is the second-type cell, and the first transmission is sent from the first cell based on the demand that the first cell is discovered by the terminal. In this case, the network side does not need to provide the terminal with the configuration of the second transmission corresponding to the first cell.

As another example, in a case where the first cell is the second-type cell and the terminal does not obtain the configuration of the second transmission corresponding to the first cell, the terminal determines to continue receiving the first transmission from the first cell, where the sending of the first transmission from the first cell is triggered by the second transmission sent by the terminal.

In this case, the second transmission from the terminal may be sent directly to the first cell, or sent to the fourth cell, where the first transmission is sent from the fourth cell to the first cell via an interface or tunnel between base stations.

In some embodiments, in a case where the first cell is the second-type cell, determining to send the first transmission based on a trigger includes:
at least one of the second transmission sent to the terminal or receiving the second transmission sent by the fourth cell; and
transmitting the first transmission to the terminal based on the second transmission.

In some embodiments, the fourth cell may be a neighboring cell of the first cell. In some embodiments, the fourth cell may be a primary cell for the first cell. In some embodiments, the fourth cell may be any cell with an overlapping coverage with the first cell.

In other embodiments, in a case where the first cell is the second-type cell and the first transmission is not sent from the first cell, when the terminal needs to receive the first transmission, the terminal may change its serving cell. For example, the terminal changes its serving cell through the cell selection, the cell handover, and/or the cell reselection.

In some embodiments, in a case where the terminal fails to receive the first transmission based on the configuration of the first transmission of the first cell, if the terminal determines that the first cell is the second-type cell, the terminal determines that the cell may be in a state of transmitting the first transmission on demand. When the terminal needs the first transmission, the terminal sends a request message to request the transmission of the first transmission information.

In some embodiments, the first parameter is determined based on the third information, and frequency-domain positions of common resource blocks (CRBs) of the second-type cell from which the first transmission is sent in an on-demand mode are determined based on the first parameter. The frequency-domain positions of the CRBs may be used by the terminal to determine the frequency-domain position of CORESET#0, and the terminal monitors, based on CORESET#0, the reception of downlink control information (DCI) for scheduling the SIB1 of the second-type cell from which the first transmission is sent based on an on-demand mechanism. In a case where the DCI is successfully received, the SIB1 is received based on the resource position scheduled by the DCI.

As illustrated in FIG. 3, an embodiment of the disclosure provides a downlink transmission method, performed by a terminal. The method includes:
At S3101, downlink transmission is received.

In some embodiments, the terminal receives the downlink transmission from the network side.

In some embodiments, the terminal receives the downlink transmission from the first network device and from the second network device. For the description of the first network device and the second network device, reference may be made to the related description of the embodiments of FIG. 2.

In some embodiments, the terminal receives the downlink transmission from the first cell, the second cell, and/or the third cell.

For the related description of the first cell, the second cell, and/or the third cell, reference may be made to the related description of the embodiments of FIG. 2.

At S3102, the type of the first cell is determined.

For example, any optional embodiment of the terminal determining the type of the first cell may refer to S2102 of the embodiments of FIG. 2.

At S3103, a manner of receiving the first transmission is determined based on the type of the first cell.

In some embodiments, the manner of receiving, based on the first type, the first transmission is determined based on the type of the first cell.

In some embodiments, the first-type terminal determines the manner of receiving, based on the first cell, the first transmission based on the type of the first cell.

In some embodiments, after determining that the first cell is the second-type cell, the terminal camps on another cell through the cell reselection and/or the cell handover and receives the first transmission from another cell.

For example, for any optional embodiment where the terminal determines the manner of receiving the first transmission, reference may be made to S2103 of the embodiments of FIG. 2.

It is noteworthy that S3101 may be an optional step. In a case where the terminal may determine the type of the first cell based on a predefined manner, such as a protocol agreement, without receiving any downlink transmission from the network side, S3101 may be omitted.

As illustrated in FIG. 4, an embodiment of the disclosure provides a downlink transmission method performed by a network device of a first cell. The method includes the following.

At S4101, the manner of sending, based on the first cell, the first transmission is determined.

In some embodiments, the first cell may be a first-type cell or a second-type cell. For the related description of the first-type cell and/or the second-type cell, reference may be made to the related description of the embodiments of FIG. 2, which are not repeated here.

In some embodiments, the manner of sending the first transmission is determined based on the type of the first cell.

In some embodiments, for the optional manner where the network device determines the manner of sending the first transmission in the first cell, reference may be made to any embodiment of S2100.

At S4102, the downlink transmission is sent.

In some embodiments, the downlink transmission is sent based on the first cell.

In some embodiments, for optional manners of S4102, reference may be made to any optional manner of S2101.

For a terminal that supports the network energy saving technology, the terminal determines, based on a predetermined manner or indication signaling, whether a cell is a cell from which the SSB/SIB1 is sent on demand (on-demand SSB/SIB1 cell) or an SSB/SIB1-less cell, and determines a corresponding SSB/SIB1 reception manner.

For example, an SSB/SIB1-less cell may be a cell from which the SSB and/or the SIB are not sent.

In some embodiments, the on-demand SSB/SIB1 cell and/or the SSB/SIB1-less cell are both the aforementioned second-type cell. The first-type cell may be a cell other than the second-type cell.

### Terminal side:

A terminal that supports the network energy saving determines the type of the cell based on the following schemes and determines whether to receive the downlink transmission based on different cell types. The downlink transmission may include a downlink signal and/or downlink channel information. The downlink transmission at least includes an SSB and/or an SIB1.

Scheme 1: A terminal that supports the network energy saving determines that the cell is an on-demand SIB1/SSB cell based on the following method, and requests the base station to send the SSB and/or the SIB1 by sending a WUS to the base station.

The terminal determines that the cell is an on-demand SIB1/SSB cell based on a predefined manner:
the terminal does not receive any SIB1/SSB within a first time window. The first time window is determined based on an indication of signaling or a predefined manner.

The terminal determines that the cell corresponding to the WUS configuration is an on-demand SIB1/SSB cell. The WUS configuration may be obtained from the current cell or from another cell. The terminal receives a configuration via signaling and determines that the cell is an on-demand SIB1/SSB cell. The signaling may be based on an SCellConfig configuration. The signaling may be based on an indication of an MIB. The signaling may be based on a reserved bit or a check method of a PBCH.

Scheme 2: A terminal that supports the network energy saving determines that the cell is an SIB1/SSB-less cell based on the following method and obtains corresponding SIB1/SSB information from another cell: the terminal determining that the cell is an on-demand SIB1/SSB cell based on a predefined manner:
the terminal does not receive any SIB1/SSB within a first time window. The first time window is determined based on an indication of signaling or a predefined manner. The terminal receives, from another cell, an SIB1/SSB that do not belong to that cell and determines that the cell corresponding to the SIB1/SSB is an on-demand SIB1/SSB cell. The terminal receives a configuration of signaling and determines that the cell is an on-demand SIB1/SSB cell. The signaling may be based on an indication of an MIB. The signaling may be based on a reserved bit or a check method of the PBCH.

### Base station side:

A base station that supports the network energy saving determines whether to send a downlink signal and/or channel, which at least include an SSB and/or an SIB1, based on different cell types.

Scheme 1: A base station that supports the network energy saving indicates that the cell is an on-demand SIB1/SSB cell based on the following indication signaling and sends the SSB and/or the SIB1 based on the on demand mode: the base station sending a WUS configuration corresponding to the on-demand SIB1/SSB cell.

The base station sends the following indication signaling to indicate that the cell is an on-demand SIB1/SSB cell. The signaling may be based on an SCellConfig configuration. The signaling may be based on an indication of an MIB. The signaling may be based on a reserved bit or a check method of the PBCH.

Scheme 2: A base station that supports the network energy saving indicates that the cell is an SIB1/SSB-less cell based on the following indication signaling and stops sending a corresponding SSB/SIB1.

The base station sends the following indication signaling to indicate that the cell is an SIB1/SSB-less cell. The signaling may be based on an SCellConfig configuration. The signaling may be based on an indication of an MIB. The signaling may be based on a reserved bit or a check method of the PBCH.

In this embodiment, it is assumed that the terminal is a terminal supporting the network energy saving technology. A corresponding base station may be a base station that supports the network energy saving technology. The base station may choose to stop sending some downlink signals or channels based on the network load, the number of camped terminals, the service type, the service period, or others. Certainly, the decision-making process and strategy on whether the base station sends some downlink signals or channels are not limited in the disclosure. The technical solutions of embodiments of the disclosure mainly define different cells for different behaviors of the base station or the terminal. For example, a cell may be identified as an anchor cell or a non-anchor cell, or as a first-type cell or a second-type cell, where the first-type cell (anchor cell) and the second-type cell (non-anchor cell) correspond to different behaviors of the network side in sending system information/downlink signals or receiving uplink signals. Correspondingly, the terminal determines different ways of acquiring or receiving system information/downlink signals or sending uplink signals based on different behaviors of the network side in sending the system information. Downlink transmission includes but is not limited to: the SSB, the SIB1, the TRS, the PDCCH, the PDSCH, the CSI-RS, other newly defined downlink reference signals, such as the PSS and/or the SSS, the DRS, or the like. Uplink signals may include but are not limited to at least one of: the PRACH, the SRS, the PUCCH, the PUSCH, or other newly defined uplink reference signals.

The technical solutions of embodiments of the disclosure mainly take the SSB and the SIB1 as examples to illustrate the technical solutions of embodiments of the disclosure. It is noteworthy that the technical solutions of embodiments of the disclosure may also be applied to other information/signals, and embodiments of the disclosure do not limit this.

It is noteworthy that the technical solutions of embodiments of the disclosure use the first-type cell and the second-type cell to distinguish different behaviors of the network side in sending the SSB/SIB 1, and the corresponding behaviors of acquiring the SSB/SIB1. However, the technical solutions of embodiments of the disclosure do not limit the concepts that need to be introduced. For example, the first-type cell in the technical solutions of embodiments of the disclosure may refer to a cell where the network side sends the SSB/SIB1 based on an existing semi-static configuration, but a cell conforming to the above characteristics is not necessarily defined based on the first-type cell.

The following describes possible application scenarios of the technical solutions of embodiments of the disclosure, but the technical solutions of embodiments of the disclosure are not limited to the following scenarios.

Case 1: On-demand SSB transmission. The network device chooses to send the SSB on demand based on the number of accessed users and/or a service demand. This case mainly corresponds to a scenario where the terminal is in connected mode and connected to a Scell. In an on-demand SSB period of the network side and the network side does not send any corresponding SSB, the terminal may trigger a corresponding SSB transmission through a corresponding WUS.

In this case, a cell may be classified as the first-type cell or the second-type cell based on characteristics of sending the SSB from the cell. The related descriptions of first-type cell and the second-type cell may be as follows. First-type cell: a cell where the base station normally sends the SSB based on a semi-static configuration. Second type cell: a cell where the base station sends the SSB based on an on-demand mode.

### Embodiment 1.1:

The first-type cell and the second-type cell are distinguished based on a network configuration signaling. For example, the base station may indicate that a Scell is a first-type cell or a second-type cell through a newly defined field in the RRC signaling (such as, SCellConfig).

For example, the base station may indicate that the corresponding Scell is one of the first-type cell and/or the second-type cell through Scell activation signaling.

### Embodiment 1.2:

The first-type cell and the second-type cell are distinguished based on a WUS configuration. For example, the base station may send the WUS configuration based on an SCellConfig Information Element (IE) or another IE. In an embodiment, the WUS configuration may indicate that a corresponding secondary cell is a first-type cell or a second-type cell. In an embodiment, the first-type cell and the second-type cell are distinguished based on a cell to which the WUS configuration applies. For example, the WUS configuration may be based on a Pcell configuration or a Scell configuration. After receiving the WUS configuration and determining the cell corresponding to the WUS configuration, the terminal determines that the cell corresponding to the WUS configuration is the second-type cell. After receiving the above WUS configuration, if the terminal determines that the corresponding secondary cell (Scell) is the first-type cell, the terminal receives a corresponding SSB based on a semi-static signaling configuration corresponding to the SSB.

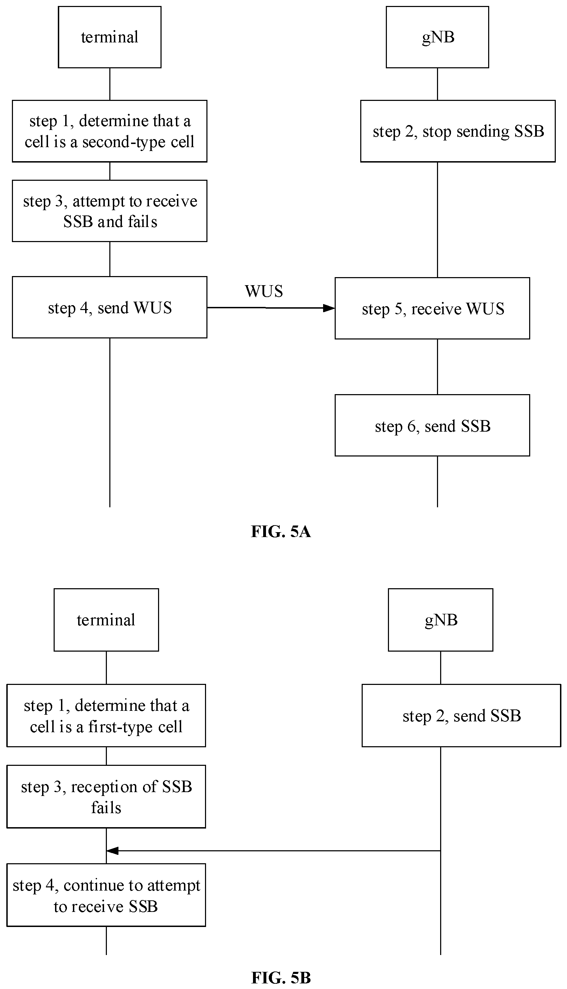

Embodiment 1.3: For example, the type of the cell may be determined based on a predefined manner. If the terminal does not receive any corresponding SSB within a first time window, the terminal determines that the cell is the second-type cell. The first time window may be determined based on signaling or a predefined manner. For example, the first time window is N consecutive configured SSB periods. The first time window starts from a current SSB reception period of the terminal. N is determined based on a predefined manner or configured via signaling, for example, N=3. If it is determined that the corresponding Scell is the second-type cell, the terminal sends a WUS on demand to request the transmission of the corresponding SSB. If it is determined that the corresponding Scell is the second-type cell, the terminal determines that it cannot receive the corresponding SSB for a period of time. The WUS that triggers the SSB transmission may be sent from the primary cell or from the secondary cell. In some embodiments, the WUS may be specific RRC signaling, MAC CE signaling, or a physical layer signal. Based on the above scenario, the manner in which the terminal obtains the SSB may be as illustrated in FIG. 5A or FIG. 5B.

As illustrated in FIG. 5A, the downlink transmission method performed by the terminal may include the following.

At step 1, it is determined that the cell is the first-type cell.

At step 2, the gNB of the second-type cell stops sending the SSB.

At step 3, the terminal attempts to receive the SSB, but fails.

At step 4, the terminal sends a WUS.

At step 5, the gNB receives the WUS.

At step 6, the gNB sends the SSB.

As illustrated in FIG. 5A, the downlink transmission method performed by the terminal may include the following.

At step 1, it is determined that the cell is the second-type cell.

At step 2, the SSB is sent.

At step 3, the terminal fails to receive the SSB.

At step 4, the terminal continues to attempt to receive the SSB.

In a case where the terminal determines that the cell is a first-type cell, if the terminal cannot normally receive the corresponding SSB, the terminal confirms that the reception failure comes from the transmission link. Accordingly, the terminal may continue to attempt to receive the SSB or may initiate the cell handover, the cell search, or other procedures.

Case 2: On-demand SIB1 in a single carrier scenario

The network side may choose to send the SIB1 on demand based on the accessed users and/or the service demand. This case mainly corresponds to a scenario where the terminal is in an idle mode and/or inactive mode. In an on-demand SIB1 period of the network side and the network side does not send the corresponding SIB1, the terminal may trigger a corresponding SIB1 transmission based on a corresponding WUS.

If the terminal sends the corresponding WUS, it needs to obtain a corresponding WUS configuration.

It is considered that the case mainly corresponds to a single carrier scenario.

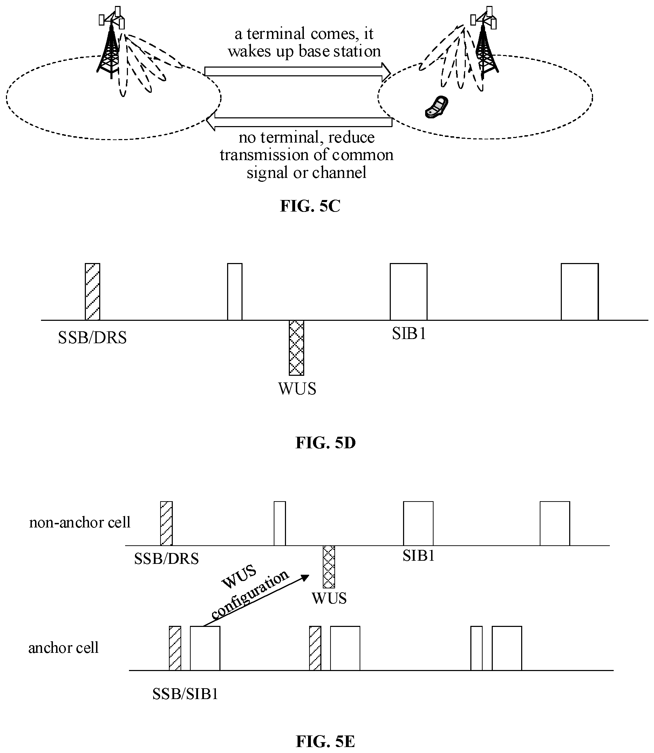

In the single carrier case, the terminal may not be able to obtain the corresponding WUS configuration through another cell and may only obtain the corresponding WUS configuration through the current cell. As illustrated in FIG. 5C, when there are no terminals in the cell, transmission of common signals or channels is reduced. When a terminal enters, the base station is woken up, and transmission of common signals or channels is started. As illustrated in FIG. 5D, in the time domain, the terminal does not send any SIB1 before detecting a WUS, but may send a reference signal, such as an SSB and/or a DRS. After detecting the WUS, the terminal starts periodic or one-shot transmission of the SIB1.

In this case, a cell may be classified as the first-type cell or the second-type cell based on characteristics of the cell in sending the SIB1. First-type cell: a cell where the base station normally sends the SIB1 based on a semi-static configuration.

Second-type cell: a cell where the base station sends the SIB1 based on an on-demand mode.

The manner of distinguishing the first-type cell and the second-type cell may include at least one of the following.

Embodiment 2.1: The first-type cell and the second-type cell may be determined based on a predefined manner.

If the terminal does not receive any corresponding SIB1 within a first time window, the terminal determines that the cell is the second-type cell.

The first time window may be determined based on signaling or a predefined manner.

For example, the first time window is N consecutive configured SIB1 periods. The SIB1 period may be a blind detection period of type 0 CSS for scheduling the SIB1.

The first time window starts from a current blind detection period of the type 0 CSS of the terminal. N is determined based on a predefined manner or configured via signaling, for example, N=3.

For example, consider that the terminal detects the SSB corresponding to the cell through the cell search, determines information corresponding to the Searchspace#0 and the CORESET#0 based on the MIB configuration in the SSB, and blindly detects the DCI 1_0 scrambled with the SI-RNTI based on the above Searchspace#0 and CORESET#0.

If the terminal does not detect any corresponding DCI for scheduling the SIB1 for M consecutive blind detection periods, the terminal determines that the cell is the second-type cell.

If the terminal does not detect any corresponding DCI for scheduling the SIB1 for M consecutive blind detection periods, or the terminal does not receive any corresponding SIB1 after detecting a corresponding DCI, the terminal determines that the cell is the second-type cell.

For example, the terminal determines the state of the cell as follows. If the terminal does not receive any corresponding SIB1 within a first time window, the terminal determines the type of a corresponding cell. The first time window starts from a current SIB1 blind detection period where the terminal performs the blind detection, with N consecutive configured SIB1 periods.

The corresponding cell may be a cell corresponding to the on-demand SIB1. Or the cell may be a cell that the terminal is prohibited from accessing.

The terminal stores state information of the cell.

After receiving the WUS configuration corresponding to the cell, the terminal determines that the cell may be a cell corresponding to the on-demand SIB1; otherwise, the cell may be a cell that the terminal is prohibited from accessing.

M is determined based on a predefined manner or configured via signaling. For example, M=1.

Here, one blind detection period may be one of the aforementioned reception occasions.

For example, consider that the terminal detects the SSB corresponding to the cell through the cell search, determines information corresponding to the Searchspace#0 and the CORESET#0 based on the MIB configuration in the SSB, blindly detects the DCI 1_0 scrambled with the SI-RNTI based on the above Searchspace#0 and CORESET#0, and successfully receives the corresponding SIB1.

If the terminal successfully camps on the cell and needs to obtain updated system information (for example, if the terminal does not detect the corresponding DCI for scheduling SIB1 for M consecutive blind detection periods and/or the terminal does not receive any corresponding SIB1 after detecting a corresponding DCI), the terminal determines that the cell is the second-type cell. M is determined based on a predefined manner or configured via signaling, for example, M=1.

For example, a terminal that moves from outside the network coverage into the network coverage may need to obtain the updated system information, or a terminal that switches from another radio access technology network to a current network may need to obtain the system information.

For example, the terminal determines the type of the cell as follows. If the terminal does not receive any corresponding SIB1 within a first time window, the terminal determines that the cell is a cell from which the first transmission is sent based on an on-demand mechanism or determines that the cell is a cell from which the first transmission is not sent. The first transmission here includes but is not limited to SIB1, SSB, and/or SIBx, where x may be a positive integer greater than or equal to 2.

In some embodiments, the first time window starts from a current SIB1 blind detection period where the terminal performs the blind detection, with N consecutive configured SIB1 periods.

In some embodiments, the second cell is a cell corresponding to the on-demand SIB1.

In some embodiments, a cell from which the first transmission is not sent is a cell that the terminal is prohibited from accessing.

In some embodiments, the terminal stores cell information. The cell information may indicate the type of a corresponding cell, to facilitate the subsequent cell selection, reselection, access, or camping.

In some embodiments, after receiving the configuration information of the WUS corresponding to the cell, the terminal determines that the cell is a cell from which the first transmission is sent based on an on-demand mechanism; otherwise, it determines that the cell is a cell from which the first transmission is not sent. That is, under the condition that the configuration information of the WUS of the cell is not received, the terminal cannot send a WUS to trigger the transmission of the first transmission. If the terminal does not receive any corresponding first transmission within the first time window, the terminal may consider that the cell is a cell from which the first transmission is not sent.

In some embodiments, whether the type of the cell is the first-type cell and/or the second-type cell may be determined based on a predefined rule. For example, if the terminal does not receive any corresponding SSB within a first time window, the terminal determines that the cell is the second-type cell. Embodiment 2.2: For example, the first-type cell and the second-type cell are distinguished based on a WUS configuration.

The WUS configuration is used for the terminal to send a WUS with a configured resource, and the WUS may trigger the SIB1 transmission.

As an example, consider that the terminal detects the SSB corresponding to the cell through the cell search and obtains the corresponding WUS configuration based on the SSB.

As another example, in a case where the terminal receives the SSB and attempts to receive and successfully receives a corresponding WUS configuration before receiving the SIB1, the terminal determines that the cell is the second-type cell.

For example, consider that the terminal detects the SSB corresponding to the cell through the cell search, determines information corresponding to the Searchspace#0 and the CORESET#0 based on the MIB configuration in the SSB, blindly detects the DCI 1_0 scrambled with the SI-RNTI based on the above Searchspace#0 and CORESET#0, and successfully receives the corresponding SIB1. In a case where the terminal successfully receives the corresponding WUS configuration, the terminal determines that the cell is the second-type cell.

Embodiment 2.3: For example, the first-type cell and the second-type cell may be distinguished based on indication signaling, which may be carried by an MIB or by an MIB and a PBCH.

Embodiment 2.3-1: The indication signaling may be a spare bit in the MIB. For example, if the spare bit indicates 0, it indicates that the corresponding cell is a first-type cell; or if the spare bit indicates 1, it indicates that the corresponding cell is a first-type cell.

The indication signaling may be a last bit of ssb-SubcarrierOffset in the MIB. For example, if the spare bit indicates 0, it indicates that the corresponding cell is a first-type cell; or if the spare bit indicates 1, it indicates that the corresponding cell is a first-type cell.

For a terminal that supports the network energy saving, after receiving the SSB and reading the corresponding MIB, the terminal may determine, based on the signaling, whether the cell to which the terminal belongs is a first-type cell or a second-type cell.

For a legacy terminal that does not support the network energy saving, after receiving the SSB and reading the corresponding MIB, the legacy terminal may determine that the spare bit is reserved, and the legacy terminal ignores the indication of the information field.

Embodiment 2.3-2: The indication signaling may be Kssb. Kssb is jointly indicated by ssb-SubcarrierOffset and an information bit in the PBCH.

Embodiment 2.3-2-1: The SSB of the corresponding cell may be associated with the CORESET#0. For FR1, a value of Kssb is greater than or equal to 0 and less than or equal to 23. For FR2, a value of Kssb is greater than or equal to 0 and less than or equal to 11. In a case where the value of Kssb belongs to a first value set, the cell associated with the SSB is a first-type cell. In a case where the value of Kssb belongs to a second value set, the cell associated with the SSB is a second-type cell. The first value set may be determined based on signaling or a predefined manner. As an example, the first value set corresponds to Kssb values that are even numbers, and the second value set corresponds to Kssb values that are odd numbers. As another example, a value range of the first value set is different from a value range of the second value set.

For example, the indication signaling may be indication bits corresponding to systemFrameNumber (SFN), subCarrierSpacingCommon, dmrs-TypeA-Position, cellBarred, intraFreqReselection, etc. In a case where a value of the indication bits belongs to a first value set, the cell associated with the SSB is a first-type cell. In a case where the value of Kssb belongs to a second value set, the cell associated with the SSB is a second-type cell. In the embodiments of the disclosure this is not described in detail.

For a terminal that supports the network energy saving, after receiving the SSB and reading the corresponding Kssb, the terminal may determine, based on the signaling, whether the cell to which the terminal belongs is a first-type cell or a second-type cell, and determine frequency-domain positions of CRBs based on Kssb. For a terminal that does not support the network energy saving, after receiving the SSB and reading the corresponding Kssb, the terminal may determine the frequency-domain positions of the CRBs based on Kssb.

Embodiment 2.3-2-2: The SSB of the corresponding cell may be not associated with the CORESET#0. For FR1, a value of Kssb is greater than or equal to 24. For FR2, a value of Kssb is greater than 11. In a case where a value of Kssb belongs to a first value set, the cell associated with the SSB is a first-type cell. In a case where a value Kssb belongs to a second value set, the cell associated with the SSB is a second-type cell. The first value set may be determined based on signaling or a predefined manner. For example, the second value set corresponds to Kssb = 30, and the first value set is Kssb not equal to 30. For example, for a terminal that supports the network energy saving, after receiving the SSB and reading the corresponding Kssb = 30, the terminal may determine that the cell is a second-type cell based on the signaling, and determine the frequency-domain positions of the CRBs based on Kssb.

The specific method is as follows. The terminal determines an offset between a lowest subcarrier of the SSB and a lowest subcarrier of N_{CRB} based on Kssb-offset, where N_{CRB} is a lowest CRB that has a frequency-domain intersection with the CRB. Kssb-offset = Kssb - 9, or Kssb-offset = Kssb mod 24. This method may be applied in the case where Kssb = 30, or in other case where Kssb has other values. For example, for a terminal that supports the network energy saving, under the condition that the terminal determines that the cell is a second-type cell based on signaling, the terminal may read the corresponding pdcch-ConfigSIB 1 to determine the corresponding SearchSpace#0 or CORESET#0. For example, in some embodiments, the terminal determines *k̃*_{SSB} based on the indication signaling, and determines the frequency-domain positions of the CRB grid based on *k̃*_{SSB}, and further determines the frequency-domain position of CORESET#0 based on the frequency-domain positions of the CRBs. The indication signaling may be sent from the first cell or based on the second cell. In some embodiments, as an example, the indication signaling may be the configuration information of the WUS. As another example, the indication signaling may be one of the aforementioned second information. As another example, the indication signaling may be one of the aforementioned third information. For a legacy terminal that does not support the network energy saving, under the condition that the Kssb of the corresponding SSB satisfies the above conditions, it may be determined that the SSB is not associated with the CORESET#0, and during the cell search, the terminal continues to search for other SSBs to obtain an SSB associated with the CORESET#0.

Embodiment 2.4: The first-type cell and the second-type cell may be distinguished based on indication signaling. The indication signaling may be carried by the PBCH.

Embodiment 2.4-1: The indication signaling may be a reserved bit in the PBCH.

For example, the reserved bit is the bit a̅_{A̅+6} under the condition L̅ₘₐₓ = 10, or the bit a̅_{A̅+6} or the bit a̅_{A̅+7} under the condition that L̅ₘₐₓ is less than or equal to 8.

For a terminal that supports the network energy saving, after receiving the SSB and reading the corresponding reserved bit of the PBCH, the terminal may determine, based on the signaling, whether the cell to which the terminal belongs is a first-type cell or a second-type cell.

For a legacy terminal that does not support the network energy saving, after receiving the SSB and reading the corresponding PBCH, the legacy terminal ignores the indication of the reserved bit of the information field. For example, the reserved bit may be determined based on Table 4.

**Table 4**

| SSB pattern | Frequency | SSB type | Lₘₐₓ | indication bits for SSB index and *i*_{SSB} | Kssb | reserved bit |
|---|---|---|---|---|---|---|
| case A (15 kHz) | <=3GHz (not shared) | A | 4 | *i*_{SSB} (2 bits) | *̅a̅*̅_{A̅+5} | *a̅*_{*A̅*+6}, *a̅*_{*A̅*+7} |
| | >3GHz (not shared) | A | 8 | *i*_{SSB} (3 bits) | *a̅*_{*A̅*+5} | *a̅*_{*A̅*+6}, *a̅*_{*A̅*+7} |
| | shared | A | 10 | *a̅*_{*A̅*+7} + *i*_{SSB} (3 bits) | *̅a̅*̅_{A̅+5} | *a̅*_{*A̅*+6} |
| case B (30 kHz) | <=3 GHz | A | 4 | *i*_{SSB} (2 bits) | *̅a̅*̅_{A̅+5} | *a̅*_{*A̅*+6}, *a̅*_{*A̅*+7} |
| | >3GHz | A | 8 | *i*_{SSB} (3 bits) | *̅a̅*̅_{A̅+5} | *a̅*_{*A̅*+6}, *a̅*_{*A̅*+7} |
| case C (30 kHz) | <=3GHz **(TDD)** | A | 4 | *i*_{SSB} (2 bits) | *̅a̅*̅_{A̅+5} | *a̅*_{*A̅*+6}, *a̅*_{*A̅*+7} |
| | >3GHz(TDD) | A | 8 | *i*_{SSB} (3 bits) | *̅a̅*̅_{A̅+5} | *a̅*_{*A̅*+6}, *a̅*_{*A̅*+7} |
| | | A | 20 | *a̅*_{*A̅*+6} *, a̅*_{*A̅*+7} *, i*_{SSB} (3 bits) | *a̅*_{*A̅*+5} | none |
| Case D (120 kHz) | FR2 | B | 64 | *a̅*_{*A̅*+5} , *a̅*_{*A̅*+6} , *a̅*_{*A̅*+7}, *i*_{SSB} (3 bits) | none | none |
| case E (240 kHz) | FR2-1 | B | 64 | *a̅*_{*A̅+*5} , *a̅*_{*A̅*+6} , *a̅*_{*A̅*+7}, *i*_{SSB} (3 bits) | none | none |
| case F (480 kHz) | FR2-2 | B | 64 | *a̅*_{*A̅+*5} , *a̅*_{*A̅*+6} , *a̅*_{*A̅*+7}, *i*_{SSB} (3 bits) | none | none |
| case G (960 kHz) | FR2-2 | B | 64 | *a̅*_{*A̅+*5} , *a̅*_{*A̅*+6} , *a̅*_{*A̅*+7}, *i*_{SSB} (3 bits) | none | none |

### Embodiment 2.4-2:

The indication signaling may indicate a different CRC in the PBCH. For example, a new CRC is introduced, and a base station that supports the network energy saving performs the CRC check on the PBCH based on the newly introduced CRC and sends it accordingly. After the terminal that supports the network energy saving demodulates the corresponding PBCH based on the new CRC to and successfully receives the PBCH, the terminal determines that the cell is a second-type cell.

After a terminal that supports the network energy saving demodulates the corresponding PBCH based on an existing CRC and successfully receives the PBCH, the terminal determines that the cell is a first-type cell. A terminal that does not support the network energy saving cannot successfully demodulate the PDCH if the terminal demodulates the corresponding PBCH through the existing CRC check, and thus the terminal continues to perform the cell search process.

For example, consider that the terminal detects the SSB corresponding to the cell through the cell search, determines information corresponding to the Searchspace#0 and the CORESET#0 based on the MIB configuration in the SSB, and blindly detects the DCI 1_0 scrambled with the SI-RNTI based on the above Searchspace#0 and CORESET#0.

If the terminal does not detect any corresponding DCI for scheduling SIB1 for M consecutive blind detection periods, and/or the terminal does not receive any corresponding SIB1 after detecting a corresponding DCI, the terminal determines that the cell is the second-type cell. M is determined based on a predefined manner or configured via signaling, For example, M=1.

For example, consider that the terminal detects the SSB corresponding to the cell through the cell search, determines information corresponding to the Searchspace#0 and the CORESET#0 based on the MIB configuration in the SSB, blindly detects the DCI 1_0 scrambled with the SI-RNTI based on the above Searchspace#0 and CORESET#0, and successfully receives the corresponding SIB1. If the terminal successfully camps on the cell and needs to obtain the updated system information (for example, when the terminal returns from out of coverage, or after the terminal enters the network from another RAT), if the terminal does not detect any corresponding DCI for scheduling SIB1 for M consecutive blind detection periods, and/or the terminal does not receive any corresponding SIB1 after detecting a corresponding DCI, the terminal determines that the cell is the second-type cell. M is determined based on a predefined manner or configured via signaling, for example, M=1.

Case 3: On-demand SIB1 transmission scenario in multiple carriers.

The network side chooses to send the SIB1 on demand based on accessed users and/or a service demand. This case mainly corresponds to a scenario where the terminal is in an idle mode and/or an inactive mode.

As illustrated in FIG. 5E, in an on-demand SIB1 period of the network side and the network side does not send a corresponding SIB1, the terminal may trigger a corresponding SIB1 transmission based on a corresponding WUS.

If the terminal sends a WUS to trigger the network side to send the SSB and/or the SIB1, the terminal needs to obtain the WUS configuration.

Considering that the case mainly corresponds to a multi-carrier case, in a multi-carrier case, the terminal may obtain a corresponding WUS configuration only from an anchor cell or may obtain a corresponding WUS configuration based on an anchor cell or a non-anchor cell.

In this case, two types of cells are defined: first-type cell and second-type cell.

First-type cell: a cell where the base station normally sends the SIB1 based on a semi-static configuration. For example, the cell may be a cell from which the WUS configuration of another cell is sent. For example, the cell may be an anchor cell.

Second-type cell: a cell where the base station sends the SIB1 based on an on-demand mode, such as a cell from which WUS configurations of the current cell or another cell may be sent, or a cell from which no corresponding WUS configuration is sent. For example, the cell may be a non-anchor cell.

In some embodiments, the second-type cell may also be a cell from which the first transmission is not sent.

The two types of cells may be distinguished based on the following methods.

Embodiment 3.1: the two types of cells may be distinguished based on a predefined manner.

If the terminal does not receive the corresponding SIB1 within a first time window, the terminal determines that the cell is the second-type cell. The first time window may be determined based on signaling or a predefined manner. For example, the first time window is N consecutive configured SIB1 periods. The SIB1 period may be a blind detection period of the type 0 CSS for scheduling the SIB1. The first time window starts from a current blind detection period of the type 0 CSS of the terminal. N is determined based on a predefined manner or configured via signaling, for example, N=3.

For example, consider that the terminal detects the SSB corresponding to the cell through the cell search, determines information corresponding to the Searchspace#0 and the CORESET#0 based on the MIB configuration in the SSB, and blindly detects the DCI 1_0 scrambled with the SI-RNTI based on the above Searchspace#0 and CORESET#0. If the terminal does not detect the corresponding DCI for scheduling the SIB1 for M consecutive blind detection periods, and/or the terminal does not receive any corresponding SIB1 after detecting a corresponding DCI, the terminal determines that the cell is the second-type cell. M is determined based on a predefined manner or a configured via signaling, for example, M=1.

For example, consider that the terminal detects the SSB corresponding to the cell through the cell search, determines information corresponding to the Searchspace#0 and the CORESET#0 based on the MIB configuration in the SSB, blindly detects the DCI 1_0 scrambled with the SI-RNTI based on the above Searchspace#0 and CORESET#0, and successfully receives the corresponding SIB1.

If the terminal successfully camps on the cell and needs to obtain the updated system information (for example, if the terminal does not detect any corresponding DCI for scheduling SIB1 for M consecutive blind detection periods, and/or the terminal does not receive any corresponding SIB1 after detecting a corresponding DCI), the terminal determines that the cell is the second-type cell. M is determined based on a predefined manner or configured via signaling, for example, M=1.

For example, in a case that the terminal does not obtain the WUS configuration for the cell corresponding to the SSB, the terminal continues to search for other cells. For example, the terminal obtains the WUS configuration for the second-type cell based on the SSB of the first-type cell. After obtaining the WUS configuration, the terminal may switch to the second-type cell based on the cell selection or the cell reselection and sends a WUS to request the corresponding SIB1 transmission.

For example, in a case where the terminal does not obtain the WUS configuration for the cell corresponding to the SSB, the terminal continues to search for other cells, e.g., the SSB of the first-type cell, to obtain the WUS configuration for the second-type cell. After obtaining the WUS configuration, the terminal sends, from the first-type cell, a WUS request for the second-type cell, the WUS request carries information of the second-type cell, and after the base station in the first-type cell passes the request to the base station in the second-type cell through information exchange, the base station of the second-type cell receives the WUS.

For example, in a case where the terminal has already obtained the WUS configuration for the cell corresponding to the SSB, the terminal sends a WUS to the second-type cell to request the corresponding SIB1 transmission.

Embodiment 3.2: The first-type cell and the second-type cell may be distinguished based on the WUS configuration. The WUS configuration is used for sending a WUS by the terminal with a configured resource, to trigger the corresponding SIB1 transmission.

For example, if the terminal detects the SSB corresponding to the cell through the cell search and obtains the WUS configuration corresponding to the cell based on the SSB, or the terminal receives the SSB and attempts to receive and successfully receives the WUS configuration corresponding to the cell before receiving the SIB1, then the terminal determines that the cell corresponding to the WUS configuration is the second-type cell.

For example, consider that the terminal detects the SSB corresponding to the cell through the cell search, determines information corresponding to the Searchspace#0 and the CORESET#0 based on the MIB configuration in the SSB, blindly detects the DCI 1_0 scrambled with the SI-RNTI based on the above Searchspace#0 and CORESET#0, and successfully receives the corresponding SIB1. After the terminal successfully receives the WUS configuration corresponding to the cell, and the terminal determines that the cell is the second-type cell.

For example, if the terminal detects the SSB corresponding to the first-type cell through the cell search and successfully receives the WUS configuration for a specific cell from the first-type cell, then the terminal determines that the cell corresponding to the WUS configuration is the second-type cell.

Embodiment 3.3: The first-type cell and the second-type cell may be distinguished based on indication signaling.

The indication signaling may be carried by an MIB or by an MIB and a PBCH.

Embodiment 3.3-1: The indication signaling may be a spare bit in the MIB.

For example, in a case where the spare bit indicates 0, it indicates that the corresponding cell is a first-type cell; or in a case where the spare bit indicates 1, it indicates that the corresponding cell is a first-type cell.

The indication signaling may be a last bit of ssb-SubcarrierOffset in the MIB. For example, in a case where the spare bit indicates 0, it indicates that the corresponding cell is a first-type cell; or in a case where the spare bit indicates 1, it indicates that the corresponding cell is a first-type cell.

For a terminal that supports the network energy saving, after receiving the SSB and reading the corresponding MIB, the terminal may determine, based on the signaling, whether the cell to which the terminal belongs is a first-type cell or a second-type cell.

For a legacy terminal that does not the support network energy saving, after receiving the SSB and reading the corresponding MIB, the spare bit is reserved, and the legacy terminal ignores the indication of the information field.

Embodiment 3.3-2: The indication signaling may be Kssb. Kssb is jointly indicated by ssb-SubcarrierOffset and by an information bit in PBCH.

Embodiment 3.3-2-1: For example, the SSB of the corresponding cell may be associated with CORESET#0. For FR1, a value of Kssb is greater than or equal to 0 and less than or equal to 23. For FR2, a value of Kssb is greater than or equal to 0 and less than or equal to 11. In a case where a value of Kssb belongs to a first value set, the cell associated with the SSB is a first-type cell; and in a case where a value of Kssb belongs to a second value set, the cell associated with the SSB is a second-type cell.

The first value set may be determined based on signaling or a predefined manner. For example, the first value set corresponds to Kssb values that are even numbers, and the second value set corresponds to Kssb values that are odd numbers.

For example, the indication signaling may also be indication bit(s) corresponding to SFN (systemFrameNumber), subCarrierSpacingCommon, dmrs-TypeA-Position, cellBarred, intraFreqReselection, or the like. In a case where a value of the indication bits belongs to a first value set, the cell associated with the SSB is a first-type cell; and in a case where a value of Kssb belongs to a second value set, the cell associated with the SSB is a second-type cell. In the embodiments of the disclosure this is not described in detail.

For a terminal that supports the network energy saving, after receiving the SSB and reading the corresponding Kssb, the terminal may determine, based on the signaling, whether the cell to which the terminal belongs is a first-type cell or a second-type cell, and determine frequency-domain positions of CRBs based on Kssb.

For a terminal that does not support the network energy saving, after receiving the SSB and reading the corresponding Kssb, the terminal may determine the frequency-domain position of the CRBs based on Kssb.

### Embodiment 3.3-2-2:

The SSB of the corresponding cell may be not associated with the CORESET#0. For FR1 used by a cell not associated with the CORESET#0, a value of Kssb is greater than or equal to 24, or for FR2 used by a cell not associated with the CORESET#0, a value of Kssb is greater than 11. In a case where a value of Kssb belongs to a first value set, the cell associated with the SSB is a first-type cell; and in a case where a value of Kssb belongs to a second value set, the cell associated with the SSB is a second-type cell.

The first value set may be determined based on signaling or a predefined manner. For example, the second value set corresponds to Kssb = 30, and the first value set is Kssb not equal to 30.

In some embodiments, the terminal determines the Kssb based on network signaling, and determines the subcarrier offset based on the Kssb. In some embodiments, in a case where a value of Kssb is less than a specified value, it may be considered that the subcarrier offset equals the Kssb. In some embodiments, in a case where a value of Kssb is greater than or equal to a specified value, the subcarrier offset may be determined based on the Kssb. For example, the specified value may include but is not limited to any value greater than or equal to 24, e.g., 30. The network signaling may include but is not limited to: MIB, PBCH information, SIB, or another signaling sent by the network side.

For example, for a terminal that supports the network energy saving, after receiving the SSB and reading the corresponding Kssb = 30, the terminal may determine that the cell is a second-type cell based on the signaling and determine the frequency-domain positions of the CRBs based on Kssb. The specific method is as follows.

The terminal determines an offset between a lowest subcarrier of the SSB and a lowest subcarrier of N_{CRB} based on Kssb-offset, where N_{CRB} is a lowest CRB that has a frequency-domain intersection with the CRB. Kssb-offset = Kssb - 9, or Kssb-offset = Kssb mod 24. In some embodiments, this method of determining Kssb-offset or the offset between the lowest subcarrier of the SSB and the lowest subcarrier of the N_{CRB} may be applied in the scenario where Kssb = 30, or in other scenarios where Kssb equals other values.

In some embodiments, the terminal determines *k̃*_{SSB} based on the indication signaling, and determines the frequency-domain positions of the CRB grid based on *k̃*_{SSB}. The indication signaling may be sent from the first cell or based on the second cell. In some embodiments, as an example, the indication signaling may be configuration information of the WUS. As another example, the indication signaling may be one of the aforementioned second information.

In some embodiments, *k̃*_{SSB} may be the aforementioned first parameter.

For example, for a terminal that supports the network energy saving, under the condition that the terminal determines that the cell is a second-type cell based on the signaling, the terminal read the corresponding pdcch-ConfigSIB 1 to determine the corresponding SearchSpace#0 or CORESET#0.

For a legacy terminal that does not support the network energy saving, under the condition that the Kssb of the corresponding SSB satisfies the above conditions, the terminal determines that the SSB is not associated with the CORESET#0, and during the cell search, the terminal continues to search for other SSBs to obtain an SSB associated with the CORESET#0.

Embodiment 3.4: the first-type cell and the second-type cell may be distinguished based on indication signaling.

The indication signaling may be carried by the PBCH. That is, the type of the cell is distinguished through the PBCH information.

Embodiment 3.4-1: The indication signaling may be a reserved bit in the PBCH. For example, the reserved bit is the bit *a̅*_{*A̅*+6} under the condition that L̅ₘₐₓ = 10, or the reserved bit is the bit *a̅*_{*A̅*+6} or the bit a̅_{A̅+7} under the condition that L̅ₘₐₓ is less than or equal to 8.

For a terminal that supports the network energy saving, after receiving the SSB and reading the corresponding reserved bit in the PBCH, the terminal determine, based on the signaling, whether the cell to which the terminal belongs is a first-type cell or a second-type cell.

For a legacy terminal that does not support the network energy saving, after receiving the SSB and reading the corresponding PBCH, the legacy terminal ignores the indication of the reserved bit of the information field.

Embodiment 3.4-2: The indication signaling may be a different CRC in the PBCH. For example, a new CRC is introduced, and a base station that supports the network energy saving performs the CRC check on the PBCH based on the newly introduced CRC and sends it accordingly.

After a terminal that supports the network energy saving demodulates the corresponding PBCH based on the new CRC check and successfully receives the PBCH, the terminal determines that the cell is a second-type cell.

After the terminal supporting network energy saving demodulates the corresponding PBCH based on an existing CRC check and successfully receives the PBCH, the terminal determines that the cell is a first-type cell.

If a terminal that does not support the network energy saving demodulates the corresponding PBCH based on the existing CRC check, the terminal cannot successfully demodulate the PBCH, and the terminal continues to perform the cell search process.

For example, if the terminal determines that the cell is a second-type cell and does not obtain any corresponding SIB1, under the condition that the terminal does not obtain the WUS configuration for the cell corresponding to the SSB, the terminal continues to search for other cells, e.g., the SSB of the first-type cell, to obtain the WUS configuration for the second-type cell. After obtaining the WUS configuration, the terminal switches to the second-type cell based on the cell selection or the cell reselection and sends a WUS to request the corresponding SIB1 transmission.

For example, if the terminal determines that the cell is a second-type cell and does not obtain any corresponding SIB1, under the condition that the terminal does not obtain the WUS configuration of the cell corresponding to the SSB, the terminal continues to search for other cells, e.g., the SSB of the first-type cell, to obtain the WUS configuration for the second-type cell. After obtaining the WUS configuration, the terminal sends a WUS request for the second-type cell to the first-type cell. The WUS request carries information of the second-type cell. After the base station of the first-type cell passes the request to the base station of the second-type cell through information exchange, the base station of the second-type cell receives the WUS request.

For example, if the terminal determines that the cell is a second-type cell and does not receive any corresponding SIB1, under the condition that the terminal has already obtained the WUS configuration of the cell corresponding to the SSB, the terminal sends a WUS to the second-type cell to request the corresponding SIB1 transmission.

For example, if the terminal determines that the cell is a second-type cell and successfully obtains the corresponding SIB1, the terminal may receive, based on the current cell, the corresponding WUS configuration. When the terminal needs to obtain updated SIB1 later, the terminal may send a WUS based on a configuration to request the corresponding SIB1.

Case 4: SIB1/SSB-less cell.

The network side chooses not to send the SIB1/SSB based on accessed users and/or a service demand.

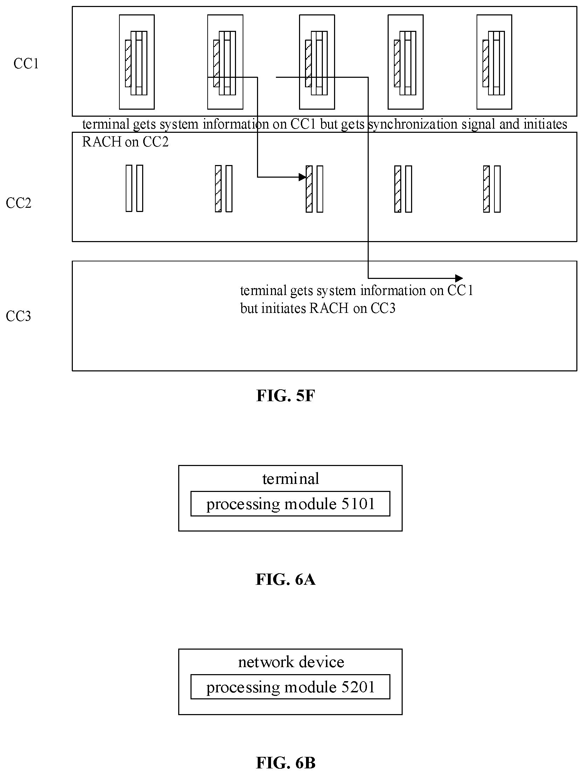

The case mainly corresponds to a scenario where the terminal is in an idle mode and/or an inactive mode. As illustrated in FIG. 5F, in a case where no corresponding SIB1/SSB is sent from the cell corresponding to carrier component (CC) 3 or CC2, the terminal may obtain the SIB1/SSB of CC2 or CC3 based on CC1.

### Embodiment 3.5:

In a case, the type of a cell may be determined based on information sent by one cell, e.g., based on one or more signaling sent by one cell. In another case, the type of a cell may be indicated by combining signaling sent from two or more cells.

For example, the indication signaling of cell 1 may be carried by MIB, MIB and PBCH, system information, RRC signaling, MAC CE, or DCI of cell 2. The indication signaling of cell 1 may include but is not limited to configuration information of WUS and/or System Information (SI). As an example, the SI may include but is not limited to SIB1 and/or SIBx. As another example, the indication signaling may also be RRC signaling or other indication signaling. Embodiments of the disclosure do not limit this. For the specific signaling indication/implementation manner, reference may be made to the above embodiments 3.1 to 3.4, which are not repeated here. The second cell here may be a first-type cell. For example, the second cell may be an anchor cell of the terminal.

An embodiment takes the first information as the configuration information of WUS of cell 1 and the second information as the subcarrier offset parameter (Kssb) of cell 1 as an example to illustrate the specific technical solution of embodiments of the disclosure:
Example 1: The terminal receives the indication signaling, sent from cell 1 or cell 2, for indicating that cell 1 may be a second-type cell. For example, under the condition that cell 1 is a second-type cell and Kssb of cell 1 satisfies the following conditions: Kssb being greater than 23 in a case where the cell uses FR1 and Kssb being greater than 11 in a case where cell 1 uses FR2, the terminal determines that cell 1 is a second-type cell.

For example, for a terminal that supports the network energy saving, after receiving the SSB for cell 1 and determining, based on the SSB, that the corresponding Kssb of cell 1 is greater than 23 (FR1) or greater than 11 (FR2), in order to further determine the frequency-domain positions of the CRB grid to determine the frequency-domain position(s) of CORESET#0 and/or SIB1, the terminal may determine *k̃*_{SSB} based on the indication signaling, and determine the frequency-domain positions of the CRB grid based on *k̃*_{SSB}. The indication signaling may be sent from cell 2 or sent from cell 1. The indication signaling may include but is not limited to MIB, MIB and PBCH, RRC, MAC CE, or DCI. In some embodiments, the indication signaling may also be the configuration information of the WUS. For example, in a case where cell 1 uses FR1, Kssb is less than or equal to 23. In a case where cell 1 uses FR2, then Kssb is less than or equal to 11.

The terminal receives the indication signaling, sent from cell 1 or cell 2, for indicating that cell 1 may be a second-type cell. For example, under the condition that the corresponding indication signaling indicates that cell 1 is a second-type cell, if Kssb of cell 1 does not satisfy the following conditions: Kssb being greater than 23 in a case where the cell uses FR1 and Kssb being greater than 11 in a case where cell 1 uses FR2, then the terminal determines that cell 1 is not associated with the CORESET#0, or the terminal determines that the case is an error case, or the terminal determines that cell 1 is a second-type cell or a first-type cell. For example, the first-type cell is a cell from which the first transmission is sent based on a semi-static configuration and/or a periodic configuration. The second-type cell is a cell from which the first transmission is sent based on an on-demand mode, or the second-type cell is a cell from which the first transmission is not sent, or the second-type cell is a cell for which the first transmission is sent from another cell on behalf of the second-type cell. In an embodiment, the first transmission may be SIB1.

Correspondingly, the terminal receives the indication signaling from cell 2 to determine the type of the corresponding cell. For example, under the condition that the indication signaling indicates that cell 1 is not a second-type cell, if the corresponding Kssb of cell 1 satisfies the following conditions: Kssb being greater than 23 in a case where the cell uses FR1 and Kssb being greater than 11 in a case where cell 1 uses FR2, then the terminal determines that cell 1 is not associated with the CORESET#0. For example, cell 1 is a cell from where the SIB1 is not sent.

Correspondingly, the terminal receives the indication signaling, from cell 1 and/or cell 2, for indicating a corresponding cell. For example, under the condition that cell 1 is a second-type cell, if Kssb of cell 1 does not satisfy the following conditions: Kssb being greater than 23 in a case where the cell uses FR1 and Kssb being greater than 11 in a case where cell 1 uses FR2, then the terminal determines that the case is an error case, or the terminal determines that cell 1 is a second-type cell, or the terminal determines that cell 1 is a first-type cell.

Correspondingly, the terminal receives the indication signaling, from cell 1 and/or cell 2, for indicating the type of the corresponding cell. For example, under the condition that cell 1 is not a second-type cell, if Kssb of cell 1 satisfies the following conditions: Kssb being greater than 23 in a case where the cell uses FR1 and Kssb being greater than 11 in a case where cell 1 uses FR2, then the terminal determines that cell 1 is a cell not associated with the CORESET#0. For example, cell 1 is a cell from which the SIB1 is not sent.

Example 2: The terminal receives the indication signaling, from cell 2, for indicating the corresponding cell. For example, under the condition that the indication signaling indicates that cell 1 is a second-type cell, if the corresponding Kssb of cell 1 satisfies the following conditions: Kssb equaling a specific value (for example, Kssb = 30 in a case where cell 1 uses FR1 and Kssb = 14 in a case where cell 1 uses FR2), then then the terminal determines that cell 1 is a second-type cell.

For example, for a terminal that supports the network energy saving, after determining the Kssb, the terminal needs to further determine the frequency-domain positions of the CRB grid. The terminal may determine *k̃*_{SSB} based on the indication signaling, and determine the frequency-domain positions of the CRB grid based on *k̃*_{SSB}. The indication signaling may be sent from a first-type cell and/or a second-type cell. For example, the indication signaling may be sent from the first cell, the second cell, and/or the third cell. For example, the indication signaling may be configuration information of the WUS. For example, in a case where cell 1 uses FR1, a value of Kssb is less than or equal to 23. For example, in a case where cell 1 uses FR2, a value of Kssb is less than or equal to 11.

Correspondingly, the terminal receives the indication signaling, from cell 1 and/or cell 2, for indicating the corresponding cell. For example, under the condition that cell 1 is a second-type cell, if Kssb of cell 1 does not satisfy the following conditions: Kssb = 30 in a case where cell 1 uses FR1 and Kssb = 14 in a case where cell 1 uses FR2, then the terminal determines that the case is an error case, or the terminal determines that cell 1 is a second-type cell, or the terminal determines that cell 1 is a first-type cell.

Correspondingly, the terminal receives the indication signaling, from cell 1 and/or cell 2, for indicating the type of the corresponding cell. For example, under the condition that cell 1 is not a second-type cell, if Kssb of cell 1 satisfies the following conditions: Kssb = 30 in a case where cell 1 uses FR1 and Kssb = 14 in a case where cell 1 uses FR2, then the terminal determines that cell 1 is a cell not associated with the CORESET#0. For example, cell 1 is a cell from which SIB1 is not sent.

In some embodiments, the first cell is a cell whose type is to be determined.

In some embodiments, the system information corresponding to the first cell is transmitted based on an on-demand mode.

In some embodiments, the transmission of the system information corresponding to the first cell needs to be triggered by a WUS.

In some embodiments, the third cell is a primary cell of the terminal and the first cell is a secondary cell of the terminal; or the third cell is a secondary cell of the terminal and the first cell is a primary cell of the terminal.

In some embodiments, the second cell may be a normal cell. For example, the second cell may be a cell from which the first transmission is periodically sent. For example, the coverage of the second cell is adj acent to or partially overlaps with that of the first cell. In some embodiments, the third cell may be a type of second cell, but the second cell is not limited to the third cell.

Embodiments of the disclosure have taken SIB1 as an example to illustrate the technical solutions of embodiments of the disclosure. For other signals, for example, SSB, they are also within the protection scope of the technical solutions of embodiments of the disclosure, and no limitation is made.

Based on this scenario, the following methods may be defined accordingly.

First-type cell: a cell where the base station normally sends the SIB1 based on a semi-static configuration. For example, SIB1 information of at least one cell including the current cell may be sent from the current cell. For example, the cell may correspond to CC1 in FIG. 5F.

Second-type cell: a cell where the base station does not send SIB1. For example, the cell may correspond to CC2 in FIG. 5F.

The two types of cells may be distinguished based on the following methods.

Embodiment 4.1 : The type of the cell may be determined based on a predefined manner.

If the terminal does not receive the corresponding SIB1 within a first time window, the terminal determines that the cell is the second-type cell. The first time window may be determined based on signaling or a predefined manner.

For example, the first time window is N consecutive configured SIB1 periods. The SIB1 period may be a blind detection period of type 0 CSS for scheduling the SIB1.

The first time window starts from a current blind detection period of the type 0 CSS of the terminal. N is determined based on a predefined manner or configured via signaling, for example, N=3.

For example, consider that the terminal detects the SSB corresponding to the cell through the cell search, determines information corresponding to the Searchspace#0 and the CORESET#0 based on the MIB configuration in the SSB, and blindly detects the DCI 1_0 scrambled with the SI-RNTI based on the above Searchspace#0 and CORESET#0.

If the terminal does not detect any corresponding DCI for scheduling SIB1 for M consecutive blind detection periods, and/or the terminal does not receive any corresponding SIB1 after detecting a corresponding DCI, then the terminal determines that the cell is the second-type cell. M is determined based on a predefined manner or configured via signaling, for example, M=1.

For example, under the condition that the terminal does not obtain any SIB1 of the cell corresponding to the SSB, the terminal continues to search for other cells, for example, the SSB of the first-type cell, to obtain the SIB1 of the second-type cell. After obtaining the SIB1, the terminal switches to the second-type cell based on the cell selection or the cell reselection, receives the corresponding SSB, and may initiate a RACH process based on the SSB and the obtained SIB1 of the second-type cell.

For example, under the condition that the terminal has already obtained the SIB1 of the cell corresponding to the SSB, the terminal may initiate a RACH process in the second-type cell.

For example, the terminal determines the state of the cell as follows. If the terminal does not receive any corresponding SIB1 within a first time window, the terminal determines that the cell is a first sub-type cell or a second sub-type cell of the second-type cell. The first time window starts from a current SIB1 blind detection period where the terminal is performs the blind detection, with N consecutive configured SIB1 periods.

The first sub-type cell is a cell corresponding to on-demand SIB1, and the second sub-type cell is a cell that the terminal is prohibited from accessing.

The terminal stores state information of the cell.

After receiving the WUS configuration corresponding to the cell, the terminal determines that the cell is the first sub-type cell; otherwise, the terminal determines that the cell is the second sub-type cell.

Embodiment 4.2: The type of the cell may be distinguished based on SIB1.

For example, if the terminal detects the SSB corresponding to the first-type cell through the cell search and successfully receives the SIB1 for a specific cell from the first-type cell, then the terminal determines that the cell corresponding to the SIB1 is the second-type cell.

Embodiment 4.3: For example, the types of the cell may be distinguished based on the indication signaling, which may be carried by MIB or by MIB and PBCH. Embodiment 4.3-1: The indication signaling may be a spare bit in the MIB. For example, in a case where the spare bit indicates 0, it indicates that the corresponding cell is a first-type cell; and in a case where the spare bit indicates 1, it indicates that the corresponding cell is a first-type cell.

The indication signaling may be a last bit of ssb-SubcarrierOffset in the MIB. For example, in a case where the spare bit indicates 0, it indicates that the corresponding cell is a first-type cell; and in a case where the spare bit indicates 1, it indicates that the corresponding cell is a first-type cell.

For a terminal that supports the network energy saving, after receiving the SSB and reading the corresponding MIB, the terminal may determine, based on the signaling, whether the cell to which the terminal belongs is a first-type cell or a second-type cell.

For a legacy terminal that does not support the network energy saving, after receiving the SSB and reading the corresponding MIB, the legacy terminal may determine that the spare bit is reserved, and the legacy terminal ignores the indication of the information field, or the legacy terminal determines that ssb-SubcarrierOffset is used to determine the CRB offset of SSB.

Embodiment 4.3-2: The indication signaling may be Kssb. Kssb is jointly indicated by ssb-SubcarrierOffset and an information bit of the PBCH.

Embodiment 4.3-2-1: For example, the SSB of the corresponding cell may be associated with the CORESET#0.

For FR1, a value Kssb is greater than or equal to 0 and less than or equal to 23.

For FR2, a value of Kssb is greater than or equal to 0 and less than or equal to 11.

In a case where a value Kssb belongs to a first value set, the cell associated with the SSB is a first-type cell.

In a case where a value of Kssb belongs to a second value set, the cell associated with the SSB is a second-type cell.

The first value set may be determined based on signaling or a predefined manner. For example, the first value set corresponds to Kssb values that are even numbers, and the second value set corresponds to Kssb values that are odd numbers.

For example, the indication signaling may also be indication bit(s) corresponding to SFN (systemFrameNumber), subCarrierSpacingCommon, dmrs-TypeA-Position, cellBarred, intraFreqReselection, or others. In a case where a value of the indication bits belongs to a first value set, the cell associated with the SSB is a first-type cell; and in a case where a value of Kssb belongs to a second value set, the cell associated with the SSB is a second-type cell. In the embodiments of the disclosure this is not described in detail.

For a terminal that supports the network energy saving, after receiving the SSB and reading the corresponding Kssb, the terminal may determine, based on the signaling, whether the cell to which the terminal belongs is a first-type cell or a second-type cell, and determine the frequency-domain positions of the CRBs based on the Kssb.

For example, under the condition that the terminal determines that the cell is a second-type cell, if the terminal has already obtained the SIB1 information corresponding to the second-type cell, the terminal receives the SSB of the cell and may attempt to access the cell.

For example, under the condition that the terminal determines that the cell is a second-type cell, if the terminal has not yet obtained the SIB1 information corresponding to the second-type cell, the terminal continues to search for the SSBs of other cells until the terminal finds a first-type cell and obtains the corresponding SIB1 information.

For a terminal that does not support the network energy saving, after receiving the SSB and reading the corresponding Kssb, the terminal may determine the frequency-domain position of the CRBs based on Kssb.

Embodiment 4.3-2-2: The SSB of the second-type cell may be not associated with the CORESET#0.

For FR1, a value of Kssb is greater than or equal to 24.

For FR2, a value of Kssb is less than or equal to 11.

For example, the SSB of the first-type cell may be associated with CORESET#0.

For FR1, a value of Kssb is less than 24.

For FR2, a value of Kssb is less than or equal to 11.

In a case where a value of Kssb belongs to a first value set, the cell associated with the SSB is a first-type cell. In a case where a value of Kssb belongs to a second value set, the cell associated with the SSB is a second-type cell.

The first value set may be determined based on signaling or a predefined manner. For example, the second value set corresponds to Kssb = 30.

The first value set is Kssb values not equal to 30.

For example, for a terminal that supports the network energy saving, after receiving the SSB and reading the corresponding Kssb, the terminal may determine that the cell is a second-type cell based on the signaling, and determine the frequency-domain position of the CRBs based on the Kssb. The specific method is as follows.

The terminal determines the offset between the lowest subcarrier of SSB and the lowest subcarrier of N_{CRB} based on the Kssb-offset, where N_{CRB} is the lowest CRB that has a frequency-domain overlap with the CRB.

N_{CRB} is the common resource block (CRB) with the smallest frequency-domain index among the CRBs that overlap with the SSB.

Kssb-offset is the offset value of Kssb.

For FR1, Kssb-offset = Kssb - 8, or Kssb-offset = Kssb mod 24.

For FR2, Kssb-offset = Kssb - 4, or Kssb-offset = Kssb mod 12.

For example, during the cell search process, under the condition that the terminal determines that the cell is a second-type cell, if the terminal has already obtained the SIB1 information corresponding to the second-type cell, the terminal receives the SSB of the cell and may attempt to access the cell.

For example, under the condition that the terminal determines that the cell is a second-type cell, if the terminal has not yet obtained the SIB1 information corresponding to the second-type cell, the terminal continues to search for the SSBs of other cells until the terminal finds a first-type cell and obtains the corresponding SIB1 information.

For a legacy terminal that does not support the network energy saving, under the condition that the Kssb of the corresponding SSB satisfies above conditions, the terminal may determine that the SSB is not associated with the CORESET#0, and during the cell search, the terminal continues to search for other SSBs to obtain an SSB associated with the CORESET#0.

Embodiment 4.4: For example, the types of cells may be distinguished based on the indication signaling, which may be carried by the PBCH.

Embodiment 4.4-1: The indication signaling may be a reserved bit in the PBCH. For example, the reserved bit is the bit *a̅*_{*A̅*+6} under the condition that L̅ₘₐₓ = 10, or the bit *a̅*_{*A̅*+6} or the bit *a̅*_{*A̅*+7} under the condition that L̅ₘₐₓ is less than or equal to 8.

For a terminal that supports the network energy saving, after receiving the SSB and reading the corresponding reserved bit in the PBCH, the terminal may determine, based on the signaling, whether the cell to which the terminal belongs is a first-type cell or a second-type cell.

For a legacy terminal that does not support the network energy saving, after receiving the SSB and reading the corresponding PBCH, the legacy terminal ignores the indication of the reserved bit of the information field.

Embodiment 4.4-2: The indication signaling may be a different CRC in the PBCH. For example, a new CRC is introduced, and a base station that supports the network energy saving checks the PBCH based on the newly introduced CRC and sends it accordingly.

After a terminal that supports the network energy saving demodulates the corresponding PBCH based on the new CRC check and successfully receives the PBCH, the terminal determines that the cell is a second-type cell.

After a terminal that supports the network energy saving demodulates the corresponding PBCH based on the existing CRC check and successfully receives the PBCH, the terminal determines that the cell is a first-type cell. If a terminal that does not support the network energy saving demodulates the corresponding PBCH based on the existing CRC check, then the terminal cannot successfully demodulate the PBCH and continues to perform the cell search process.

For example, if the terminal determines that the cell is a second-type cell and has not obtained the corresponding SIB1, the terminal continues to search for other cells, for example, the SSB of the first-type cell, to obtain the SIB1 for the second-type cell. After obtaining the SIB 1, the terminal switches to the second-type cell based on the cell selection or the cell reselection.

For example, if the terminal determines that the cell is a second-type cell and has not obtained the corresponding SIB1, under the condition that the terminal has already obtained the WUS configuration of the cell corresponding to the SSB, the terminal sends a WUS to the second-type cell to request the corresponding SIB1 transmission.

For example, if the terminal determines that the cell is a second-type cell and successfully obtains the corresponding SIB1, the terminal may continue to receive other system information based on the current cell or initiate a RACH process.

The technical solutions of embodiments of the disclosure mainly meet the needs of determining different types of cells based on different cases, which is beneficial to achieving consistent understanding between the base station and the terminal and reducing the complexity of terminal operation.

In embodiments of the disclosure, some or all steps and optional implementations thereof may be arbitrarily combined with some or all steps of other embodiments, and may also be arbitrarily combined with optional implementations of other embodiments.

In embodiments of the disclosure, some or all steps and optional implementations thereof may be arbitrarily combined with some or all steps of other embodiments, and may also be arbitrarily combined with optional implementations of other embodiments.

Embodiments of the disclosure also provide apparatuses for implementing any of the above methods. As an example, an apparatus is provided, including units or modules for implementing the steps performed by the terminal in any of the above methods. As another example, another apparatus is provided, including units or modules for implementing the steps performed by the network device (e.g., access network device, or core network device, etc.) in any of the above methods.

It is understandable that the division of units or modules in the above apparatus is only a logical functional division, and in actual implementation, they may be integrated wholly or partially into one physical entity, or may be physically separated. In addition, the units or modules in the apparatus may be implemented in the form of a processor calling software. For example, the apparatus includes a processor connected to a memory. The memory stores instructions. The processor calls the instructions stored in the memory to implement any of the above methods or implement the functions of the units or modules of the above apparatus. The processor is, for example, a general-purpose processor, such as a central processing unit (CPU) or a microprocessor. The memory is within the apparatus or external to the apparatus. Or the units or modules in the apparatus may be implemented in the form of hardware circuits, and the functions of some or all units or modules may be implemented by designing the hardware circuit. The hardware circuit may be understood as one or more processors. As an example, in an implementation, the hardware circuit is an application-specific integrated circuit (ASIC), which realizes the functions of some or all units or modules by designing the logical relationship of components within the circuit. As another example, in another implementation, the hardware circuit may be implemented by a programmable logic device (PLD). Taking a field programmable gate array (FPGA) as an example, it may include a large number of logic gate circuits, and the connection relationship between the logic gate circuits is configured through a configuration file, to realize the functions of some or all units or modules above. All units or modules of the above apparatus may be implemented entirely by a processor calling software, or entirely by hardware circuits, or partially by a processor calling software and the remainder by hardware circuits.

In embodiments of the disclosure, the processor is a circuit with signal processing capabilities. In an implementation, the processor may be a circuit with instruction reading and running capabilities, such as a central processing unit (CPU), a microprocessor, a graphics processing unit (GPU) (which may be understood as a type of microprocessor), or a digital signal processor (DSP), etc. In another implementation, the processor may realize certain functions through the logical relationship of a hardware circuit, which is fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration file to configure the hardware circuit may be understood as the process of the processor loading instructions to realize the functions of some or all units or modules above. Furthermore, it may also be a hardware circuit designed for artificial intelligence, which may be understood as an ASIC, such as a neural network processing unit (NPU), a tensor processing unit (TPU), a deep learning processing unit (DPU), or others.

As illustrated in FIG. 6A, an embodiment of the disclosure provides a terminal. The terminal includes a processing module 5101.

The processing module 5101 configured to determine a type of a first cell, and determine, based on the type of the first cell, a manner of receiving a first transmission, in which the first transmission is a downlink transmission.

In some embodiments, the processing module may be used for the terminal to perform steps related to information processing in any downlink transmission method.

In some embodiments, the terminal may further include a sending module and/or a receiving module.

In some embodiments, the sending module and/or the receiving module may correspond to a network interface and/or a transceiver antenna of the terminal.

In some embodiments, the sending module may be used for the terminal to perform steps related to information sending in any downlink transmission method.

In some embodiments, the receiving module may be used for the terminal to perform steps related to information sending in any downlink transmission method.

In some embodiments, the first cell is a first-type cell or a second-type cell.

The first-type cell is a cell from which the first transmission is sent based on a semi-static configuration and/or a periodic configuration.

The second-type cell is a cell from which the first transmission is sent based on an on-demand mode, or the second-type cell is a cell from which the first transmission is not sent.

In some embodiments, the second-type cell being a cell from which the first transmission is sent based on an on-demand mode includes at least one of:
the second-type cell being a cell for determining whether to send the first transmission based on its own demand; or
the second-type cell being a cell from which the first transmission is sent based on a trigger of a second transmission from the terminal, in which second transmission is an uplink transmission sent by the terminal when the terminal has a demand to acquire the first transmission.

In some embodiments, the processing module is configured to perform at least one of:
determining the type of the first cell based on a predefined manner;
determining the type of the first cell based on configuration information of a second transmission, in which the second transmission is used to trigger sending of the first transmission;
determining the type of the first cell based on whether configuration information of a second transmission directed to the first cell is received, in which the second transmission being used to trigger the sending of the first transmission;
determining the type of the first cell based on a cell configuration of the first cell;
determining the type of the first cell based on an MIB of the first cell;
determining the type of the first cell based on PBCH information of the first cell;
determining the type of the first cell based on an MIB and PBCH information of the first cell;
determining the type of the first cell based on a check method of PBCH information of the first cell;
determining the type of the first cell based on a reception status on receiving the first transmission of the first cell;
determining the type of the first cell based on a reception status on receiving a scheduling command, in which the scheduling command is used to schedule the first transmission of the first cell;
determining the type of the first cell based on a reception status on whether the first transmission of the first cell is received from a second cell; or
determining the type of the first cell based on first information and/or second information, in which the first information is sent from the first cell or a second cell, and the second information is sent from the first cell or the second cell.

In some embodiments, the processing module is further configured to perform at least one of: determining that the first cell is the second-type cell from which the first transmission is sent based on a trigger, in which the configuration information of the second transmission for the first cell is received.

In some embodiments, the processing module is configured to perform at least one of: determining the type of the first cell based on whether the configuration information of the second transmission is used to trigger the first transmission of the first cell.

In some embodiments, the configuration information of the second transmission is carried in a cell configuration of the first cell; or
the configuration information of the second transmission is carried in a cell configuration of a third cell.

In some embodiments, the second transmission includes a WUS.

In some embodiments, the third cell is a primary cell of the terminal and the first cell is a secondary cell of the terminal; or the third cell is a secondary cell of the terminal and the first cell is a primary cell of the terminal.

In some embodiments, the processing module is configured to perform at least one of:
determining that the first cell is the first-type cell, where the cell configuration of the first cell includes a first indication field;
determining that the first cell is the second-type cell, where the cell configuration of the first cell does not include a first indication field; or
determining that the first cell is the first-type cell or the second-type cell based on an indication content of a second indication field included in the cell configuration of the first cell.

In some embodiments, the cell configuration includes: a secondary cell configuration (ScellConfig).

In some embodiments, the processing module is configured to perform at least one of:
determining the type of the first cell based on a value of a spare bit in the MIB of the first cell;
determining the type of the first cell based on a value of an ssb-SubcarrierOffset indication bit in the MIB of the first cell;
determining the type of the first cell based on a value of system frame number (SFN) indication bit(s) in the MIB of the first cell;
determining the type of the first cell based on a value of dmrs-TypeA-Position indication bit(s) in the MIB of the first cell;
determining the type of the first cell based on a value of cellBarred indication bit(s) in the MIB of the first cell;
determining the type of the first cell based on a value of subcarrierSpacingCommon indication bit(s) in the MIB of the first cell; or
determining the type of the first cell based on a value of intraFreqReselections indication bit(s) in the MIB of the first cell.

In some embodiments, the ssb-SubcarrierOffset indication bit in the MIB is a last bit of ssb-SubcarrierOffset indication bits in the MIB.

In some embodiments, the processing module is configured to perform at least one of: determining that the first cell is the first-type cell, where the value of the ssb-SubcarrierOffset indication bit in the MIB of the first cell is within a first set; or determining that the first cell is the second-type cell, where the value of the ssb-SubcarrierOffset indication bit in the MIB of the first cell is within a second set.

In some embodiments, the processing module is configured to determine the type of the first cell based on a reserved bit in the PBCH information.

In some embodiments, the reserved bit in the PBCH information includes:
the reserved bit being a first bit, where *L̅ₘₐₓ* indicated by the PBCH information is a first value; or
the reserved bit being a first bit and/or a third bit, where *L̅ₘₐₓ* indicated by the PBCH information is a second value When \( \overline{L}_{\max} \) indicated by the PBCH information is a second value, the reserved bit is a first bit and/or a third bit.

*L̅ₘₐₓ* equals a maximum number of candidate synchronization signal/physical broadcast channel (PBCH) blocks (SSBs) within a half-frame.

In some embodiments, the processing module is configured to determine the type of the first cell based on the value of subcarrier offset (Kssb) jointly indicated by the MIB and/or the PBCH.

In some embodiments, the processing module is configured to perform at least one of:
determining that the first cell is the first-type cell, where the value of Kssb jointly indicated by the MIB and the PBCH information is within a third set; or
determining that the first cell is the second-type cell, wherein the value of Kssb jointly indicated by the MIB and the PBCH information is within a fourth set.

In some embodiments, the processing module is configured to perform at least one of:
determining that the first cell is the first-type cell, where the PBCH information of the first cell is successfully checked using a first check algorithm; or
determining that the first cell is the second-type cell, where the PBCH information of the first cell is successfully checked using a second check algorithm.

In some embodiments, the processing module is configured to perform at least one of:
determining that the first cell is the second-type cell, where the terminal fails to receive the first transmission for M times at reception occasions of the first transmission, and M is a positive integer.

In some embodiments, the value of M is predefined or configured by a network signaling.

In some embodiments, the processing module is configured to perform at least one of:
determining that the first cell is the second-type cell, where the terminal fails to receive the scheduling command for N times at reception occasions of the scheduling command for the first transmission, and N is a positive integer; or
determining that the first cell is the second-type cell, where the scheduling command received by the terminal at reception occasions of the scheduling command for the first transmission fails to schedule the first transmission for X times, and X is a positive integer.

In some embodiments, the processing module is configured to perform at least one of:
determining that the first cell is the first-type cell, where the terminal does not receive the first transmission of the first cell from the second cell; or
determining that the first cell is the second-type cell, where the terminal receives the first transmission of the first cell from the second cell.

In some embodiments, the processing module is configured to perform at least one of:
determining to receive the first transmission based on a configuration of the first transmission, where the first cell is the first-type cell; or
determining to trigger the sending of the first transmission from the first cell, where the first cell is the second-type cell; or
determining to receive the first transmission based on an on-demand mode, where the first cell is the second-type cell.

In some embodiments, the processing module is configured to perform at least one of:
determining to receive the first transmission based on the configuration of the first transmission in a case where the terminal is camping on the first cell, where the first cell is the first-type cell; or
determining to receive the first transmission from the first cell based on the configuration of the first transmission after link recovery, where the first cell is the first-type cell.

In some embodiments, the processing module is configured to perform a cell handover or a cell reselection, wherein the first cell is the first-type cell.

In some embodiments, the processing module is configured to perform at least one of:
sending the second transmission to the first cell, where the second transmission is used to trigger the sending of the first transmission from the first cell; or
sending the second transmission to a fourth cell, where the second transmission is used to trigger the sending of the first transmission from the first cell.

In some embodiments, the first transmission comprises at least one of:
a system information block (SIB); or
a synchronization signal/physical broadcast channel (PBCH) block (SSB).

In some embodiments, the processing module is configured to determine that the first cell is the second-type cell, where the first information indicates that the first cell is the second-type cell and the second information indicates that a value of a subcarrier offset (Kssb) of the first cell satisfies a first condition.

In other embodiments, the processing module is configured to determine that a current case is an error case, where the first information indicates that the first cell is the second-type cell and the second information indicates that the value of Kssb of the first cell does not satisfy the first condition.

In some embodiments, the processing module is configured to determine that the first cell is the first-type cell, where the first information indicates that the first cell is not the second-type cell.

In some embodiments, the first information includes at least one of: configuration information of a WUS, where the configuration information of the WUS is used to configure a WUS, and the WUS is used to trigger the sending of the first transmission from the first cell; system information; an RRC signaling; MAC CE; or DCI.

In some embodiments, the second information includes at least one of: configuration information of a WUS; an RRC signaling; PBCH information; MAC CE; DCI; or MIB.

In some embodiments, the value of Kssb satisfying the first condition includes at least one of:
for FR1, the value of Kssb being greater than 23;
for FR2, the value of Kssb being greater than 11.

In some embodiments, the receiving module is configured to receive third information, where the third information is sent from the first cell or a second cell. The processing module is configured to determine a first parameter based on the third information; and determine, based on the first parameter, frequency-domain positions of CRBs of the second-type cell.

In some embodiments, the third information is carried in configuration information of the second transmission.

FIG. 6B illustrates a network device according to an embodiment of the disclosure. The network device includes a processing module 5201.

The processing module 5201 is configured to determine, based on a type of a first cell, a manner of sending, based on the first cell, a first transmission.

In some embodiments, the processing module may be configured to perform any steps related to information processing in the downlink transmission method performed by the network device.

In some embodiments, the network device may further include: a sending module and/or a receiving module.

In some embodiments, the sending module and/or the receiving module may correspond to a network interface and/or a transceiver antenna of the network device.

In some embodiments, the first cell is a first-type cell or a second-type cell.

The second-type cell is a cell for determining whether to transmit the first transmission based on its own demand.

The second-type cell is a cell that from which the first transmission is sent based on a trigger of a second transmission from the terminal, or the second-type cell is a cell from which the first transmission is not sent; where the second transmission is an uplink transmission sent by the terminal when the terminal has a demand to acquire the first transmission.

In some embodiments, the second-type cell being the cell from which the first transmission is sent based on an on-demand mode includes at least one of:
the second-type cell being a cell for determining whether to send the first transmission based on its own demand; or
the second-type cell being a cell from which the first transmission is sent based on the trigger of the second transmission from the terminal, where the second transmission is an uplink transmission sent by the terminal when the terminal has a demand to acquire the first transmission.

In some embodiments, the processing module is configured to perform at least one of:
determining, based on the type of the first cell, whether to send configuration information of a second transmission, where the second transmission is used to trigger the sending of the first transmission from the first cell;
determining, based on the type of the first cell, whether to send configuration information of a second transmission, where the second transmission is used to trigger the sending of the first transmission from the first cell; or determining, based on the type of the first cell, a cell configuration of the first cell;
determining, based on the type of the first cell, an MIB of the first cell;
determining, based on the type of the first cell, PBCH information of the first cell;
determining, based on the type of the first cell, an MIB and PBCH information of the first cell;
determining, based on the type of the first cell, a check method of PBCH information of the first cell;
determining, based on the type of the first cell, a scheduling command for the first transmission sent from the first cell and/or a scheduling content of the scheduling command; or
determining, based on the type of the first cell, first information and/or second information to be sent.

In some embodiments, the processing module is configured to perform at least one of:
determining that the configuration information of the second transmission is not sent from the first cell, where the first cell is the first-type cell;
determining that the configuration information of the second transmission is sent from the first cell, where the first cell is the second-type cell; or
determining that the configuration information of the second transmission corresponding to the first cell is sent from a third cell, where the first cell is the second-type cell.

In some embodiments, the configuration information of the second transmission is carried in a cell configuration of the first cell; or
the configuration information of the second transmission is carried in a cell configuration of the third cell.

In some embodiments, the second transmission includes a wake-up signal (WUS).

In some embodiments, the third cell is a primary cell of the terminal and the first cell is a secondary cell of the terminal; or the third cell is a secondary cell of the terminal and the first cell is a primary cell of the terminal.

In some embodiments, the first cell is the first-type cell, and the cell configuration of the first cell includes a first indication field; or
the first cell is the second-type cell, and the cell configuration of the first cell does not include the first indication field; or
an indication content of a second indication field included in the cell configuration of the first cell corresponds to the type of the first cell.

In some embodiments, the cell configuration includes: a secondary cell configuration (ScellConfig).

In some embodiments, the processing module is configured to perform at least one of:
determining a value of a spare bit in the MIB of the first cell based on the type of the first cell;
determining a value of an ssb-SubcarrierOffset indication bit in the MIB of the first cell based on the type of the first cell;
determining a value of system frame number (SFN) indication bit(s) in the MIB of the first cell based on the type of the first cell;
determining a value of dmrs-TypeA-Position indication bit(s) in the MIB of the first cell based on the type of the first cell;
determining a value of cellBarred indication bit(s) in the MIB of the first cell based on the type of the first cell;
determining a value of subcarrierSpacingCommon indication bit(s) in the MIB of the first cell based on the type of the first cell; or
determining a value of intraFreqReselections indication bit(s) in the MIB of the first cell based on the type of the first cell.

In some embodiments, the ssb-SubcarrierOffset indication bit in the MIB is a last bit of ssb-SubcarrierOffset indication bits in the MIB.

In some embodiments, the value of the ssb-SubcarrierOffset indication bit in the MIB of the first cell is within a first set, indicating that the first cell is the first-type cell; or
the value of the ssb-SubcarrierOffset indication bit in the MIB of the first cell is within a second set, indicating that the first cell is the second-type cell.

In some embodiments, the processing module is configured to determine a value of a reserved bit in the PBCH information based on the type of the first cell.

In some embodiments, the processing module is configured to determine a value of a subcarrier offset (Kssb) jointly indicated by the MIB and the PBCH based on the type of the first cell.

In some embodiments, the value of Kssb jointly indicated by the MIB and the PBCH is within a third set, indicating that the first cell is the first-type cell; or
the value of Kssb jointly indicated by the MIB and the PBCH is within a fourth set, indicating that the first cell is the second-type cell.

In some embodiments, the processing module is configured to perform at least one of:
determining that the PBCH information of the first cell uses a first check algorithm, where the first cell is the first-type cell; or
determining that the PBCH information of the first cell uses a second check algorithm, where the first cell is the second-type cell.

In some embodiments, determining the scheduling command for the first transmission sent from the first cell and/or the scheduling content of the scheduling command based on the type of the first cell includes at least one of:
not sending the scheduling command for N times at reception occasions of the scheduling command for the first transmission, where the first cell is the second-type cell, and N is a positive integer; or
not sending the scheduling command for scheduling the first transmission for X times at reception occasions of the scheduling command for the first transmission, where the first cell is the second-type cell, and X is a positive integer.

In some embodiments, the processing module is configured to perform at least one of:
determining to send the first transmission based on a configuration of the first transmission, where the first cell is the first-type cell; or
determining to send the first transmission based on a trigger, where the first cell is the second-type cell,.

In some embodiments, the processing module is configured to receive the second transmission sent by the terminal or receive the second transmission sent by a fourth cell; and transmit the first transmission to the terminal based on the second transmission.

In some embodiments, the first transmission includes at least one of:
a system information block (SIB); or
a synchronization signal/physical broadcast channel (PBCH) block (SSB).

In some embodiments, the reserved bit in the PBCH information includes:
the reserved bit being a first bit, where *L̅ₘₐₓ* indicated by the PBCH information is a first value; or
the reserved bit being a first bit and/or a third bit, where *L̅ₘₐₓ* indicated by the PBCH information is a second value;
*L̅ₘₐₓ* equals a maximum number of candidate synchronization signal/physical broadcast channel (PBCH) blocks (SSBs) within a half-frame.

In some embodiments, the sending module is configured to send third information to a terminal, where the third information is used by the terminal to determine a first parameter, and the first parameter is used by the terminal to determine frequency-domain positions of CRBs of the second-type cell from which the first transmission is sent in an on-demand mode.

In some embodiments, the third information is carried in configuration information of the second transmission.

Embodiments of the disclosure also provide a communication device. The communication device may include one or more processors. The one or more processors are configured to invoke instructions to cause the communication device to perform the downlink transmission method implementable in any of the foregoing embodiments.

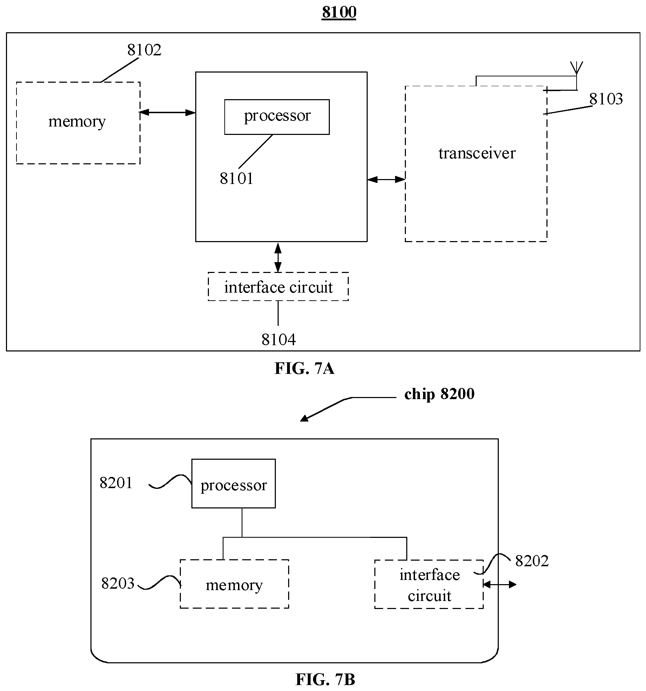

In some embodiments, as illustrated in FIG. 7A and/or FIG. 7B, the communication device 8100 further includes one or more memories 8102 for storing instructions. For example, all or part of the memory/memories 8102 may also be outside the communication device 8100.

The communication device may be the aforementioned terminal or network device. In some embodiments, the network device may be a master node and/or a secondary node.

In some embodiments, the communication device 8100 further includes one or more transceivers 8103. When the communication device 8100 includes one or more transceivers 8103, the communication steps such as sending and receiving in the above methods are performed by the transceiver(s) 8103, and other steps are performed by the processor(s) 8101.

In some embodiments, a transceiver may include a receiver and a transmitter. The receiver and transmitter may be separate or integrated. For example, terms such as "transceiver", "transceiver unit", "transceiver machine", and "transceiver circuit" may be interchanged. Terms such as "sender", "sending unit", "sender machine", and "sending circuit" may be interchanged. Terms such as "receiver", "receiving unit", "receiver machine", and "receiving circuit" may be interchanged.

For example, the communication device 8100 further includes one or more interface circuits 8104. The interface circuit(s) 8104 is/are connected to the memory/memories 8102. The interface circuit(s) 8104 may be used to receive signals from the memory/memories 8102 or other devices, and may be used to send signals to the memory/memories 8102 or other devices. For example, the interface circuit(s) 8104 may read instructions stored in the memory/memories 8102 and send the instructions to the processor(s) 8101.

In embodiments, the communication device 8100 may be a network device or a terminal, but the scope of the communication device 8100 according to disclosure is not limited thereto, and the structure of the communication device 8100 may not be limited by FIG. 7A. The communication device may be an independent device or part of a larger device. For example, the communication device may be: (1) an independent integrated circuit IC, or a chip, or a chip system or subsystem; (2) a set of one or more ICs, for example, the above IC set may also include a storage component for storing data and programs; (3) an ASIC, such as a Modem; (4) a module that may be embedded in other devices; (5) a receiver, a terminal device, an intelligent terminal device, a cellular phone, a wireless device, a handset, a mobile unit, a vehicle-mounted device, a network device, a cloud device, an artificial intelligence device; (6) others.

FIG. 7B is a schematic structural diagram illustrating a chip 8200 according to an embodiment of the disclosure. For the case where the communication device 8100 may be a chip or a chip system, reference may be made to the schematic structural diagram of the chip 8200 illustrated in FIG. 7B, but the disclosure is not limited thereto.

The chip 8200 includes one or more processors 8201. The processor(s) 8201 is/are used to invoke instructions to cause the chip 8200 to perform any of the above downlink transmission methods.

In some embodiments, the chip 8200 further includes one or more interface circuits 8202. The interface circuit(s) 8202 is/are connected to memory/memories 8203. The interface circuit(s) 8202 may be used to receive signals from the memory/memories 8203 or other devices, and may be used to send signals to the memory/memories 8203 or other devices. For example, the interface circuit(s) 8202 may read instructions stored in the memory/memories 8203 and send the instructions to the processor(s) 8201. For example, terms such as "interface circuit", "interface", "transceiver pin", and "transceiver" may be interchanged.

In some embodiments, the chip 8200 further includes one or more memories 8203 for storing instructions. For example, all or part of the memory/memories 8203 may be outside the chip 8200.

The disclosure also provides a storage medium. The storage medium has instructions stored thereon. When the instructions are executed on the communication device 8100, the communication device 8100 is caused to perform any of the above methods. For example, the storage medium is an electronic storage medium. For example, the storage medium is a computer-readable storage medium, and may also be a storage medium readable by other devices. For example, the storage medium may be a non-transitory storage medium, and may also be a transitory storage medium.

The disclosure also provides a program product. When the program product is executed by the communication device 8100, the communication device 8100 is caused to perform any of the above downlink transmission methods. For example, the program product is a computer program product.

The disclosure also provides a computer program. When the computer program runs on a computer, the computer is caused to perform any of the above downlink transmission methods.

Those skilled in the art will readily appreciate other embodiments of the disclosure after considering the specification and practicing the disclosure. This disclosure is intended to cover any variations, uses, or adaptations of embodiments of the disclosure that follow the general principles of embodiments of the disclosure and include common general knowledge or customary technical means in the art not disclosed in the disclosure. The specification and examples are to be regarded as illustrative only, with the true scope and spirit of embodiments of the disclosure being indicated by the following claims.

It should be understood that embodiments of the disclosure are not limited to the precise structures described above and shown in the accompanying drawings, and various modifications and changes may be made without departing from the scope thereof. The scope of embodiments of the disclosure is limited only by the appended claims.

## Claims

1. A downlink transmission method, performed by a terminal, the method comprising:
determining a type of a first cell; and
determining, based on the type of the first cell, a manner of receiving a first transmission; wherein the first transmission is a downlink transmission.

2. The method of claim 1, wherein the first cell is a first-type cell or a second-type cell,
the first-type cell is a cell from which the first transmission is sent based on a semi-static configuration and/or a periodic configuration; and
the second-type cell is a cell from which the first transmission is sent based on an on-demand mode, or the second-type cell is a cell from which the first transmission is not sent, or the second-type cell is a cell for which the first transmission is sent from another cell on behalf of the second-type cell.

3. The method of claim 2, wherein the second-type cell being the cell from which the first transmission is sent based on the on-demand mode comprises at least one of:
the second-type cell being a cell for determining whether to send the first transmission based on demand of the second-type cell;
the second-type cell being a cell from which the first transmission is sent based on a trigger of a second transmission from the terminal, wherein the second transmission is an uplink transmission sent by the terminal when the terminal has a demand to acquire the first transmission.

4. The method of claim 2 or 3, wherein determining the type of the first cell comprises at least one of:
determining the type of the first cell based on a predefined manner;
determining the type of the first cell based on configuration information of a second transmission, wherein the second transmission is used to trigger sending of the first transmission;
determining the type of the first cell based on whether configuration information of a second transmission is received, wherein the second transmission is used to trigger sending of the first transmission, and the second transmission is directed to the first cell;
determining the type of the first cell based on a cell configuration of the first cell;
determining the type of the first cell based on a master information block (MIB) of the first cell;
determining the type of the first cell based on physical broadcast channel (PBCH) information of the first cell;
determining the type of the first cell based on a master information block (MIB) and physical broadcast channel (PBCH) information of the first cell;
determining the type of the first cell based on a check method of physical broadcast channel (PBCH) information of the first cell;
determining the type of the first cell based on a reception status on receiving the first transmission of the first cell;
determining the type of the first cell based on a reception status on receiving a scheduling command, wherein the scheduling command is used to schedule the first transmission of the first cell;
determining the type of the first cell based on a reception status on whether the first transmission of the first cell is received from a second cell; or
determining the type of the first cell based on first information and/or second information, wherein the first information is sent from the first cell or a second cell, the second information is sent from the first cell or the second cell.

5. The method of claim 4, wherein determining the type of the first cell based on the configuration information of the second transmission comprises:
determining the type of the first cell based on whether the configuration information of the second transmission is used to trigger the first transmission of the first cell; and/or
wherein determining the type of the first cell based on whether the configuration information of the second transmission is received comprises:
determining that the first cell is the second-type cell from which the first transmission is sent based on an on-demand mode, wherein the configuration information of the second transmission is received.

6. The method of claim 5, wherein the configuration information of the second transmission is carried in the cell configuration of the first cell; or the configuration information of the second transmission is carried in a cell configuration of a third cell, wherein the third cell is a primary cell of the terminal and the first cell is a secondary cell of the terminal, or the third cell is a secondary cell of the terminal and the first cell is a primary cell of the terminal; and/or
wherein the second transmission comprises a wake-up signal (WUS).

7. The method of claim 4, wherein determining the type of the first cell based on the cell configuration of the first cell comprises at least one of:
determining that the first cell is the first-type cell based on a presence of a first indication field in the cell configuration, wherein the cell configuration of the first cell comprises the first indication field;
determining that the first cell is the second-type cell based on an absence of a first indication field in the cell configuration, wherein the cell configuration of the first cell does not include the first indication field; or
determining that the first cell is the first-type cell or the second-type cell based on an indication content of a second indication field comprised in the cell configuration of the first cell.

8. The method of claim 7, wherein the cell configuration comprises: a secondary cell configuration (ScellConfig).

9. The method of claim 4, wherein determining the type of the first cell based on the master information block (MIB) of the first cell comprises at least one of:
determining the type of the first cell based on a value of a spare bit in the MIB of the first cell;
determining the type of the first cell based on a value of a synchronization signal/physical broadcast channel (PBCH) block (SSB) - subcarrier offset (ssb-SubcarrierOffset) indication bit in the MIB of the first cell;
determining the type of the first cell based on a value of a system frame number (SFN) indication bit in the MIB of the first cell;
determining the type of the first cell based on a value of a demodulation reference signal - type A - position (DRMS-typeA-Position) indication bit in the MIB of the first cell;
determining the type of the first cell based on a value of a cell barred (cellBarred) indication bit in the MIB of the first cell;
determining the type of the first cell based on a value of a common subcarrier spacing (subcarrierSpacingCommon) indication bit in the MIB of the first cell; or
determining the type of the first cell based on a value of an intra-frequency reselection (intraFreqReselections) indication bit in the MIB of the first cell.

10. The method of claim 9, wherein the ssb-SubcarrierOffset indication bit in the MIB is a last bit of ssb-SubcarrierOffset indication bits in the MIB.

11. The method of claim 9, wherein determining the type of the first cell based on the value of the ssb-SubcarrierOffset indication bit in the MIB of the first cell comprises at least one of:
determining that the first cell is the first-type cell, wherein the value of the ssb-SubcarrierOffset indication bit in the MIB of the first cell is within a first set; or
determining that the first cell is the second-type cell, wherein the value of the ssb-SubcarrierOffset indication bit in the MIB of the first cell is within a second set.

12. The method of claim 4, wherein determining the type of the first cell based on the PBCH information of the first cell comprises:
determining the type of the first cell based on a reserved bit in the PBCH information.

13. The method of claim 12, wherein the reserved bit in the PBCH information comprises at least one of:
the reserved bit being a first bit, wherein *L̅ₘₐₓ* indicated by the PBCH information is a first value; or
the reserved bit being a first bit and/or a third bit, wherein *L̅ₘₐₓ* indicated by the PBCH information is a second value;
wherein *L̅ₘₐₓ* equals a maximum number of candidate synchronization signal/physical broadcast channel (PBCH) blocks (SSBs) within a half-frame.

14. The method of claim 4, wherein determining the type of the first cell based on the MIB and the PBCH information of the first cell comprises:
determining the type of the first cell based on a value of a subcarrier offset (Kssb) jointly indicated by the MIB and the PBCH information.

15. The method of claim 12, wherein determining that the first cell is the second-type cell based on a value of a subcarrier offset (Kssb) jointly indicated by the MIB and the PBCH information comprises at least one of:
determining that the first cell is the first-type cell, wherein the value of Kssb jointly indicated by the MIB and the PBCH information is within a third set; or
determining that the first cell is the second-type cell, wherein the value of Kssb jointly indicated by the MIB and the PBCH information is within a fourth set.

16. The method of claim 4, wherein determining the type of the first cell based on the check method of the PBCH information of the first cell comprises at least one of:
determining that the first cell is the first-type cell, wherein the PBCH information of the first cell is successfully checked using a first check algorithm; or
determining that the first cell is the second-type cell, wherein the PBCH information of the first cell is successfully checked using a second check algorithm.

17. The method of claim 4, wherein determining the type of the first cell based on the reception status on receiving the first transmission by the terminal in the first cell comprises:
determining that the first cell is the second-type cell, wherein the terminal does not receive the first transmission for M times at reception occasions of the first transmission, and M is a positive integer.

18. The method of claim 17, wherein a value of M is predefined or configured by a network signaling.

19. The method of claim 4, wherein determining the type of the first cell based on the reception status on receiving the scheduling command for the first transmission by the terminal in the first cell comprises at least one of:
determining that the first cell is the second-type cell, wherein the terminal does not receive the scheduling command for N times at reception occasions of the scheduling command for the first transmission, and N is a positive integer; or
determining that the first cell is the second-type cell, wherein the scheduling command received by the terminal at reception occasions of the scheduling command for the first transmission does not schedule the first transmission for X times, and X is a positive integer.

20. The method of claim 4, wherein determining the type of the first cell based on the reception status on whether the first transmission for the first cell is received from the second cell comprises:
determining that the first cell is the second-type cell, wherein the terminal receives the first transmission for the first cell from the second cell.

21. The method of claim 4, wherein determining the type of the first cell based on the first information and/or the second information comprises:
determining that the first cell is the second-type cell, wherein the first information indicates that the first cell is the second-type cell and the second information indicates that a value of a subcarrier offset (Kssb) of the first cell satisfies a first condition.

22. The method of claim 21, further comprising: determining that a current case is an error case, wherein the first information indicates that the first cell is the second-type cell and the second information indicates that the value of Kssb of the first cell does not satisfy the first condition.

23. The method of claim 21 or 22, wherein the first information comprises at least one of:
configuration information of a wake-up signal (WUS), wherein the configuration information of the WUS is used to configure a WUS and the WUS is used to trigger sending of the first transmission from the first cell; system information; a radio resource control (RRC) signaling; medium access control (MAC) control element (CE); or downlink control information (DCI); and/or
wherein the second information comprises at least one of: configuration information of a wake-up signal (WUS); a radio resource control (RRC) signaling; PBCH information; medium access control (MAC) control element (CE); downlink control information (DCI); or MIB.

24. The method of claim 22 or 23, wherein the value of Kssb satisfying the first condition comprises at least one of:
for frequency range 1 (FR1), the value of Kssb being greater than 23; or
for frequency range 2 (FR2), the value of Kssb being greater than 11.

25. The method of any one of claims 2 to 24, further comprising:
receiving third information, wherein the third information is sent from the first cell or from a second cell;
determining a first parameter based on the third information; and
determining, based on the first parameter, a frequency-domain position of a common resource block (CRB) of the second-type cell.

26. The method of claim 25, wherein the third information is carried in configuration information of a second transmission.

27. The method of any one of claims 2 to 25, wherein determining, based on the type of the first cell, the manner of receiving the first transmission based on the first cell comprises at least one of:
determining to receive the first transmission based on a configuration of the first transmission, wherein the first cell is the first-type cell;
determining to trigger sending of the first transmission from the first cell, wherein the first cell is the second-type cell; or
determining to receive the first transmission based on an on-demand mode, wherein the first cell is the second-type cell.

28. The method of claim 27, wherein the first cell is the first-type cell, and determining to receive the first transmission based on the configuration of the first transmission comprises at least one of:
determining to receive the first transmission based on the configuration of the first transmission in a case where the terminal is camping on the first cell, wherein the first cell is the first-type cell; or
determining to receive the first transmission from the first cell based on the configuration of the first transmission after a link recovery, wherein the first cell is the first-type cell.

29. The method of claim 27, wherein the first cell is the second-type cell, and determining to trigger sending of the first transmission from the first cell comprises at least one of:
sending a second transmission to the first cell, wherein the second transmission is used to trigger the sending of the first transmission from the first cell; or
sending a second transmission to a fourth cell, wherein the second transmission is used to trigger the sending of the first transmission from the first cell.

30. The method of any one of claims 1 to 29, wherein the first transmission comprises at least one of:
a system information block (SIB); or
a synchronization signal/physical broadcast channel (PBCH) block (SSB).

31. A downlink transmission method, performed by a network device in a first cell, the method comprising:
determining, based on a type of the first cell, a manner of sending a first transmission based on the first cell.

32. The method of claim 31, wherein the first cell is a first-type cell or a second-type cell,
the second-type cell is a cell for determining whether to send the first transmission based on demand of the second-type cell; and
the second-type cell is a cell from which the first transmission is sent based on a trigger of a second transmission from a terminal, or the second-type cell is a cell from which the first transmission is not sent, or the second-type cell is a cell for which the first transmission is sent from another cell on behalf of the second-type cell, wherein the second transmission is an uplink transmission sent by the terminal when the terminal has a demand to acquire the first transmission.

33. The method of claim 32, wherein the second-type cell being a cell from which the first transmission is sent based on an on-demand mode comprises at least one of:
the second-type cell being the cell for determining whether to send the first transmission based on the demand of the second-type cell; or
the second-type cell being the cell from which the first transmission is sent based on the trigger of the second transmission from the terminal, wherein the second transmission is the uplink transmission sent by the terminal when the terminal has the demand to acquire the first transmission.

34. The method of claim 32 or 33, further comprising at least one of:
determining, based on the type of the first cell, whether to send configuration information of the second transmission, wherein the second transmission is used to trigger sending of the first transmission from the first cell;
determining, based on the type of the first cell, whether to send configuration information of the second transmission, wherein the second transmission is used to trigger sending of the first transmission from the first cell;
determining, based on the type of the first cell, a cell configuration of the first cell;
determining, based on the type of the first cell, a master information block (MIB) of the first cell;
determining, based on the type of the first cell, physical broadcast channel (PBCH) information of the first cell;
determining, based on the type of the first cell, a master information block (MIB) and physical broadcast channel (PBCH) information of the first cell;
determining, based on the type of the first cell, a check method of physical broadcast channel (PBCH) information of the first cell;
determining, based on the type of the first cell, a scheduling command for the first transmission sent from the first cell and/or a scheduling content of the scheduling command; or
determining, based on the type of the first cell, first information and/or second information to be sent.

35. The method of claim 34, wherein determining, based on the type of the first cell, whether to send the configuration information of the second transmission comprises at least one of:
determining that the configuration information of the second transmission is not sent from the first cell, wherein the first cell is the first-type cell;
determining that the configuration information of the second transmission is sent from the first cell, wherein the first cell is the second-type cell; or
determining that the configuration information of the second transmission corresponding to the first cell is sent from a third cell, wherein the first cell is the second-type cell.

36. The method of claim 35, wherein the configuration information of the second transmission is carried in the cell configuration of the first cell; or the configuration information of the second transmission is carried in a cell configuration of a third cell, wherein the third cell is a primary cell of the terminal and the first cell is a secondary cell of the terminal; or the third cell is a secondary cell of the terminal and the first cell is a primary cell of the terminal; and/or
the second transmission comprises a wake-up signal (WUS).

37. The method of claim 34, wherein
the cell configuration of the first cell comprises a first indication field, wherein the first cell is the first-type cell; or
the cell configuration of the first cell does not comprise a first indication field, wherein the first cell is the second-type cell; or
an indication content of a second indication field comprised in the cell configuration of the first cell corresponds to the type of the first cell.

38. The method of claim 37, wherein the cell configuration comprises: a secondary cell configuration (ScellConfig).

39. The method of claim 34, wherein determining the master information block (MIB) of the first cell based on the type of the first cell comprises at least one of:
determining a value of a spare bit in the MIB of the first cell based on the type of the first cell;
determining a value of a synchronization signal/physical broadcast channel (PBCH) block (SSB) - subcarrier offset (ssb-SubcarrierOffset) indication bit in the MIB of the first cell based on the type of the first cell;
determining a value of a system frame number (SFN) indication bit in the MIB of the first cell based on the type of the first cell;
determining a value of a demodulation reference signal - type A - position (DRMS-typeA-Position) indication bit in the MIB of the first cell based on the type of the first cell;
determining a value of a cell barred (cellBarred) indication bit in the MIB of the first cell based on the type of the first cell;
determining a value of a common subcarrier spacing (subcarrierSpacingCommon) indication bit in the MIB of the first cell based on the type of the first cell; or
determining a value of an intra-frequency reselection (intraFreqReselections) indication bit in the MIB of the first cell based on the type of the first cell.

40. The method of claim 39, wherein the ssb-SubcarrierOffset indication bit in the MIB is a last bit of ssb-SubcarrierOffset indication bits in the MIB.

41. The method of claim 40, wherein
the value of the ssb-SubcarrierOffset indication bit in the MIB of the first cell is within a first set, indicating that the first cell is the first-type cell; or
the value of the ssb-SubcarrierOffset indication bit in the MIB of the first cell is within a second set, indicating that the first cell is the second-type cell.

42. The method of claim 34, wherein determining, based on the type of the first cell, the physical broadcast channel (PBCH) information of the first cell comprises:
determining a value of a reserved bit in the PBCH information based on the type of the first cell.

43. The method of claim 34, wherein determining, based on the type of the first cell, the master information block (MIB) and the physical broadcast channel (PBCH) information of the first cell comprises:
determining a value of a subcarrier offset (Kssb) jointly indicated by the MIB and the PBCH information based on the type of the first cell.

44. The method of claim 33, wherein
a value of Kssb jointly indicated by the MIB and the PBCH information is within a third set, indicating that the first cell is the first-type cell; or
the value of Kssb jointly indicated by the MIB and the PBCH information is within a fourth set, indicating that the first cell is the second-type cell.

45. The method of claim 34, wherein determining, based on the type of the first cell, the check method of the physical broadcast channel (PBCH) information of the first cell comprises at least one of:
determining that the PBCH information of the first cell uses a first check algorithm, wherein the first cell is the first-type cell; or
determining that the PBCH information of the first cell uses a second check algorithm, wherein the first cell is the first-type cell.

46. The method of claim 34, wherein determining, based on the type of the first cell, the scheduling command for the first transmission sent from the first cell and/or the scheduling content of the scheduling command comprises at least one of:
not sending the scheduling command for N times at reception occasions of the scheduling command for the first transmission, wherein the first cell is the second-type cell, and N is a positive integer; or
not sending the scheduling command that schedules the first transmission for X times at reception occasions of the scheduling command for the first transmission, wherein the first cell is the second-type cell, and X is a positive integer.

47. The method of any one of claims 34 to 46, wherein determining, based on the type of the first cell, the manner of sending the first transmission from the first cell comprises at least one of:
determining to send the first transmission based on a configuration of the first transmission, wherein the first cell is the first-type cell; or
determining to send the first transmission based on a trigger, wherein the first cell is the second-type cell.

48. The method of claim 47, wherein the first cell is the second-type cell, and determining to send the first transmission based on the trigger comprises:
the second transmission sent to the terminal or receiving the second transmission sent from a fourth cell; and
sending the first transmission to the terminal based on the second transmission.

49. The method of any one of claims 33 to 48, wherein the first transmission comprises at least one of:
a system information block (SIB); or
a synchronization signal/physical broadcast channel (PBCH) block (SSB).

50. The method of claim 34, wherein a reserved bit in the PBCH information comprises:
the reserved bit being a first bit, wherein *L̅ₘₐₓ* indicated by the PBCH information is a first value; or
the reserved bit being a first bit and/or a third bit, wherein *L̅ₘₐₓ* indicated by the PBCH information is a second value;
wherein *L̅ₘₐₓ* equals a maximum number of candidate synchronization signal/physical broadcast channel (PBCH) blocks (SSBs) within a half-frame.

51. The method of any one of claims 31 to 34, further comprising:
sending third information to a terminal, wherein the third information is used by the terminal to determine a first parameter, and the first parameter is used by the terminal to determine a frequency-domain position of a common resource block (CRB) of the second-type cell.

52. The method of claim 51, wherein the third information is carried in configuration information of the second transmission.

53. A terminal, comprising:
a processing module, configured to determine a type of a first cell, and determine, based on the type of the first cell, a manner of receiving a first transmission based on the first cell, wherein the first transmission is a downlink transmission.

54. A network device, comprising:
a processing module, configured to determine, based on a type of a first cell, a manner of sending a first transmission based on the first cell.

55. A communication device, comprising:
one or more processors;
wherein the one or more processors are configured to invoke instructions to cause the communication device to perform the method of any one of claims 1 to 30 and/or claims 31 to 52.

56. A storage medium, having instructions stored thereon, wherein when the instructions are executed on a communication device, the communication device is caused to perform the method of any one of claims 1 to 30 and/or claims 31 to 52.
